(19) Europäisches Patentamt
European Patent Office
Office européen des brevets

(11) EP 4 723 784 A1

(12) EUROPEAN PATENT APPLICATION
published in accordance with Art. 153(4) EPC

(43) Date of publication:
08.04.2026 Bulletin 2026/15

(21) Application number: 23938895.2

(22) Date of filing: 31.05.2023

(51) International Patent Classification (IPC):
H04W 72/52 (2023.01)

(52) Cooperative Patent Classification (CPC):
H04W 72/52

(86) International application number:
PCT/CN2023/097605

(87) International publication number:
WO 2024/243904 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• LU, Liuming
Dongguan, Guangdong 523860 (CN)
• XU, Yanchao
Dongguan, Guangdong 523860 (CN)
• LUO, Chaoming
Dongguan, Guangdong 523860 (CN)

(74) Representative: Mewburn Ellis LLP
Aurora Building
Counterslip
Bristol BS1 6BX (GB)

(54) WIRELESS COMMUNICATION METHOD AND DEVICE

(57) Embodiments of the present application provide a wireless communication method and a device. An STA can perform a subsequent transmission of a delay-sensitive service flow on the basis of acquired channel utilization information, so as to optimize the transmission performance of the R-TWT-based delay-sensitive service flow. The wireless communication method comprises: an STA receives service period load information of a delay-sensitive service, wherein the service period load information of the delay-sensitive service comprises at least channel utilization information in an R-TWT service period corresponding to all the R-TWT schedulings established in a first BSS, or the service period load information of the delay-sensitive service comprises at least channel utilization information in an R-TWT service period corresponding to M R-TWT schedulings established in the first BSS, the number of all the R-TWT schedulings established in the first BSS is n, both m and n are positive integers, and m<n.

200

| STA | | AP |

S210, an AP transmits service period load information of a delay-sensitive service; where the service period load information of the delay-sensitive service includes at least channel utilization information during R-TWT service periods corresponding to all R-TWT schedules established in a first BSS, or the service period load information of the delay-sensitive service includes at least channel utilization information during R-TWT service periods corresponding to m R-TWT schedules established in a first BSS; where a number of all R-TWT schedules established in the first BSS is n, m and n are both positive integers, and m<n

S220, an STA receives the service period load information of the delay-sensitive service

FIG. 4

**Description**

**TECHNICAL FIELD**

Embodiments of the present disclosure relate to the field of communication, and in particular, to a wireless communication method and a device.

**BACKGROUND**

In wireless local area networks (WLANs), in order to improve transmission reliability of a delay-sensitive service (also referred to as a low-delay service), restricted target wake time (R-TWT) is introduced, and the R-TWT operation provides a mechanism for prioritizing a transmission of a delay-sensitive service traffic by using a pre-scheduled service period. However, at a present stage, the performance of the transmission of the delay-sensitive service traffic based on the R-TWT needs to be further improved.

**SUMMARY**

The embodiments of the present disclosure provides a wireless communication method and a device, where an STA may acquire channel utilization information during R-TWT service periods corresponding to all R-TWT schedules established in a first BSS through the service period load information of the delay-sensitive service, or the STA may acquire channel utilization information during R-TWT service periods corresponding to m R-TWT schedules established in the first BSS through the service period load information of the delay-sensitive service, so that the STA may perform a subsequent transmission of a delay-sensitive service traffic based on the acquired channel utilization information to optimize the performance of the transmission of the delay-sensitive service traffic based on the R-TWT.

In a first aspect, a wireless communication method is provided, and the method includes:

receiving, by an STA, service period load information of a delay-sensitive service; where the service period load information of the delay-sensitive service includes at least channel utilization information during R-TWT service periods corresponding to all R-TWT schedules established in a first BSS, or the service period load information of the delay-sensitive service includes at least channel utilization information during R-TWT service periods corresponding to m R-TWT schedules established in a first BSS;
where a number of all R-TWT schedules established in the first BSS is n, m and n are both positive integers, and m<n.

In a second aspect, a wireless communication method is provided, and the method includes:

transmitting, by an AP, service period load information of a delay-sensitive service; where the service period load information of the delay-sensitive service includes at least channel utilization information during R-TWT service periods corresponding to all R-TWT schedules established in a first BSS, or the service period load information of the delay-sensitive service includes at least channel utilization information during R-TWT service periods corresponding to m R-TWT schedules established in a first BSS;
where a number of all R-TWT schedules established in the first BSS is n, m and n are both positive integers, and m<n.

In a third aspect, an STA is provided, and configured to perform the method in the above first aspect.
Specifically, the STA includes a functional module configured to perform the method in the above first aspect.
In a fourth aspect, an AP is provided, and configured to perform the method in the above second aspect.
Specifically, the AP includes a functional module configured to perform the method in the above second aspect.
In a fifth aspect, an STA is provided, and includes a processor and a memory; the memory is configured to store a computer program, and the processor is configured to call and run the computer program stored in the memory, to enable the STA to perform the method in the above first aspect.
In a sixth aspect, an AP is provided, and includes a processor and a memory; the memory is configured to store a computer program, and the processor is configured to call and run the computer program stored in the memory, to enable the AP to perform the method in the above second aspect.
In a seventh aspect, an apparatus is provided, and configured to implement the method in any one of the above first aspect to second aspect.
Specifically, the apparatus includes: a processor, configured to call and run a computer program from a memory, to enable a device equipped with the apparatus to perform the method in any one of the above first aspect to second aspect.
In an eighth aspect, a computer-readable storage medium is provided, and configured to store a computer program, and the computer program enables a computer to perform the method in any one of the above first aspect to second aspect.

In a ninth aspect, a computer program product is provided, and includes computer program instructions, and the computer program instructions enable a computer to perform the method in any one of the above first aspect to second aspect.

In a tenth aspect, a computer program is provided, and the computer program, when executed on a computer, enables the computer to perform the method in any one of the above first aspect to second aspect.

Through the above technical solutions, the STA may acquire the channel utilization information during R-TWT service periods corresponding to all R-TWT schedules established in the first BSS, through the service period load information of the delay-sensitive service, or the STA may acquire the channel utilization information during R-TWT service periods corresponding to m R-TWT schedules established in the first BSS, through the service period load information of the delay-sensitive service, so that STA may perform a subsequent transmission of a delay-sensitive service traffic based on the acquired channel utilization information, to optimize the performance of the transmission of the delay-sensitive service traffic based on the R-TWT.

## BRIEF DESCRIPTION OF THE DRAWINGS

FIG. 1 is a schematic diagram of a communication system architecture applied in the embodiments of the present disclosure.

FIG. 2 is a schematic diagram of a BSS load element provided in the present disclosure.

FIG. 3 is a schematic diagram of an HE BSS load element provided in the present disclosure.

FIG. 4 is a schematic interactive flowchart of a wireless communication method provided according to the embodiments of the present disclosure.

FIG. 5 is a schematic diagram of a BSS R-TWT service period load element provided according to the embodiments of the present disclosure.

FIG. 6 is a schematic diagram of an R-TWT service period load field provided according to the embodiments of the present disclosure.

FIG. 7 is a schematic diagram of another R-TWT service period load field provided according to the embodiments of the present disclosure.

FIG. 8 is a schematic diagram of yet another R-TWT service period load field provided according to the embodiments of the present disclosure.

FIG. 9 is a schematic diagram of an R-TWT service period load element provided according to the embodiments of the present disclosure.

FIG. 10 is a schematic diagram of an R-TWT service period load control field provided according to the embodiments of the present disclosure.

FIG. 11 is a schematic diagram of an R-TWT service period load list field provided according to the embodiments of the present disclosure.

FIG. 12 is a schematic diagram of an R-TWT element provided according to the embodiments of the present disclosure.

FIG. 13 is a schematic diagram of a broadcast R-TWT information field provided according to the embodiments of the present disclosure.

FIG. 14 is a schematic block diagram of an STA provided according to the embodiments of the present disclosure.

FIG. 15 is a schematic block diagram of an AP provided according to the embodiments of the present disclosure.

FIG. 16 is a schematic block diagram of a communication device provided according to the embodiments of the present disclosure.

FIG. 17 is a schematic block diagram of an apparatus provided according to the embodiments of the present disclosure.

FIG. 18 is a schematic block diagram of a communication system provided according to the embodiments of the present disclosure.

## DETAILED DESCRIPTION

The technical solutions in the embodiments of the present disclosure will be described below in conjunction with the drawings in the embodiments of the present disclosure, and obviously, the described embodiments are merely some embodiments but not all embodiments of the present disclosure. With respect to the embodiments of the present disclosure, all other embodiments obtained by those ordinary skilled in the art without paying creative efforts belong to the protection scope of the present disclosure.

The technical solutions of the embodiments of the present disclosure may be applied to various communication systems, for example: wireless local area networks (WLAN), wireless fidelity (WiFi), or other communication systems, etc.

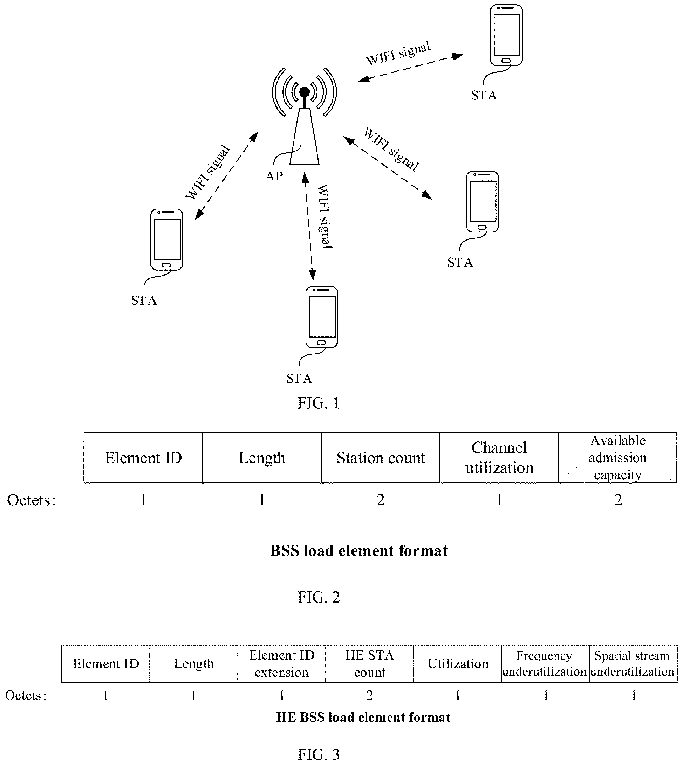

Referring to FIG. 1, it shows a schematic diagram of a wireless communication system provided in an embodiment of the present disclosure. As shown in FIG. 1, the wireless communication system may include: an access point (AP) and stations (STAs).

In some scenarios, the AP may be also referred to as an AP STA, that is, in a sense, the AP is also an STA. In some scenarios, the STA may be also referred to as a non-AP STA.

In some embodiments, the STA may include an AP STA and a non-AP STA. The communication in the communication system may be a communication between an AP and a non-AP STA, a communication between a non-AP STA and a non-AP STA, or a communication between an STA and a peer STA. The peer STA may refer to a device that communicates with the STA in a peer-to-peer manner. For example, the peer STA may be an AP or a non-AP STA.

The AP is equivalent to a bridge for connecting a wired network and a wireless network, and has a main function of connecting various wireless network clients together and then connecting the wireless network to Ethernet. An AP device may be a terminal device (e.g., a mobile phone) or a network device (e.g., a router) that has a wireless fidelity (Wireless-Fidelity, Wi-Fi) chip.

It should be understood that a role of the STA in the communication system is not absolute, for example, in some scenarios, a mobile phone is a non-AP STA in a case where the mobile phone is connected to a router, and the mobile phone plays a role of an AP in a case where the mobile phone serves as a hotspot for other mobile phones.

The AP and the non-AP STA may be devices applied in the Internet of Vehicles, Internet of Things (IoT) nodes, sensors or the like in the IoT, smart cameras, smart remote controls, smart water and electricity meters or the like in smart homes, and sensors in smart cities, etc.

In some embodiments, the non-AP STA may support the 802.11be standard. The non-AP STA may also support various current and future 802.11 families' wireless local area network standards, such as 802.11ax, 802.11ac, 802.11n, 802.11g, 802.11b and 802.11a, etc.

In some embodiments, the AP may be a device supporting the 802.11be standard. The AP may also be a device that supports various current and future 802.11 families' WLAN standards, such as 802.11ax, 802.11ac, 802.11n, 802.11g, 802.11b and 802.11a, etc.

In the embodiments of the present disclosure, the STA may be a mobile phone, a tablet computer (Pad), a computer, a virtual reality (Virtual Reality, VR) device, an augmented reality (Augmented Reality, AR) device, a wireless device in industrial control, a set-top box, a wireless device in self-driving, a vehicle-mounted communication device, a wireless device in remote medical, a wireless device in smart grid, a wireless device in transportation safety, a wireless device in a smart city, or a wireless device in a smart home, a wireless communication chip, an application specific integrated circuit (Application Specific Integrated Circuit, ASIC), a system on chip (System on Chip, SOC), etc., that supports WLAN/WIFI technologies.

Frequency bands that can be supported by the WLAN technology may include but be not limited to: low frequency bands (2.4 GHz, 5 GHz, 6 GHz) and high frequency bands (45 GHz, 60 GHz).

There are one or more links between the station and the access point. In some embodiments, the station and the access point support multi-band communications. For example, the communication is performed simultaneously on 2.4 GHz, 5 GHz, 6 GHz, 45 GHz, and 60 GHz frequency bands, or the communication is performed simultaneously on different channels of a same frequency band (or different frequency bands), which improves the communication throughput and/or reliability between the devices. This device is usually referred to as a multi-band device, or a multi-link device (Multi-Link Device, MLD), and is sometimes also referred to as a multi-link entity or a multi-band entity. A multi-link device may be an access point device or a station device. If the multi-link device is an access point device, the multi-link device includes one or more APs; and if the multi-link device is a station device, the multi-link device includes one or more non-AP STAs.

A multi-link device including one or more APs may be referred to as an AP MLD, and a multi-link device including one or more non-AP STAs may be referred to as a non-AP MLD.

In the embodiments of the present disclosure, an AP may include multiple APs, a Non-AP may include multiple STAs, multiple links may be formed between the APs in the AP and the STAs in the Non-AP, and a data communication may be performed between an AP in the AP and a corresponding STA in the Non-AP via a corresponding link.

The AP is a device deployed in the wireless local area network to provide a wireless communication function for STAs. A station may include: a user equipment (UE), an access terminal, a user unit, a user station, a mobile station, a mobile platform, a remote station, a remote terminal, a mobile device, a wireless communication device, a user agent or a user apparatus. In some embodiements, the station may also be a cellular phone, a cordless phone, a measurement initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device, or other processing device, a vehicle-mounted device, or a wearable device, that is connected to a wireless modem, which is not limited in the embodiments of the present disclosure.

In some embodiments, both the station and the access point support the IEEE 802.11 standard.

It should be understood that the terms "system" and "network" here are often used interchangeably herein. The term "and/or" herein is merely a description for an association relationship of associated objects, indicating that three relationships may exist, and for example, A and/or B may mean three cases where: A exists alone, both A and B exist, and B exists alone. In addition, the character "/" herein generally indicates that the associated objects before and after "/" are in an "or" relationship.

It should be understood that the "indication" and its variations mentioned in the embodiments of the present disclosure may be a direct indication, an indirect indication, or may represent an associated relationship. For example, A indicates B, which may mean that A directly indicates B, for example, B may be acquired through A; it may also mean that A indirectly indicates B, for example, A indicates C, and B may be acquired through C; it may also mean that there is an association relationship between A and B.

The terms used in the implementation section of the present disclosure are only used to explain the specific embodiments of the present disclosure, and are not intended to limit the present disclosure. The terms "first", "second", "third", "fourth" or the like in the specification, claims and drawings of the present disclosure are used to distinguish different objects, rather than to describe a specific order. In addition, the terms "include/include", "have", and any variations thereof, are intended to cover a non-exclusive inclusion.

It should be understood that the "at least one or at least one of" mentioned in the embodiments of the present disclosure may mean "one or more", and the "positive integer" mentioned in the embodiments of the present disclosure may mean "1, 2, 3, ... and other values", and the "non-negative integer" mentioned in the embodiments of the present disclosure may mean "0, 1, 2, 3, ... and other values", and the "integer" mentioned in the embodiments of the present disclosure may mean "..., -3, -2, -1, 0, 1, 2, 3, ... and other values", which may be replaced with any possible value based on the requirements of the embodiments.

It should be understood that the figures and/or tables shown in the embodiments of the present disclosure are only examples, and specifically, in some cases, some of the information contained in the figures and/or tables shown in the embodiments of the present disclosure may independently constitute an embodiment in some embodiments, and for example, each row or each column in a table may independently constitute an embodiment in some embodiment, which is not limited in the present disclosure.

In the description of the embodiments of the present disclosure, the term "corresponding/correspondence" and its variations may indicate a direct corresponding relationship or indirect corresponding relationship between two items, or an association relationship between two items, or a relationship between indicating and being indicated, between configuring and being configured, or the like.

In the embodiments of the present disclosure, "pre-definition" or "pre-configuration" or its variations may be implemented by pre-storing corresponding codes, tables or other methods that may be used to indicate related information in a device (e.g., including the STA and network device), and the present disclosure does not limit its specific implementation. For example, the pre-definition may refer to being defined in a protocol.

In the embodiments of the present disclosure, the "protocol" may refer to a standard protocol in the communication field, for example, it may include a WiFi protocol and related protocols applied in future WiFi communication systems, which is not limited in the present disclosure.

In order to facilitate better understanding of the embodiments of the present disclosure, R-TWT related to the present disclosure is explained.

Target wake time (TWT) scheduled wakeup mechanism was first introduced in the IEEE 802.11ah "Wi-Fi HaLow" standard, and it is used to support power saving operations in a large-scale Internet of Things environment. In IEEE 802.11ax, the TWT mechanism was improved to support trigger-based uplink transmissions on the basis of IEEE 802.11ah, thereby extending the range of TWT operations.

In the TWT, a schedule is established between an STA and an AP (the schedule is negotiated by the STA and the AP), and the schedule is composed of TWT time periods. When a time period negotiated by the STA and the AP arrives, the STA wakes up and waits for a trigger frame transmitted by the AP, and then performs a data exchange. When this transmission is completed, the STA returns to a sleep state. Each STA may negotiate independently with the AP, and each STA has a separate TWT time period.

The TWT allows the AP to manage behaviors of a basic service set (BSS) to mitigate contention between stations and reduce awake time of a station in a power consumption management mode, which is implemented by stations operating in non-overlapped time domain and/or frequency domain and concentrating frame exchanges in predefined service periods. Therefore, to ensure application effect of the TWT, the AP generally requires that all associated stations within the BSS can join the TWT, to enable the AP to perform scheduling; according to the specification of the TWT protocol of IEEE 802.11ax, a high-efficiency (HE) AP (specifically, IEEE 802.11ax) will request all associated stations that claim to support the TWT to participate in the TWT, and the non-AP station (non-AP STA), after receiving the AP's indication to join the TWT, should perform individually-specified TWT protocol negotiation or join broadcast TWT. Moreover, a service period (SP) of the TWT includes a trigger-enabled SP and a non-trigger-enabled SP, and the TWT scheduling AP performs scheduling by transmitting a trigger frame in the trigger-enabled SP. Meanwhile, the IEEE 802.11ax specifies that a TWT scheduled station cannot transmit a frame to the TWT scheduling AP outside a broadcast TWT SP, and in trigger-enabled broadcast TWT, the TWT scheduled station cannot transmit a frame that is not carried in an HE trigger-based physical layer protocol data unit (PPDU) (HE TB PPDU), to the TWT scheduling AP.

The currently-defined r-TWT is based on the broadcast TWT. In a broadcast TWT operation, the TWT scheduling AP carries a broadcast TWT element in a broadcast beacon frame to indicate a broadcast TWT service period (broadcast TWT SP). Here, in the trigger-enabled service period, after competing for a channel access opportunity, the AP transmits a trigger frame or a downlink buffer unit (BU) to a TWT scheduled station (TWT scheduled STA), for example, after STA 1 and STA 2 complete the frame exchange with the AP within the TWT SP, the STA 1 and the STA 2 enter a doze state outside the TWT SP.

IEEE 802.11be proposes a restricted TWT operation to allow the AP to use the enhanced medium access protection and resource reservation mechanism to provide more predictable, lower worst-case delay and jitter, and higher reliability for a transmission of a low-delay service. At present, two channel access rules are added mainly for the restricted TWT in terms of channel access: the extremely high throughput (EHT) non-AP station (non-AP STA), as an owner of a transmission opportunity (TXOP), should ensure that its TXOP ends before the start of any restricted TWT service period, in a case where the TXOP is acquired outside the restricted TWT service period; the EHT AP will schedule a quiet interval overlapped with the restricted TWT service period to shield the operation of the pre-EHT STA that supports the quiet element within the TWT SP, but the shielding operation within the quiet time interval is invalid for the Non-AP EHT STA.

In order to facilitate better understanding of the embodiments of the present disclosure, a BSS load element related to the present disclosure is explained.

The BSS load element contains information about a current number of STAs and a traffic level in the BSS. The element information format is shown in FIG. 2 (BSS load unit format). The STA may use the element for a supplier-specific AP selection algorithm when performing a BSS transition.

Here, a station count field indicates a total number of STAs currently associated with the BSS.

A channel utilization field is defined as a time proportion that the medium is busy, with a linear scaling of 255 representing 100%, sensed by the AP, such as a physical carrier sensing (CS) mechanism or a virtual carrier sensing (CS) mechanism. In a case where the BSS uses a plurality of channels, a channel utilization field value is calculated only for a primary channel. This proportion is calculated by using the following formula:

$$Channel\ Utilization = \left[\frac{channel\ busy\ time}{dot11ChannelUtilizationBeaconIntervals \times dot11BeaconPeriod \times 1024} \times 255\right]$$

where the channel busy time is defined as a number of microseconds that the CS mechanism indicates the channel busy indication defined in the CS mechanism, $dot11ChannelUtilizationBeaconsIntervals$ represents a number of consecutive beacon intervals used to measure the channel busy time. $dot11BeaconPeriod$ is defined as a period of time used by the station to schedule the beacon transmission, in units of TU (Time Unit).

A available admission capacity field contains an unsigned integer, and this integer specifies an amount of remaining medium time available through an explicit admission control, in units of 32 us/s. The field helps the BSS transition that the STA selects an AP which may accept future admission control requests, but it does not represent a guarantee that a hybrid coordinator (HC) accepts these requests.

In order to facilitate better understanding of the embodiments of the present application, an HE BSS load element related to the present disclosure is explained.

The HE BSS load element reported by the AP contains information about utilization, frequency underutilization, and spatial stream underutilization. An element format of the HE BSS load element (IEEE 802.11ax) is shown in FIG. 3. The STA receiving the HE BSS load element may use information that the HE BSS load element conveys in an implementation-specific AP selection algorithm.

Here, an HE STA count field indicates a total number of HE STAs currently associated with the BSS, and the STAs declare that they are HE STAs by transmitting their HE capability elements.

An utilization field is defined as a time proportion that the medium is busy sensed by the AP, due to transmissions between the AP and HE STAs; the medium busyness is indicated by the physical carrier sense (CS) mechanism, and the time proportion is represented by a linear ratio of 255 (255 represents 100%). In a case where the BSS uses a plurality of channels, the utilization field value is calculated only for the primary channel. The field value is calculated by using the following formula:

$$Utilization = \left[\frac{T_{busy}}{dot11ChannelUtilizationBeaconInterval \times dot11BeaconPeriod \times 1024} \times 255\right]$$

where dot11ChannelUtilizationBeaconsIntervals indicates a number of consecutive beacon intervals used to measure the channel busy time. dot11BeaconPeriod is defined as a period of time used by the station to schedule the beacon transmission, in units of TU. $T_{busy}$ is a number of microseconds that the clear channel assessment (CCA) indicates that the channel is busy due to transmissions between the AP and HE STAs during the measurement duration. The resolution of the CCA busy measurement is in units of microseconds.

To facilitate understanding of the technical solutions of the embodiments of the present disclosure, problems solved by the present disclosure are explained below.

The goal of R-TWT (Restricted TWT) is to provide a protected and reliable service period for a transmission of a low-delay service, and the current operation rule of r-TWT do not specify that stations outside the TWT SP should be in a doze state or cannot transmit a frame to the AP, and also do not specify that non-scheduled STAs must be in the doze state during the TWT SP. Meanwhile, the protection for the restricted TWT service period is not enough, and the following problems are not solved: the protection method for the quiet interval overlapped with the SP is not applied to some EHT STAs, how to restrict the channel access of an R-TWT non-scheduled station and a non-R-TWT station within the SP; how to ensure that an R-TWT scheduled station only transmit an R-TWT low-delay service traffic; and for a non-EHT STA that does not support the quiet element, how to avoid this STA from competing for a channel during the SP to acquire a transmission opportunity.

Therefore, although the restricted TWT operation provides the mechanism for prioritizing the transmission of the delay-sensitive service traffic by using a pre-scheduled service period, the application effect of the restricted TWT operation for enhancing the transmission of the delay-sensitive service traffic is limited by the influence of factors such as the transmission performed by the associated EHT STA that do not support R-TWT and/or the pre-EHT STA that do not support the quiet interval in the BSS corresponding to the restricted TWT operation, as well as the overlapping basic service set (OBSS).

The current IEEE 802.11 specification lacks an evaluation mechanism for the utilization effect of the restricted TWT operation with respect to prioritizing the transmission of the delay-sensitive service traffic, which is not conducive to stations that intend to transmit the delay-sensitive service traffic to select an associated AP or link and specific restricted TWT.

Based on the above problems, the present disclosure proposes an evaluation mechanism about the transmission condition of the delay-sensitive service traffic during a service period of a delay-sensitive service, so that after receiving the information provided by the AP, the non-AP station: firstly, selects an AP or a link to be used for a transmission of the low-latency service traffic by the implementation-specific AP or link selection algorithm; secondly, for a specific AP or link, selects restricted TWT corresponding to a specific restricted TWT schedule (R-TWT schedule) established and intended to be joined by the AP or link; thirdly, for an MLD device, selects a specific link mapped to a specific TID in the uplink direction and/or downlink direction in the traffic identifier-to-link process.

To facilitate understanding of the technical solutions of the embodiments of the present disclosure, the technical solutions of the present disclosure are described in detail below through specific embodiments. The following related technology as optional solutions may be arbitrarily combined with the technical solutions of the embodiments of the present disclosure, and they all belong to the protection scope of the embodiments of the present disclosure. The embodiments of the present disclosure include at least part of the following contents.

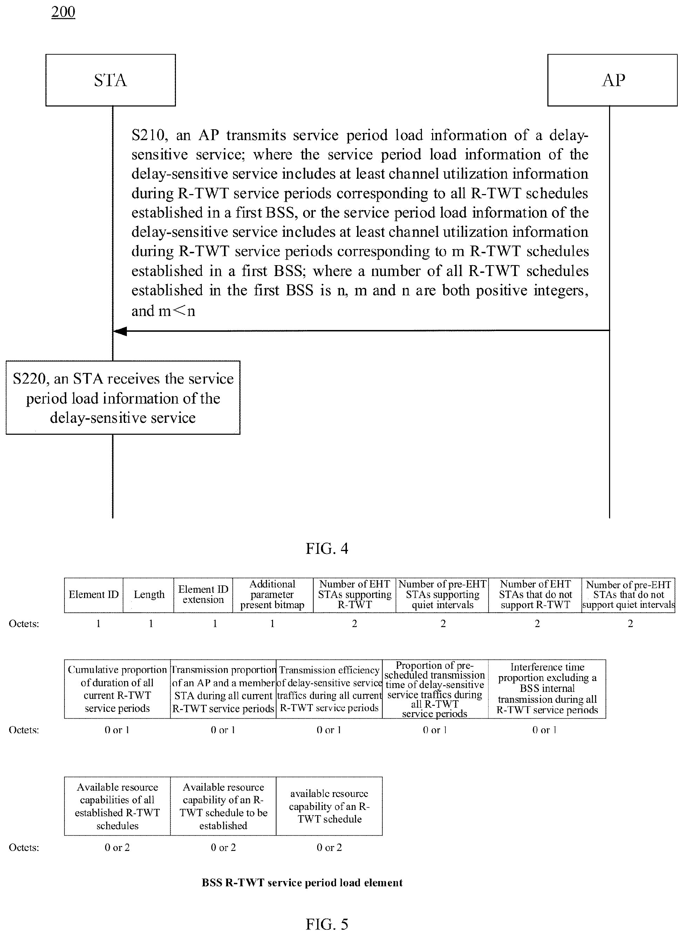

FIG. 4 is a schematic flow chart of a wireless communication method 200 according to embodiments of the present disclosure. As shown in FIG. 4, the wireless communication method 200 may include at least part of the following contents:

in S210, an AP transmits service period load information of a delay-sensitive service; where the service period load information of the delay-sensitive service includes at least channel utilization information during restricted-target wake time (R-TWT) service periods corresponding to all R-TWT schedules established in a first basic service set (BSS), or the service period load information of the delay-sensitive service includes at least channel utilization information during R-TWT service periods corresponding to m R-TWT schedules established in a first BSS; where a number of all R-TWT schedules established in the first BSS is n, m and n are both positive integers, and m<n;

in S220, an STA receives the service period load information of the delay-sensitive service.

It should be understood that FIG. 4 shows steps or operations of the wireless communication method 200, but these steps or operations are merely examples, and the embodiments of the present disclosure may also perform other operations or variations of the operations in FIG. 4.

In the embodiments of the present disclosure, the STA may acquire the channel utilization information during the R-TWT service periods corresponding to all R-TWT schedules established in the first BSS through the service period load information of the delay-sensitive service, or the STA may acquire the channel utilization information during the R-TWT service periods corresponding to m R-TWT schedules established in the first BSS through the service period load information of the delay-sensitive service, so that the STA may perform a subsequent transmission of the delay-sensitive service traffic based on the acquired channel utilization information to optimize the performance of the transmission of the delay-sensitive service traffic based on R-TWT.

In the embodiments of the present disclosure, "field" may also be referred to as "field" or "subfield". A field may occupy one or more bytes/octets, or a field may occupy one or more bits. The "latency-sensitive service" may also be referred to as "low-delay service", which is not limited in the present disclosure.

In some embodiments, the R-TWT schedule described in the embodiments of the present disclosure may be extended to a delay-sensitive service schedule, and the R-TWT service period may be extended to a service period of the delay-sensitive service. For example, the above S210 may be extended such that: the service period load information of the delay-sensitive service at least includes the channel utilization information during the service periods of the delay-sensitive service corresponding to all delay-sensitive service schedules established in the first BSS, or the service period load information of the delay-sensitive service at least includes the channel utilization information during the service periods of the delay-sensitive service corresponding to m delay-sensitive service schedules established in the first BSS; where the number of all delay-sensitive service schedules established in the first BSS is n, m and n are both positive integers, and m<n. The subsequent solutions are similar. The R-TWT schedule may also be extended to the delay-sensitive service schedule, and the R-TWT service period may also be extended to the service period of the delay-sensitive service, which will not be repeated herein.

In some embodiments, an AP corresponding to the service period load information of the delay-sensitive service may be the same as or different from an AP transmitting the service period load information of the delay-sensitive service. For example, the AP corresponding to the service period load information of the delay-sensitive service may be the AP itself transmitting the service period load information of the delay-sensitive service, or the AP corresponding to the service period load information of the delay-sensitive service is a neighboring AP of the AP transmitting the service period load information of the delay-sensitive service, or the AP corresponding to the service period load information of the delay-sensitive service is another AP in the same co-located AP set as the AP transmitting the service period load information of the delay-sensitive service, or the AP corresponding to the service period load information of the delay-sensitive service is another AP in the same multiple basic service set identifier (BSSID) set (multiple BSSID set) as the AP transmitting the service period load information of the delay-sensitive service.

Specifically, for example, in a case where the AP corresponding to the service period load information of the delay-sensitive service is different from the AP transmitting the service period load information of the delay-sensitive service, the AP transmitting the service period load information of the delay-sensitive service may acquire the service period load information of the delay-sensitive service or information related to the service period load information of the delay-sensitive service, from the AP corresponding to the service period load information of the delay-sensitive service.

The embodiments of the present disclosure may also be applied to a multi-link device (MLD). For example, the above S210 may be replaced such that: an AP MLD transmits service period load information of a delay-sensitive service; and the above S220 may be replaced such that: a Non-AP MLD receives the service period load information of the delay-sensitive service. Specifically, the Non-AP MLD may perform a subsequent transmission of the delay-sensitive service traffic based on the acquired channel utilization information, to optimize the performance of the transmission of the delay-sensitive service traffic based on the R-TWT.

In the embodiments of the present disclosure, the AP is an AP that supports R-TWT operations, and the AP has established R-TWT membership.

In some embodiments, the first BSS may be any BSS corresponding to the AP, or the first BSS may be a specific BSS corresponding to the AP. For example, the specific BSS is a BSS in which the STA is currently residing, or the specific BSS is a BSS with the most delay-sensitive services among all BSSs corresponding to the AP, or the specific BSS is a BSS with the largest volume of the delay-sensitive service among all BSSs corresponding to the AP, or the specific BSS is a BSS with the smallest identifier among all BSSs corresponding to the AP, or the specific BSS is a BSS with the largest identifier among all BSSs corresponding to the AP, or the specific BSS is any BSS associated with R-TWT among all BSSs corresponding to the AP, or the specific BSS is a BSS with the smallest identifier among all BSSs associated with R-TWT among all BSSs corresponding to the AP, or the specific BSS is a BSS with the largest identifier among all BSSs associated with R-TWT among all BSSs corresponding to the AP.

In some embodiments, in a case where the service period load information of the delay-sensitive service includes at least the channel utilization information during the R-TWT service periods corresponding to all R-TWT schedules established in the first BSS, the service period load information of the delay-sensitive service may be information at the BSS granularity. In a case where the service period load information of the delay-sensitive service includes at least channel utilization information during the R-TWT service periods corresponding to the m R-TWT schedules established in the first BSS, the service period load information of the delay-sensitive service may be information at the R-TWT schedule granularity.

In some embodiments, the STA selects an AP and/or a link for a transmission of the delay-sensitive service traffic according to the service period load information of the delay-sensitive service. Thus, the STA may select an AP and/or a link that is more conducive to the transmission of the delay-sensitive service traffic.

In some embodiments, the STA selects broadcast TWT corresponding to a target R-TWT schedule established and intended to be joined by a target AP, according to the R-TWT service period load information, and/or the STA selects broadcast TWT corresponding to a target R-TWT schedule established and intended to be joined by a target link, according to the R-TWT service period load information. That is, the STA may select the broadcast TWT corresponding to the target R-TWT schedule established and intended to be joined by the target AP, which is more conducive to the transmission of the delay-sensitive service traffic, or the STA may select the broadcast TWT corresponding to the target R-TWT schedule established and intended to be joined by the target link, which is more conducive to the transmission of the delay-sensitive service traffic.

In some embodiments, the target AP is configured or indicated by the AP, or the target AP is determined by the STA. For example, the target AP is an AP selected for the delay-sensitive service, or the target AP is any AP selected for the delay-sensitive service.

In some embodiments, the target link is configured or indicated by the AP, or the target link is determined by the STA. For example, the target link is a link selected for the delay-sensitive service, or the target link is any link selected for the delay-sensitive service.

In some embodiments, the target R-TWT schedule is configured or indicated by the AP, or the target R-TWT schedule is determined by the STA.

In some embodiments, the non-access multi-link device (Non-AP MLD) to which the STA belongs selects a link mapped to a target traffic identifier (traffic identifier, TID) in an uplink direction and/or a downlink direction in a traffic identifier-to-link mapping process, based on the R-TWT service period load information. That is, the Non-AP MLD may select a link mapped to the TID in the uplink direction and/or downlink direction, which is more conducive to the transmission of the delay-sensitive service traffic, in the traffic identifier-to-link mapping process.

In some embodiments, the target TID is configured or indicated by the AP, or the target TID is determined by the STA.

Specifically, for example, the STA selects the AP and/or link used for the transmission of the delay-sensitive service traffic according to the service period load information of the delay-sensitive service, and the STA selects the broadcast TWT corresponding to the target R-TWT schedule established and intended to be joined by the target AP according to the R-TWT service period load information.

Specifically, for example, the STA selects the AP and/or link used for the transmission of the delay-sensitive service traffic according to the service period load information of the delay-sensitive service, and the STA selects the broadcast TWT corresponding to the target R-TWT schedule established and intended to be joined by the target link according to the R-TWT service period load information.

Specifically, for example, the STA selects the AP and/or link used for the transmission of the delay-sensitive service traffic according to the service period load information of the delay-sensitive service, the STA selects the broadcast TWT corresponding to the target R-TWT schedule established and intended to be joined by the target AP according to the R-TWT service period load information, and the STA selects the broadcast TWT corresponding to the target R-TWT schedule established and intended to be joined by the target link according to the R-TWT service period load information.

Specifically, for example, the STA selects the AP and/or link for the transmission of the delay-sensitive service traffic according to the service period load information of the delay-sensitive service, and the Non-AP MLD to which the STA belongs selects the link mapped to the target TID in the uplink direction and/or downlink direction in the traffic identifier-to-link mapping process based on the R-TWT service period load information.

Specifically, for example, the STA selects the broadcast TWT corresponding to the target R-TWT schedule established and intended to be joined by the target AP according to the R-TWT service period load information, and the Non-AP MLD to which the STA belongs selects the link mapped to the target TID in the uplink direction and/or downlink direction in the traffic identifier-to-link mapping process based on the R-TWT service period load information.

Specifically, for example, the STA selects the broadcast TWT corresponding to the target R-TWT schedule established and intended to be joined by the target link according to the R-TWT service period load information, and the Non-AP MLD to which the STA belongs selects the link mapped to the target TID in the uplink direction and/or downlink direction in the traffic identifier-to-link mapping process based on the R-TWT service period load information.

Specifically, for example, the STA selects the broadcast TWT corresponding to the target R-TWT schedule established and intended to be joined by the target AP according to the R-TWT service period load information, the STA selects the broadcast TWT corresponding to the target R-TWT schedule established and intended to be joined by the target link according to the R-TWT service period load information, and the Non-AP MLD to which the STA belongs selects the link mapped to the target TID in the uplink direction and/or downlink direction in the traffic identifier-to-link mapping process based on the R-TWT service period load information.

Specifically, for example, the STA selects the AP and/or link for the transmission of the delay-sensitive service traffic according to the service period load information of the delay-sensitive service, the STA selects the broadcast TWT corresponding to the target R-TWT schedule established and intended to be joined by the target AP according to the R-TWT service period load information, and the Non-AP MLD to which the STA belongs selects the link mapped to the target TID in the uplink direction and/or downlink direction in the traffic identifier-to-link mapping process based on the R-TWT service period load information.

Specifically, for example, the STA selects the AP and/or link for the transmission of the delay-sensitive service traffic according to the service period load information of the delay-sensitive service, the STA selects the broadcast TWT corresponding to the target R-TWT schedule established and intended to be joined by the target link according to the R-TWT service period load information, and the Non-AP MLD to which the STA belongs selects the link mapped to the target TID in the uplink direction and/or downlink direction in the traffic identifier-to-link mapping process based on the R-TWT service period load information.

Specifically, for example, the STA selects the AP and/or link for the transmission of the delay-sensitive service traffic according to the service period load information of the delay-sensitive service, the STA selects the broadcast TWT corresponding to the target R-TWT schedule established and intended to be joined by the target AP according to the R-TWT service period load information, the STA selects the broadcast TWT corresponding to the target R-TWT schedule established and intended to be joined by the target link according to the R-TWT service period load information, and the Non-AP MLD to which the STA belongs selects the link mapped to the target TID in the uplink direction and/or downlink direction in the traffic identifier-to-link mapping process based on the R-TWT service period load information.

In some embodiments, in a case where the service period load information of the delay-sensitive service includes at least the channel utilization information during the R-TWT service periods corresponding to all R-TWT schedules established in the first BSS, the channel utilization information during the R-TWT service periods corresponding to all R-TWT schedules established in the first BSS includes but is not limited to at least one of:

a cumulative proportion of duration during the R-TWT service periods corresponding to all R-TWT schedules established in the first BSS, a transmission proportion of an AP and an R-TWT member STA during the R-TWT service periods corresponding to all R-TWT schedules established in the first BSS, transmission efficiency of delay-sensitive service traffics during the R-TWT service periods corresponding to all R-TWT schedules established in the first BSS, a transmission time proportion of delay-sensitive service traffics during the R-TWT service periods corresponding to all R-TWT schedules established in the first BSS, or an interference time proportion excluding an internal transmission of the first BSS during the R-TWT service periods corresponding to all R-TWT schedules established in the first BSS.

For example, the channel utilization information during the R-TWT service periods corresponding to all R-TWT schedules established in the first BSS includes: the cumulative proportion of duration during the R-TWT service periods corresponding to all R-TWT schedules established in the first BSS. Thus, the STA may perform a subsequent transmission of the delay-sensitive service based on the cumulative proportion of duration during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the transmission proportion of the AP and the R-TWT member STA during the R-TWT service periods corresponding to all R-TWT schedules established in the first BSS. Thus, the STA may perform a subsequent transmission of the delay-sensitive service based on the transmission proportion of the AP and the R-TWT member STA during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the transmission efficiency of the delay-sensitive service traffics during the R-TWT service periods corresponding to all R-TWT schedules established in the first BSS. Thus, the STA may perform a subsequent transmission of the delay-sensitive service based on the transmission efficiency of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the transmission time proportion of the delay-sensitive service traffics during the R-TWT service periods corresponding to all R-TWT schedules established in the first BSS. Thus, the STA may perform a subsequent transmission of the delay-sensitive service traffic based on the transmission time proportion of the delay-sensitive service during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the interference time proportion excluding the internal transmission of the first BSS during the R-TWT service periods corresponding to all R-TWT schedules established in the first BSS. Thus, the STA may perform a subsequent transmission of the delay-sensitive service based on the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the cumulative proportion of duration during the R-TWT service periods corresponding to all R-TWT schedules established in the first BSS, and the transmission proportion of the AP and the R-TWT member STA during the R-TWT service periods corresponding to all R-TWT schedules established in the first BSS. Thus, the STA may perform a subsequent transmission of the delay-sensitive service based on the cumulative proportion of duration during the R-TWT service periods corresponding to all R-TWT schedules established in the first BSS, and the transmission proportion of the AP and the R-TWT member STA during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the cumulative proportion of duration during the R-TWT service periods corresponding to all R-TWT schedules established in the first BSS, and the transmission efficiency of the delay-sensitive service traffics during the R-TWT service periods corresponding to all R-TWT schedules established in the first BSS. Thus, the STA may perform a subsequent transmission of the delay-sensitive service based on the cumulative proportion of duration during the R-TWT service periods corresponding to all R-TWT schedules established in the first BSS, and the transmission efficiency of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the cumulative proportion of duration during the R-TWT service periods corresponding to all R-TWT schedules established in the first BSS, and the transmission time proportion of the delay-sensitive service traffics during the R-TWT service periods corresponding to all R-TWT schedules established in the first BSS. Thus, the STA may perform a subsequent transmission of the delay-sensitive service based on the cumulative proportion of duration during the R-TWT service periods corresponding to all R-TWT schedules established in the first BSS, and the transmission time proportion of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the cumulative proportion of duration during the R-TWT service periods corresponding to all R-TWT schedules established in the first BSS, and the interference time proportion excluding the internal transmission of the first BSS during the R-TWT service periods corresponding to all R-TWT schedules established in the first BSS. Thus, the STA may perform a subsequent transmission of the delay-sensitive service based on the cumulative proportion of duration during the R-TWT service periods corresponding to all R-TWT schedules established in the first BSS, and the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to all R-TWT schedules established in the first BSS includes: the transmission proportion of the AP and the R-TWT member STA during the R-TWT service periods corresponding to all R-TWT schedules established in the first BSS, and the transmission efficiency of the delay-sensitive service traffics during the R-TWT service periods corresponding to all R-TWT schedules established in the first BSS. Thus, the STA may perform a subsequent transmission of the delay-sensitive service traffic based on the transmission proportion of the AP and the R-TWT member STA during the R-TWT service periods corresponding to all R-TWT schedules established in the first BSS, and the transmission efficiency of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the transmission proportion of the AP and the R-TWT member STA during the R-TWT service periods corresponding to all R-TWT schedules established in the first BSS, and the transmission time proportion of the delay-sensitive service traffics during the R-TWT service periods corresponding to all R-TWT schedules established in the first BSS. Thus, the STA may perform a subsequent transmission of the delay-sensitive service traffic based on the transmission proportion of the AP and the R-TWT member STA during the R-TWT service periods corresponding to all R-TWT schedules established in the first BSS, and the transmission time proportion of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the transmission proportion of the AP and the R-TWT member STA during the R-TWT service periods corresponding to all R-TWT schedules established in the first BSS, and the interference time proportion excluding the internal transmission of the first BSS during the R-TWT service periods corresponding to all R-TWT schedules established in the first BSS. Thus, the STA may perform a subsequent transmission of the delay-sensitive service traffic based on the transmission proportion of the AP and the R-TWT member STA during the R-TWT service periods corresponding to all R-TWT schedules established in the first BSS, and the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT .

For example, the channel utilization information during the R-TWT service periods corresponding to all R-TWT schedules established in the first BSS includes: the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS. Thus, the STA may perform a subsequent transmission of the delay-sensitive service traffic based on the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the transmission efficiency of the delay-sensitive service traffics during the R-TWT service periods corresponding to all R-TWT schedules established in the first BSS and the interference time proportion excluding the internal transmission of the first BSS during the R-TWT service periods corresponding to all R-TWT schedules established in the first BSS. Thus, the STA may perform a subsequent transmission of the delay-sensitive service traffic based on the transmission efficiency of the delay-sensitive service traffics during the R-TWT service periods corresponding to all R-TWT schedules established in the first BSS and the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the transmission time proportion of the delay-sensitive service traffics during the R-TWT service periods corresponding to all R-TWT schedules established in the first BSS, and the interference time proportion excluding the internal transmission of the first BSS during the R-TWT service periods corresponding to all R-TWT schedules established in the first BSS. Thus, the STA may perform a subsequent transmission of the delay-sensitive service traffic based on the transmission time proportion of the delay-sensitive service traffics during the R-TWT service periods corresponding to all R-TWT schedules established in the first BSS, and the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the cumulative proportion of duration during the R-TWT service periods corresponding to all R-TWT schedules established in the first BSS, the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS. Thus, the STA may perform a subsequent transmission of the delay-sensitive service traffic based on the cumulative proportion of duration during the R-TWT service periods corresponding to all R-TWT schedules established in the first BSS, the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT .

For example, the channel utilization information during the R-TWT service periods corresponding to all R-TWT schedules established in the first BSS includes: the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS. Thus, the STA may perform a subsequent transmission of the delay-sensitive service traffic based on the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the interference time proportion excluding the internal transmission of the first BSS during the R-TWT service periods corresponding to all R-TWT schedules established in the first BSS. Thus, the STA may perform a subsequent transmission of the delay-sensitive service traffic based on the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service periods corresponding to all R-TWT schedules established in the first BSS includes: the cumulative proportion of duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS. Thus, the STA may perform a subsequent transmission of the delay-sensitive service traffic based on the cumulative proportion of duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, and the transmission time proportion of the delay-sensitive service traffics during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT.

For example, the channel utilization information during the R-TWT service period corresponding to all R-TWT schedules established in the first BSS includes: the cumulative proportion of the duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the interference time proportion excluding the internal transmission of the first BSS during the R-TWT service periods corresponding to all R-TWT schedules established in the first BSS. Thus, the STA may perform a subsequent transmission of the delay-sensitive service traffic based on the cumulative proportion of the duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the interference time proportion excluding the internal transmission of the first BSS during the R-TWT service periods corresponding to all R-TWT schedules established in the first BSS (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service traffic based on the R-TWT .

In some embodiments, the service period load information of the delay-sensitive service further includes but is not limited to at least one of: a number of extremely high throughput (EHT) STAs that currently support R-TWT in the first BSS, a number of EHT STAs that currently do not support R-TWT in the first BSS, a number of pre-EHT STAs that support quiet intervals in the first BSS, a number of pre-EHT STAs that do not support quiet intervals in the first BSS, available resource capability information of all R-TWT schedules established in the first BSS, available resource capability information of all R-TWT schedules to be established in the first BSS, or available resource capability information of R-TWT schedules in the first BSS.

In some embodiments, the available resource capability information of all R-TWT schedules established in the first BSS includes an amount of available remaining medium time that is further available for a corresponding new R-TWT member STA to join the R-TWT service periods during the R-TWT service periods corresponding to all R-TWT schedules established in the first BSS, within a measurement duration corresponding to the first BSS.

In some embodiments, the available resource capability information of all R-TWT schedules to be established in the first BSS includes an amount of remaining medium time that is currently available during the R-TWT service periods corresponding to the R-TWT schedules to be established, within a measurement duration corresponding to the first BSS.

In some embodiments, the available resource capability information of the R-TWT schedules in the first BSS includes an amount of available remaining medium time during R-TWT service periods corresponding to currently established R-TWT schedules and an amount of remaining medium time currently available during R-TWT service periods corresponding to R-TWT schedules to be established, within a measurement duration corresponding to the first BSS.

For example, the service period load information of the delay-sensitive service further includes: a number of EHT STAs that currently support the R-TWT in the first BSS. Specifically, the STA may acquire the number of EHT STAs that currently support the R-TWT in the first BSS, and in the subsequent transmission process for the delay-sensitive service, the channel access during the R-TWT service period for the EHT STA that supports the R-TWT is prioritized, and it is prioritized that the EHT STA that supports the R-TWT transmits the delay-sensitive service, thereby optimizing the transmission of the delay-sensitive service traffic.

For example, the service period load information of the delay-sensitive service further includes: a number of EHT STAs that currently do not support the R-TWT in the first BSS. Specifically, the STA may acquire the number of EHT STAs that currently do not support the R-TWT in the first BSS, and in the subsequent transmission process for the delay-sensitive service, the channel access during the R-TWT service period for the EHT STA that does not support the R-TWT is restricted, thereby optimizing the transmission of the delay-sensitive service traffic.

For example, the service period load information of the delay-sensitive service further includes: the number of pre-EHT STAs that support quiet intervals in the first BSS. Specifically, the STA may acquire the number of pre-EHT STAs that currently support quiet intervals in the first BSS, and in the subsequent transmission process for the delay-sensitive service, it is prioritized that the pre-EHT STA that supports quiet intervals acquires a transmission opportunity during the R-TWT service period, and it is prioritized that the pre-EHT STA that supports quiet intervals transmits the delay-sensitive service, thereby optimizing the transmission of the delay-sensitive service traffic.

For example, the service period load information of the delay-sensitive service further includes: the number of pre-EHT STAs that do not support quiet intervals in the first BSS. Specifically, the STA may acquire the number of pre-EHT STAs that currently do not support quiet intervals in the first BSS, and in the subsequent transmission process for the delay-sensitive service, the pre-EHT STA that does not support quiet intervals is prevented from acquiring a transmission opportunity during the R-TWT service period, thereby optimizing the transmission of the delay-sensitive service traffic.

For example, the service period load information of the delay-sensitive service further includes: the available resource capability information of all R-TWT schedules established in the first BSS. Specifically, the available resource capability information of all R-TWT schedules established in the first BSS may be an amount of available remaining medium time that is further available for a corresponding new member station to join the R-TWT service periods during R-TWT service periods corresponding to all R-TWT schedules, during the measurement duration. It helps the STA to select an AP that may accept future R-TWT membership establishment requests.

For example, the service period load information of the delay-sensitive service further includes: the available resource capability information of all R-TWT schedules to be established in the first BSS. Specifically, the available resource capability information of all R-TWT schedules established in the first BSS may be the amount of remaining medium time that is currently available for the R-TWT service periods corresponding to the restricted TWT schedules to be newly established, during the measurement duration. It helps the STA to select an AP that may accept future R-TWT membership establishment requests.

For example, the service period load information of the delay-sensitive service further includes: available resource capability information of R-TWT schedules in the first BSS. Specifically, the available resource capability information of all R-TWT schedules established in the first BSS may be the amount of remaining medium time currently available for R-TWT service periods corresponding to the restricted TWT schedules during the measurement duration, including the amount of remaining medium time available for all established R-TWT schedules and the amount of remaining medium time available for R-TWT service periods corresponding to restricted TWT schedules to be newly-established. It helps the STA to select an AP that may accept future R-TWT membership establishment requests.

For example, the service period load information of the delay-sensitive service further includes: the number of EHT STAs that currently support the R-TWT in the first BSS, and the number of pre-EHT STAs that support quiet intervals in the first BSS. Specifically, the STA may acquire the number of EHT STAs that currently support the R-TWT in the first BSS, and the number of pre-EHT STAs that support quiet intervals in the first BSS, and in the subsequent transmission process for the delay-sensitive service, the channel access during the R-TWT service period for the EHT STA that supports the R-TWT is prioritized, it is prioritized that the pre-EHT STA that supports quiet intervals acquires a transmission opportunity during the R-TWT service period, and it is prioritized that the EHT STA that supports the R-TWT transmits the delay-sensitive service, thereby optimizing the transmission of the delay-sensitive service traffic.

For example, the service period load information of the delay-sensitive service further includes: the a number of EHT STAs that currently do not support the R-TWT in the first BSS, and the number of pre-EHT STAs that do not support quiet intervals in the first BSS. Specifically, the STA may acquire the a number of EHT STAs that currently do not support the R-TWT in the first BSS, and the number of pre-EHT STAs that do not support quiet intervals in the first BSS, and in the subsequent transmission process for the delay-sensitive service, the channel access during the R-TWT service period for the EHT STA that does not support the R-TWT is restricted, and the pre-EHT STA that does not support quiet intervals is prevented from acquiring a transmission opportunity during the R-TWT service period, thereby optimizing the transmission of the delay-sensitive service traffic.

For example, the service period load information of the delay-sensitive service further includes: the number of EHT STAs that currently support the R-TWT in the first BSS, the number of pre-EHT STAs that support quiet intervals in the first BSS, and the available resource capability information of all R-TWT schedules established in the first BSS. Specifically, the STA may acquire the number of EHT STAs that currently support the R-TWT in the first BSS, and the number of pre-EHT STAs that support quiet intervals in the first BSS, and in the subsequent transmission process for the delay-sensitive service, the channel access during the R-TWT service period for the EHT STA that supports the R-TWT is prioritized, it is prioritized that the pre-EHT STA that supports quiet intervals acquires a transmission opportunity during the R-TWT service period, and it is prioritized that the EHT STA that supports the R-TWT transmits the delay-sensitive service, thereby optimizing the transmission of the delay-sensitive service traffic. In addition, the available resource capability information of all R-TWT schedules established in the first BSS helps the STA to select an AP that may accept future R-TWT membership establishment requests.

For example, the service period load information of the delay-sensitive service further includes: the a number of EHT STAs that currently do not support the R-TWT in the first BSS, the number of pre-EHT STAs that do not support quiet intervals in the first BSS, and the available resource capability information of all R-TWT schedules established in the first BSS. Specifically, the STA may acquire the a number of EHT STAs that currently do not support the R-TWT in the first BSS, and the number of pre-EHT STAs that do not support quiet intervals in the first BSS, and in the subsequent transmission process for the delay-sensitive service, the channel access during the R-TWT service period for the EHT STA that does not support the R-TWT is restricted, and the pre-EHT STA that does not support quiet intervals is prevented from acquiring a transmission opportunity during the R-TWT service period, thereby optimizing the transmission of the delay-sensitive service traffic. In addition, the available resource capability information of all R-TWT schedules established in the first BSS helps the STA to select an AP that may accept future R-TWT membership establishment requests.

For example, the service period load information of the delay-sensitive service further includes: the number of EHT STAs that currently support the R-TWT in the first BSS, the number of pre-EHT STAs that support quiet intervals in the first BSS, and the available resource capability information of all R-TWT schedules to be established in the first BSS.

Specifically, the STA may acquire the number of EHT STAs that currently support the R-TWT in the first BSS, and the number of pre-EHT STAs that support quiet intervals in the first BSS, and in the subsequent transmission process for the delay-sensitive service, the channel access during the R-TWT service period for the EHT STA that supports the R-TWT is prioritized, it is prioritized that the pre-EHT STA that supports quiet intervals acquires a transmission opportunity during the R-TWT service period, and it is prioritized that the EHT STA that supports the R-TWT transmits the delay-sensitive service, thereby optimizing the transmission of the delay-sensitive service traffic. In addition, the available resource capability information of all R-TWT schedules to be established in the first BSS helps the STA to select an AP that may accept future R-TWT membership establishment requests.

For example, the service period load information of the delay-sensitive service further includes: the a number of EHT STAs that currently do not support the R-TWT in the first BSS, the number of pre-EHT STAs that do not support quiet intervals in the first BSS, and the available resource capability information of all R-TWT schedules to be established in the first BSS. Specifically, the STA may acquire the a number of EHT STAs that currently do not support the R-TWT in the first BSS, and the number of pre-EHT STAs that do not support quiet intervals in the first BSS, and in the subsequent transmission process for the delay-sensitive service, the channel access during the R-TWT service period for the EHT STA that does not support the R-TWT is restricted, and the pre-EHT STA that does not support quiet intervals is prevented from acquiring a transmission opportunity during the R-TWT service period, thereby optimizing the transmission of the delay-sensitive service traffic. In addition, the available resource capability information of all R-TWT schedules to be established in the first BSS helps the STA to select an AP that may accept future R-TWT membership establishment requests.

For example, the service period load information of the delay-sensitive service further includes: the number of EHT STAs that currently support the R-TWT in the first BSS, the number of pre-EHT STAs that support quiet intervals in the first BSS, and available resource capability information of the R-TWT schedules in the first BSS. Specifically, the STA may acquire the number of EHT STAs that currently support the R-TWT in the first BSS, and the number of pre-EHT STAs that support quiet intervals in the first BSS, and in the subsequent transmission process for the delay-sensitive service, the channel access during the R-TWT service period for the EHT STA that supports the R-TWT is prioritized, it is prioritized that the pre-EHT STA that supports quiet intervals acquires a transmission opportunity during the R-TWT service period, and it is prioritized that the EHT STA that supports the R-TWT transmits the delay-sensitive service, thereby optimizing the transmission of the delay-sensitive service traffic. In addition, the available resource capability information of the R-TWT schedules in the first BSS helps the STA to select an AP that may accept future R-TWT membership establishment requests.

For example, the service period load information of the delay-sensitive service further includes: the a number of EHT STAs that currently do not support the R-TWT in the first BSS, the number of pre-EHT STAs that do not support quiet intervals in the first BSS, and the available resource capability information of the R-TWT schedules in the first BSS. Specifically, the STA may acquire the a number of EHT STAs that currently do not support the R-TWT in the first BSS, and the number of pre-EHT STAs that do not support quiet intervals in the first BSS, and in the subsequent transmission process for the delay-sensitive service, the channel access during the R-TWT service period for the EHT STA that does not support the R-TWT is restricted, and the pre-EHT STA that does not support quiet intervals is prevented from acquiring a transmission opportunity during the R-TWT service period, thereby optimizing the transmission of the delay-sensitive service traffic. In addition, the available resource capability information of the R-TWT schedules in the first BSS helps the STA to select an AP that may accept future R-TWT membership establishment requests.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the available resource capability information of all R-TWT schedules established in the first BSS, and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission proportion of the AP and the R-TWT member STA during the R-TWT service periods corresponding to all R-TWT schedules established in the first BSS, the available resource capability information of all R-TWT schedules established in the first BSS, and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission proportion of the AP and the R-TWT member STA during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission efficiency of the delay-sensitive service traffics during the R-TWT service periods corresponding to all R-TWT schedules established in the first BSS, the available resource capability information of all R-TWT schedules established in the first BSS and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission efficiency of the delay-sensitive service traffics during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission time proportion of the delay-sensitive service traffics during the R-TWT service periods corresponding to all R-TWT schedules established in the first BSS, the available resource capability information of all R-TWT schedules established in the first BSS and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission time proportion of the delay-sensitive service traffics during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the interference time proportion excluding the internal transmission of the first BSS during the R-TWT service periods corresponding to all R-TWT schedules established in the first BSS, the available resource capability information of all R-TWT schedules established in the first BSS and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the interference time proportion excluding the internal transmission of the first BSS during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, the available resource capability information of all R-TWT schedules established in the first BSS and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the available resource capacity information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, the available resource capability information of all R-TWT schedules established in the first BSS and/or the available resource capability information of all R-TWT schedules to be established in the first BSS.

For example, Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, the available resource capability information of all R-TWT schedules established in the first BSS and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, and the available resource capability information of the R-TWT schedules in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, the interference time proportion excluding the internal transmission of the first BSS during the R-TWT service periods corresponding to all R-TWT schedules established in the first BSS, the available resource capability information of all R-TWT schedules established in the first BSS and/or the available resource capability information of all R-TWT schedules to be established in the first BSS.

Specifically, for example, the service period load information of the delay-sensitive service includes: the number of EHT STAs that currently support the R-TWT in the first BSS, the a number of EHT STAs that currently do not support the R-TWT in the first BSS, the number of pre-EHT STAs that support quiet intervals in the first BSS, the number of pre-EHT STAs that do not support quiet intervals in the first BSS, the cumulative proportion of the duration during the R-TWT service periods corresponding to all R-TWT schedules established in the first BSS, the transmission proportion of the AP and the R-TWT member STA during the R-TWT service periods corresponding to all R-TWT schedules established in the first BSS, the transmission efficiency of the delay-sensitive service traffics during the R-TWT service periods corresponding to all R-TWT schedules established in the first BSS, the transmission time proportion of the delay-sensitive service traffics during the R-TWT service periods corresponding to all R-TWT schedules established in the first BSS, the interference time proportion excluding the internal transmission of the first BSS during the R-TWT service periods corresponding to all R-TWT schedules established in the first BSS, and the available resource capability information of the R-TWT schedules in the first BSS.

In some embodiments, the service period load information of the delay-sensitive service is carried by a first element in a first frame;

where the first element includes at least one of fields as follows: a field for an additional parameter present bitmap, a field for a number of EHT STAs supporting R-TWT, a field for a number of pre-EHT STAs supporting quiet intervals, a field for a number of EHT STAs that do not support R-TWT, a field for a number of pre-EHT STAs that do not support quiet intervals, a field for a cumulative proportion of duration of all current R-TWT service periods, a field for a transmission proportion of an AP and a member STA during all current R-TWT service periods, a field for transmission efficiency of delay-sensitive service traffics during all current R-TWT service periods, a field for a proportion of pre-scheduled transmission time of delay-sensitive service traffics during all R-TWT service periods, a field for an interference time proportion excluding a BSS internal transmission during all R-TWT service periods, a field for available resource capabilities of all established R-TWT schedules, a field for an available resource capability of an R-TWT schedule to be established, or a field for an available resource capability of an R-TWT schedule;

where the field for the additional parameter present bitmap is used to indicate whether at least one field in the first element is present, the field for the number of EHT STAs supporting R-TWT is used to indicate a number of EHT STAs that currently support R-TWT in the first BSS, the field for the number of pre-EHT STAs supporting quiet intervals is used to indicate a number of pre-EHT STAs that support quiet intervals in the first BSS, the field for the number of EHT STAs that do not support R-TWT is used to indicate a number of EHT STAs that currently do not support R-TWT in the first BSS, the field for the number of pre-EHT STAs that do not support quiet intervals is used to indicate a number of pre-EHT STAs that do not support quiet intervals in the first BSS, the field for the cumulative proportion of duration of all current R-TWT service periods is used to indicate a cumulative proportion of duration during the R-TWT service periods corresponding to all R-TWT schedules established in the first BSS, the field for the transmission proportion of the AP and the R-TWT member STA during all current R-TWT service periods is used to indicate a transmission proportion of the AP and an R-TWT member STA during the R-TWT service periods corresponding to all R-TWT schedules established in the first BSS, the field for the transmission efficiency of the delay-sensitive service traffics during all current R-TWT service periods is used to indicate transmission efficiency of the delay-sensitive service traffics during the R-TWT service periods corresponding to all R-TWT schedules established in the first BSS, the field for the proportion of the pre-scheduled transmission time of the delay-sensitive service traffics during all R-TWT service periods is used to indicate the transmission time proportion of the delay-sensitive service traffics during the R-TWT service periods corresponding to all R-TWT schedules established in the first BSS, the field for the interference time proportion excluding the BSS internal transmission during all R-TWT service periods is used to indicate the interference time proportion excluding an internal transmission of the first BSS during the R-TWT service periods corresponding to all R-TWT schedules established in the first BSS, the field for the available resource capabilities of all established R-TWT schedules is used to indicate available resource capability information of all R-TWT schedules established in the first BSS; the field for the available resource capability of the R-TWT schedule to be established is used to indicate available resource capability information of all R-TWT schedules to be established in the first BSS; the field for the available resource capability of the R-TWT schedules is used to indicate available resource capability information of the R-TWT schedules in the first BSS.

In some embodiments, at least one field in the first element includes some or all of fields including:
the field for the cumulative proportions of the duration of all current R-TWT service periods, the field for the transmission proportion of the AP and the R-TWT member STA during all current R-TWT service periods, the field for the transmission efficiency of the delay-sensitive service traffics during all current R-TWT service periods, the field for the proportion of the pre-scheduled transmission time of the delay-sensitive service traffics during all R-TWT service periods, the field for the interference time proportion excluding the BSS internal transmission during all R-TWT service periods, the field for the available resource capabilities of all established R-TWT schedules, the field for the available resource capability of the R-TWT schedule to be established, and the field for the available resource capability of the R-TWT schedule.

That is, in this embodiment, the at least one field in the first element is an optional field.

In some embodiments, the first element is a BSS R-TWT service period load element. Certainly, the first element may also be other elements, which is not limited in the embodiments of the present disclosure.

In some embodiments, the first frame is one of: a beacon frame, a probe response frame, an association response frame, and a reassociation response frame. Certainly, the first frame may also be other management frames, which is not limited in the embodiments of the present disclosure.

Specifically, for example, if the AP that supports the R-TWT operation establishes the R-TWT membership, the AP announces R-TWT schedule information, through the BSS R-TWT service period load element included in the transmitted beacon frame, probe response frame, (re)association response frame, and other management frames.

Specifically, the BSS R-TWT service period load element includes a number of EHT STAs that currently support or do not support the R-TWT in the first BSS, a number of pre-EHT STAs that support or do not support quiet intervals, and a channel utilization condition during the R-TWT service period corresponding to the restricted TWT schedule, as well as available resource capability information of the R-TWT schedule. The BSS R-TWT service period load element format may be as shown in FIG. 5. A station receiving the BSS R-TWT service period load element may use the information that the BSS R-TWT service period load element conveys, firstly, to select an AP or a link to be used for a transmission of the low-latency service traffic by the implementation-specific AP or link selection algorithm; secondly, for a specific AP or link, to select R-TWT corresponding to a specific restricted TWT schedule (R-TWT schedule) established and intended to be joined by the AP or link; thirdly, for an MLD device, to select a specific link mapped to a specific TID in the uplink direction and/or downlink direction in the traffic identifier-to-link process.

In some embodiments, the BSS R-TWT service period load element may further include a field for a number of R-TWT member STAs, where the field for the number of R-TWT member STAs is used to indicate a number of member STAs corresponding to the current restricted TWT schedule.

Specifically, the BSS R-TWT service period load element may be as shown in FIG. 5, and may specifically include the following fields:

an element identifier (occupying 1 byte), a length (occupying 1 byte), an element identifier extension (occupying 1 byte), a field for an additional parameter present bitmap (occupying 1 byte), a field for a number of EHT STAs supporting R-TWT (occupying 2 bytes), a field for a number of pre-EHT STAs supporting quiet intervals (occupying 2 bytes), a field for a number of EHT STAs that do not support R-TWT (occupying 2 bytes), a field for a number of pre-EHT STAs that do not support quiet intervals (occupying 2 bytes), a field for a cumulative proportion of duration of all current R-TWT service periods (occupying 0 or 1 byte, that is, this field is an optional field), a field for a transmission proportion of an AP and a member STA during all current R-TWT service periods (occupying 0 or 1 byte, that is, this field is an optional field), a field for transmission efficiency of delay-sensitive service traffics during all current R-TWT service periods (occupying 0 or 1 byte, that is, this field is an optional field), a field for a proportion of pre-scheduled transmission time of delay-sensitive service traffics during all R-TWT service periods (occupying 0 or 1 bytes, that is, this field is an optional field), a field for an interference time proportion excluding a BSS internal transmission during all R-TWT service periods (occupying 0 or 1 bytes, that is, this field is an optional field), a field for available resource capabilities of all established R-TWT schedules (occupying 0 or 2 bytes, that is, this field is an optional field), a field for an available resource capability of an R-TWT schedule to be established (occupying 0 or 2 bytes, that is, this field is an optional field), and a field for an available resource capability of an R-TWT schedule (occupying 0 or 2 bytes, that is, this field is an optional field).

Specifically, in the BSS R-TWT service period load element shown in FIG. 5, the field for the additional parameter present bitmap contains a bitmap, and if an i-th field starting from the "field for the cumulative proportion of duration of all current R-TWT service periods" is present in the BSS R-TWT service period load element, the i-th item of the bitmap is set to 1. For each field starting from the "field for the cumulative proportion of duration of all current R-TWT service periods", the value 0 is reserved.

Specifically, in the BSS R-TWT service period load element shown in FIG. 5, the field for the number of EHT STAs supporting R-TWT indicates the number of EHT STAs that support the R-TWT and are currently associated with the BSS in which the R-TWT schedule is located. The EHT STAs announce that they are EHT STAs by transmitting their EHT capability elements, and meanwhile, set dot11RestrictedTWTOptionImplemented to true to indicate that they support the R-TWT.

Specifically, in the BSS R-TWT service period load element shown in FIG. 5, the field for the number of EHT STAs that do not support R-TWT indicates the number of EHT STAs that do not support the R-TWT and are currently associated with the BSS in which the restricted TWT schedule (R-TWT schedule) is located. The EHT STAs announce that they are EHT STAs by transmitting their EHT capability elements, and meanwhile, set dot11RestrictedTWTOptionImplemented to false to indicate that they do not support the R-TWT.

Specifically, in the BSS R-TWT service period load element shown in FIG. 5, the field for the number of pre-EHT STAs supporting quiet intervals indicates the number of pre-EHT STAs that support the quiet intervals and are currently associated with the BSS in which the restricted TWT schedule (R-TWT schedule) is located (i.e., stations before EHT, such as high-efficiency (HE), very high throughput (VHT), high throughput (HT), and non-HT stations).

Specifically, in the BSS R-TWT service period load element shown in FIG. 5, the field for the number of pre-EHT STAs that do not support quiet intervals indicates the number of pre-EHT STAs that do not support the quiet intervals and are currently associated with the BSS in which the restricted TWT schedule (R-TWT schedule) is located (i.e., stations before EHT, such as HE, VHT, HT, and non-HT stations).

In some embodiments, the cumulative proportion of the duration during the R-TWT service periods corresponding to all R-TWT schedules established in the first BSS is determined based on at least one of: cumulative duration of duration during all current R-TWT service periods, a measurement duration corresponding to the first BSS, a number of consecutive beacon intervals used to measure the duration of the R-TWT service periods and channel application conditions, or duration for an STA to schedule a beacon transmission.

For example, the cumulative proportion of the duration of the R-TWT service period corresponding to all R-TWT schedules established in the first BSS is determined based on the cumulative duration of duration during all current R-TWT service periods, and the measurement duration corresponding to the first BSS.

For another example, the cumulative proportion of the duration of the R-TWT service period corresponding to all R-TWT schedules established in the first BSS is determined based on the cumulative duration of duration during all current R-TWT service periods, the number of consecutive beacon intervals used to measure the duration of the R-TWT service periods and the channel application conditions, and the duration for the STA to schedule the beacon transmission.

In some embodiments, the cumulative proportion of the duration during the R-TWT service periods corresponding to all R-TWT schedules established in the first BSS is determined based on the following formula 1:

$$the\ cumulative\ proportion\ of\ the\ durations\ during\ the\ R$$
$$-\ TWT\ service\ periods\ corresponding\ to\ all\ current\ R-TWT\ schedules$$
$$= \left[ \frac{\sum_{i=1}^{n} T_{SP}^{i}}{dot11ChannelUtilizationBeaconsInterval \times dot11BeaconPeriod \times 1024} \times 255 \right]$$

where $T_{SP}^{i}$ represents duration during an R-TWT service period corresponding to an i-th R-TWT schedule among all R-TWT schedules established in the first BSS, $\sum_{i=1}^{n} T_{SP}^{i}$ represents the cumulative duration (e.g., a number of microseconds) of the duration during the R-TWT service periods corresponding to all R-TWT schedules established in the first BSS, *dot11ChannelUtilizationBeaconsIntervals* represents the number of consecutive beacon intervals used to measure the duration of the R-TWT service periods and the channel application conditions, dot11BeaconPeriod represents the duration for the STA to schedule the beacon transmission (in units of TU), a time proportion can be represented by a linear ratio of 255, and 255 represents 100%.

In some embodiments, the transmission proportion of the AP and the R-TWT member STA during the R-TWT service periods corresponding to all R-TWT schedules established in the first BSS is determined based on at least one of: all medium busy time caused by a transmission between the AP and the R-TWT member STA, or cumulative duration of duration during all current R-TWT service periods.

In some embodiments, the transmission proportion of the AP and the R-TWT member STA during the R-TWT service periods corresponding to all R-TWT schedules established in the first BSS is determined based on the following formula 2:

$$the\ transmission\ proportion\ of\ the\ AP\ and\ the\ R$$
$$-\ TWT\ member\ STA\ during\ all\ current\ R-TWT\ service\ periods =$$
$$\left[ \frac{T_{member-busy}^{ALL}}{\sum_{i=1}^{n} T_{SP}^{i}} \times 255 \right]$$

where $T_{member-busy}^{ALL}$ represents all medium busy time caused by the transmission between the AP and the R-TWT member STA, $T_{SP}^{i}$ represents duration during an R-TWT service period corresponding to an i-th R-TWT schedule among all R-TWT schedules established in the first BSS, and $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

Specifically, for example, in formula 2, the field for the transmission proportion between the AP and the member STA during all current R-TWT service periods is used to define the medium busy time proportion caused by the transmission between the AP and the member STA corresponding to the restricted TWT schedule, sensed by the AP, during the duration of the R-TWT service periods corresponding to all current established R-TWT schedules, during the measurement duration, where the medium busy may be indicated by the physical carrier sensing (CS) mechanism, and the time proportion may be represented by a linear ratio of 255 (255 represents 100%).

In some embodiments, the transmission efficiency of the delay-sensitive service traffics during the R-TWT service periods corresponding to all R-TWT schedules established in the first BSS is determined based on at least one of: all medium busy time caused by a transmission of the delay-sensitive service traffics between the AP and the R-TWT member STA, or pre-scheduled transmission time of delay-sensitive service traffics during all current R-TWT service periods.

In some embodiments, the transmission efficiency of the delay-sensitive service traffics during the R-TWT service periods corresponding to all R-TWT schedules established in the first BSS is determined based on the following formula 3:

$$the\ transmission\ efficiency\ of\ the\ delay$$
$$-sensitive\ service\ traffics\ during\ all\ current\ R$$
$$-TWT\ service\ periods$$
$$= \left[ \frac{T_{LST-busy}^{ALL}}{\sum_{i=1}^{n} T_{SP-Scheduled}^{i}} \times 255 \right]$$

where $T_{LST-busy}^{ALL}$ represents all medium busy time caused by the transmission of the delay-sensitive service traffics between the AP and the R-TWT member STA, $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, a time proportion can be represented by a linear ratio of 255, and 255 represents 100%.

For example, in formula 3, the pre-scheduled transmission time of the delay-sensitive service traffic during all R-TWT service periods is used to define pre-scheduled transmission time of the delay-sensitive service traffic between the AP and the member STA during the duration of the R-TWT service periods corresponding to all current established R-TWT schedules, during the measurement duration, and for the R-TWT service period corresponding to each established R-TWT schedule, it may be determined based on the uplink and/or downlink delay-sensitive service traffic requirements between the AP and the member STA, according to a transmission bandwidth and rate, a modulation and coding scheme (MCS), a number of spatial streams (NSS) and other transmission parameters, which are supported between the AP and the member STA. The uplink and/or downlink delay-sensitive service traffic requirements between the AP and the member STA may be determined by to-be-transmitted flow characteristics and Quality of Service (QoS) information in a QoS characteristics element carried when a SCS stream (if any) corresponding to the delay-sensitive service traffic is established through a stream classification service (SCS), and/or based on traffic conditions related to the buffer delay-sensitive service traffic reported by the station, such as buffer status report (BSR), etc.

In some embodiments, the transmission time proportion of the delay-sensitive service traffics during the R-TWT service periods corresponding to all R-TWT schedules established in the first BSS is determined based on at least one of: pre-scheduled transmission time of delay-sensitive service traffics during all R-TWT service periods, or accumulated duration of duration during all current R-TWT service periods.

In some embodiments, the transmission time proportion of the delay-sensitive service traffics during the R-TWT service periods corresponding to all R-TWT schedules established in the first BSS is determined based on the following formula 4:

*the proportion of the prescheduled transmission time of the delay*

*− sensitive service traffics during all R − TWT service periods*

$$= \left[ \frac{\sum_{i=1}^{n} T_{SP-Scheduled}^{i}}{\sum_{i=1}^{n} T_{SP}^{i}} \times 255 \right]$$

where $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

Specifically, for example, in formula 4, the field for the proportion of the pre-scheduled transmission time of delay-sensitive service traffic during all R-TWT service periods is used to define a proportion occupied by the pre-scheduled transmission time of the delay-sensitive service traffic occupied during all R-TWT service periods during the R-TWT service period corresponding to the restricted TWT schedule currently established in the BSS, during the measurement duration, where the time proportion may be represented by a linear ratio of 255 (255 represents 100%).

In some embodiments, the interference time proportion excluding the internal transmission of the first BSS during the R-TWT service periods corresponding to all R-TWT schedules established in the first BSS, is determined based on at least one of: channel busy time during all R-TWT service periods, medium busy time caused by a transmission between the AP and an associated STA, or cumulative duration of duration during all current R-TWT service periods.

For example, the interference time proportion excluding the internal transmission of the first BSS during the R-TWT service periods corresponding to all R-TWT schedules established in the first BSS, is determined based on the channel busy time during all R-TWT service periods, and the medium busy time caused by the transmission between the AP and the associated STA.

For another example, the interference time proportion excluding the internal transmission of the first BSS during the R-TWT service periods corresponding to all R-TWT schedules established in the first BSS, is determined based on the channel busy time during all R-TWT service periods and the cumulative duration of duration during all current R-TWT service periods.

For another example, the interference time proportion excluding the internal transmission of the first BSS during the R-TWT service periods corresponding to all R-TWT schedules established in the first BSS is determined based on the channel busy time during all R-TWT service periods, the medium busy time caused by the transmission between the AP and the associated STA, and the cumulative duration of duration during all current R-TWT service periods.

In some embodiments, the interference time proportion excluding the internal transmission of the first BSS during the R-TWT service periods corresponding to all R-TWT schedules established in the first BSS, is determined based on the following formula 5:

*the interference time proportion excluding the internal transmission of the BSS*

*during all R − TWT service periods*

$$= \left[ \frac{\sum_{i=1}^{n} T_{SP-Channelbusy}^{i} - T_{busy}^{asso}}{\sum_{i=1}^{n} T_{SP}^{i}} \times 255 \right]$$

where $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{busy}^{asso}$ represents medium busy time caused by the transmission between the AP and the associated STA, $T_{SP}^i$ represents duration during an R-TWT service period corresponding to an i-th R-TWT schedule among all R-TWT schedules established in the first BSS, $\sum_{i=1}^{n} T_{SP}^i$ represents cumulative duration of duration during the R-TWT service periods corresponding to all R-TWT schedules established in the first BSS, a time proportion can be represented by a linear ratio of 255, and 255 represents 100%.

For example, in formula 5, the field for the interference time proportion excluding the BSS internal transmission during all R-TWT service periods is used to define a proportion occupied by time of interference (e.g., overlapping basic service set (OBSS) interference) excluding the BSS internal transmission during the R-TWT service period corresponding to the restricted TWT schedule currently established in the BSS, where the time proportion may be represented by a linear ratio of 255 (255 represents 100%).

Here, the channel busy time during all R-TWT service periods is defined as the time when the medium is busy, which is sensed by the AP, during the R-TWT service periods corresponding to all R-TWT schedules, during the measurement duration, where the medium busyness is sensed by the AP through the indication of the physical or virtual carrier sensing (CS) mechanism. The cumulative duration of duration of all current R-TWT service periods is defined as a cumulative number of microseconds of the duration of the R-TWT service periods corresponding to all currently established R-TWT schedules, during the measurement duration.

The medium busy time caused by the transmission between the AP and the associated STA is defined as the time when the medium is busy caused by the transmission between the AP and the associated STA, which is sensed by the AP, during the R-TWT service periods corresponding to all restricted TWT schedules, during the measurement duration, where the medium busyness may be indicated by the physical carrier sensing (CS) mechanism.

Specifically, in the BSS R-TWT service period load element shown in FIG. 5, the field for the available resource capacities of all the established R-TWT schedules is used to define an amount of available remaining medium time that is further available for a corresponding new member station to join the R-TWT service periods during the R-TWT service periods corresponding to all restricted TWT schedules, during the measurement duration. The field for the available resource capacities of all the established R-TWT schedules contains an unsigned integer, in units of 32 us/s. The field helps the STA select an AP that may accept future R-TWT membership establishment requests, but it does not represent a guarantee that the AP will accept these requests.

Specifically, in the BSS R-TWT service period load element shown in FIG. 5, the field for the available resource capability of the R-TWT schedule to be established is used to define the amount of remaining medium time that is currently available for the R-TWT service periods corresponding to the restricted TWT schedules to be newly established, during the measurement duration. The field for the available resource capability of the R-TWT schedule to be established contains an unsigned integer, in units of 32 us/s. The field helps the STA select an AP that may accept future R-TWT membership establishment requests, but it does not represent a guarantee that the AP will accept these requests.

Specifically, in the BSS R-TWT service period load element shown in FIG. 5, the field for the available resource capability of the R-TWT schedule is used to define the amount of remaining medium time currently available for R-TWT service periods corresponding to the restricted TWT schedules during the measurement duration, including the amount of remaining medium time available for all established R-TWT schedules and the amount of remaining medium time available for R-TWT service periods corresponding to restricted TWT schedules to be newly-established. The field for the available resource capability of the R-TWT schedule contains an unsigned integer, in units of 32 us/s. The field helps the STA select an AP that may accept future R-TWT membership establishment requests, but it does not represent a guarantee that the AP will accept these requests.

In some embodiments, in a case where the service period load information of the delay-sensitive service includes at least the channel utilization information during the R-TWT service periods corresponding to the m R-TWT schedules established in the first BSS, the channel utilization information during the R-TWT service periods corresponding to the m R-TWT schedules established in the first BSS includes but is not limited to at least one of:

a cumulative proportion of duration during an R-TWT service period corresponding to each R-TWT schedule of the m R-TWT schedules, a proportion of pre-scheduled transmission time of a delay-sensitive service traffic during an R-TWT service period corresponding to each R-TWT schedule of the m R-TWT schedules, transmission efficiency of a delay-sensitive service traffic during an R-TWT service period corresponding to each R-TWT schedule of the m R-TWT schedules, a medium busy time proportion caused by interference excluding an internal transmission of the first BSS during an R-TWT service period corresponding to each R-TWT schedule of the m R-TWT schedules, an R-TWT service period utilization ratio based on a transmission of an R-TWT member STA during an R-TWT service period corresponding to each R-TWT schedule of the m R-TWT schedules, an R-TWT service period utilization ratio based on a transmission of a delay-sensitive service traffic during an R-TWT service period corresponding to each R-TWT schedule of the m R-TWT schedules, an R-TWT service period underutilization ratio based on a transmission of a non-R-TWT member STA during an R-TWT service period corresponding to each R-TWT schedule of the m R-TWT schedules, an R-TWT service period underutilization ratio based on a transmission of a non-delay-sensitive service traffic during an R-TWT service period corresponding to each R-TWT schedule of the m R-TWT schedules, a channel utilization proportion during an R-TWT service period corresponding to each R-TWT schedule of the m R-TWT schedules, a channel utilization proportion based on a transmission of an R-TWT member STA during an R-TWT service period corresponding to each R-TWT schedule of the m R-TWT schedules, a channel utilization proportion based on a transmission of a delay-sensitive service traffic during an R-TWT service period corresponding to each R-TWT schedule of the m R-TWT schedules, or a channel clear proportion during an R-TWT service period corresponding to each R-TWT schedule of the m R-TWT schedules.

For example, the channel utilization information during the R-TWT service periods corresponding to the m R-TWT schedules established in the first BSS includes: the cumulative proportion of duration during the R-TWT service period corresponding to each R-TWT schedule of the m R-TWT schedules. Thus, the STA may perform a subsequent transmission of the delay-sensitive service based on the cumulative proportion of duration during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the proportion of the pre-scheduled transmission time of the delay-sensitive service traffic during the R-TWT service period corresponding to each R-TWT schedule of the m R-TWT schedules. Thus, the STA may perform a subsequent transmission of the delay-sensitive service based on the proportion of the pre-scheduled transmission time of the delay-sensitive service traffic during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the transmission efficiency of the delay-sensitive service traffic during the R-TWT service period corresponding to each R-TWT schedule of the m R-TWT schedules. Thus, the STA may perform a subsequent transmission of the delay-sensitive service based on the transmission efficiency of the delay-sensitive service traffic during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the medium busy time proportion caused by interference excluding the internal transmission of the first BSS during the R-TWT service period corresponding to each R-TWT schedule of the m R-TWT schedules. Thus, the STA may perform a subsequent transmission of the delay-sensitive service based on the medium busy time proportion caused by interference excluding the internal transmission of the first BSS during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the R-TWT service period utilization ratio based on the transmission of the R-TWT member STA during the R-TWT service period corresponding to each R-TWT schedule of the m R-TWT schedules. Thus, STA may perform a subsequent transmission of the delay-sensitive service based on the R-TWT service period utilization ratio based on the transmission of the R-TWT member STA during the R-TWT service period corresponding to each R-TWT schedule of the m R-TWT scheduless (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the R-TWT service period utilization ratio based on the transmission of the delay-sensitive service traffic during the R-TWT service period corresponding to each R-TWT schedule of the m R-TWT schedules. Thus, the STA may perform a subsequent transmission of delay-sensitive services based on the R-TWT service period utilization ratio based on the transmission of the delay-sensitive service traffic during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the R-TWT service period underutilization ratio based on the transmission of the non-R-TWT member STA during the R-TWT service period corresponding to each R-TWT schedule of the m R-TWT schedules. Thus, STA may perform a subsequent transmission of the delay-sensitive service based on the R-TWT service period underutilization ratio based on the transmission of the non-R-TWT member STA during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the R-TWT service period underutilization ratio based on the transmission of the non-delay-sensitive service traffic during the R-TWT service period corresponding to each R-TWT schedule of the m R-TWT schedules. Thus, the STA may perform a subsequent transmission of the delay-sensitive service based on the R-TWT service period underutilization ratio based on the transmission of the non-delay-sensitive service traffic during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the channel utilization proportion during the R-TWT service period corresponding to each R-TWT schedule of the m R-TWT schedules. Thus, the STA may perform a subsequent transmission of the delay-sensitive service based on the channel utilization proportion during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the channel utilization proportion based on the transmission of the R-TWT member STA during the R-TWT service period corresponding to each R-TWT schedule of the m R-TWT schedules. Thus, STA may perform a subsequent transmission of the delay-sensitive service based on the channel utilization proportion based on the transmission of the R-TWT member STA during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the channel utilization proportion based on the transmission of the delay-sensitive service traffic during the R-TWT service period corresponding to each R-TWT schedule of the m R-TWT schedules. Thus, the STA may perform a subsequent transmission of the delay-sensitive service based on the channel utilization proportion based on the transmission of the delay-sensitive service traffic during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

For example, the channel utilization information during the R-TWT service periods corresponding to the m R-TWT schedules established in the first BSS includes: the channel clear proportion during the R-TWT service period corresponding to each R-TWT schedule of the m R-TWT schedules. Thus, the STA may perform a subsequent transmission of the delay-sensitive service based on the channel clear proportion during the R-TWT service period corresponding to each R-TWT schedule of the m R-TWT schedules (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, and the medium busy time proportion caused by interference excluding the internal transmission of the first BSS during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the R-TWT service period utilization ratio based on the transmission of the R-TWT member STA during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the R-TWT service period utilization ratio based on the transmission of the delay-sensitive service traffic during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the R-TWT service period underutilization ratio based on the transmission of the non-R-TWT member STA during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the R-TWT service period underutilization ratio based on the transmission of the non-delay-sensitive service traffic during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the channel utilization proportion during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the channel utilization proportion based on the transmission of the R-TWT member STA during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the channel utilization proportion based on the transmission of the delay-sensitive service traffic during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, and the channel clear proportion during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, the R-TWT service period utilization ratio based on the transmission of the R-TWT member STA during the R-TWT service period corresponding to each R-TWT schedule of the m R-TWT schedules, the R-TWT service period underutilization ratio based on the transmission of the non-R-TWT member STA during the R-TWT service period corresponding to each R-TWT schedule of the m R-TWT schedules, the channel utilization proportion based on the transmission of the R-TWT member STA during the R-TWT service period corresponding to each R-TWT schedule of the m R-TWT schedules, and the channel clear proportion during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by interference excluding the internal transmission of the first BSS during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the R-TWT service period underutilization ratio based on the transmission of the non-delay-sensitive service traffic during the R-TWT service period corresponding to each R-TWT schedule of the m R-TWT schedules, and the channel utilization proportion based on the transmission of the delay-sensitive service traffic during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

Specifically, for example, the channel utilization information during the R-TWT service periods corresponding to the m R-TWT schedules established in the first BSS includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by the interference excluding the internal transmission of the first BSS during the R-TWT service period corresponding to each R-TWT schedule of the m R-TWT schedules, the R-TWT service period utilization ratio based on the transmission of the R-TWT member STA during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the R-TWT service period underutilization ratio based on the transmission of the non-R-TWT member STA during the R-TWT service period corresponding to each R-TWT schedule of the m R-TWT schedules, the R-TWT service period underutilization ratio based on the transmission of the non-delay-sensitive service traffic during the R-TWT service period corresponding to each R-TWT schedule of the m R-TWT schedules, the channel utilization proportion during the R-TWT service period corresponding to each R-TWT schedule of the m R-TWT schedules, the channel utilization proportion based on the transmission of the R-TWT member STA during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, and the channel clear proportion during the R-TWT service period corresponding to each R-TWT schedule of the m R-TWT schedules. Thus, a subsequent transmission of the delay-sensitive service may be performed based on the acquired channel utilization information (e.g., selecting an AP and/or a link for the transmission of the delay-sensitive service traffic, or e.g., selecting broadcast TWT corresponding to a target R-TWT schedule established and intended to be joined by the target AP, or e.g., selecting broadcast TWT corresponding to a target R-TWT schedule established and intended to be joined by the target link, or e.g., selecting by the Non-AP MLD, a link mapped to the target TID in the uplink direction and/or downlink direction in the traffic identifier-to-link mapping process), to optimize the performance of the transmission of the delay-sensitive service based on the R-TWT.

In some embodiments, the service period load information of the delay-sensitive service further includes at least one of:

a number of R-TWT member STAs of R-TWT corresponding to each R-TWT schedule of the m R-TWT schedules, or available resource capability information of each R-TWT schedule of the m R-TWT schedules.

For example, the service period load information of the delay-sensitive service further includes: a number of R-TWT member STAs of R-TWT corresponding to each R-TWT schedule of the m R-TWT schedules. Specifically, in the subsequent transmission process for the delay-sensitive service, the R-TWT member STA is prioritized to perform the channel access, or the R-TWT member STA is prioritized to acquire a transmission opportunity, thereby optimizing the transmission of the delay-sensitive service traffic.

For example, the service period load information of the delay-sensitive service further includes: available resource capacity information of each R-TWT schedule of the m R-TWT schedules. Specifically, the available resource capability information of each R-TWT schedule of the m R-TWT schedules helps the STA select an AP that may accept future R-TWT membership establishment requests.

For example, the service period load information of the delay-sensitive service further includes: a number of R-TWT member STAs of R-TWT corresponding to each R-TWT schedule of the m R-TWT schedules and available resource capacity information of each R-TWT schedule of the m R-TWT schedules. Specifically, in the subsequent transmission process for the delay-sensitive service, the R-TWT member STA is prioritized to perform the channel access, or the R-TWT member STA is prioritized to acquire a transmission opportunity, thereby optimizing the transmission of the delay-sensitive service traffic. In addition, the available resource capability information of each R-TWT schedule of the m R-TWT schedules helps the STA to select an AP that may accept future R-TWT membership establishment requests.

Specifically, for example, the service period load information of the delay-sensitive service includes: the cumulative proportion of the duration during the R-TWT service period corresponding to each R-TWT schedule of the m R-TWT schedules, and the available resource capability information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the number of R-TWT member STAs of R-TWT corresponding to each R-TWT schedule of the m R-TWT schedules, and the available resource capability information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, and the available resource capability information of each R-TWT schedule of the m R-TWT schedules.

Specifically, for example, the service period load information of the delay-sensitive service includes: the transmission efficiency of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the transmission efficiency of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the medium busy time proportion caused by the interference excluding the internal transmission of the first BSS during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the medium busy time proportion caused by the interference excluding the internal transmission of the first BSS during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period utilization ratio based on the transmission of the R-TWT member STA during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period utilization ratio based on the transmission of the R-TWT member STA during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period utilization ratio based on the transmission of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period utilization ratio based on the transmission of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period underutilization ratio based on the transmission of the non-R-TWT member STA during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period underutilization ratio based on the transmission of the non-R-TWT member STA during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period underutilization ratio based on the transmission of the non-delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the R-TWT service period underutilization ratio based on the transmission of the non-delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the channel utilization proportion during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the channel utilization proportion during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the channel utilization proportion based on the transmission of the R-TWT member STA during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the channel utilization proportion based on the transmission of the R-TWT member STA during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the channel utilization proportion based on the transmission of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the channel utilization proportion based on the transmission of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the channel clear proportion during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the channel clear proportion during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the number of R-TWT member STAs of R-TWT corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the medium busy time proportion caused by the interference excluding the internal transmission of the first BSS during the R-TWT service period corresponding to each R-TWT schedule of the m R-TWT schedules, and the transmission efficiency of the delay-sensitive service traffic during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by the interference excluding the internal transmission of the first BSS during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by the interference excluding the internal transmission of the first BSS during the R-TWT service period corresponding to each R-TWT schedule of the m R-TWT schedules, the R-TWT service period utilization ratio based on the transmission of the R-TWT member STA during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the R-TWT service period underutilization ratio based on the transmission of the non-R-TWT member STA during the R-TWT service period corresponding to each R-TWT schedule of the m R-TWT schedules, the R-TWT service period underutilization ratio based on the transmission of the non-delay-sensitive service traffic during the R-TWT service period corresponding to each R-TWT schedule of the m R-TWT schedules, the channel utilization proportion during the R-TWT service period corresponding to each R-TWT schedule of the m R-TWT schedules, the channel utilization proportion based on the transmission of the R-TWT member STA during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, the channel clear proportion during the R-TWT service period corresponding to each R-TWT schedule of the m R-TWT schedules, and the available resource capacity information of each R-TWT schedule of the m R-TWT schedules.

Specifically, for example, the service period load information of the delay-sensitive service includes: the cumulative proportion of the duration during the R-TWT service period corresponding to each R-TWT schedule of the m R-TWT schedules, the proportion of the pre-scheduled transmission time of the delay-sensitive service traffic during the R-TWT service period corresponding to each R-TWT schedule of the m R-TWT schedules, the transmission efficiency of the delay-sensitive service traffic during the R-TWT service period corresponding to each R-TWT schedule of the m R-TWT schedules, the medium busy time proportion caused by the interference excluding the internal transmission of the first BSS during the R-TWT service period corresponding to each R-TWT schedule of the m R-TWT schedules, the R-TWT service period utilization ratio based on the transmission of the R-TWT member STA during the R-TWT service period corresponding to each R-TWT schedule of the m R-TWT schedules, the R-TWT service period utilization ratio based on the transmission of the delay-sensitive service traffic during the R-TWT service period corresponding to each R-TWT schedule of the m R-TWT schedules, the R-TWT service period underutilization ratio based on the transmission of the non-R-TWT member STA during the R-TWT service period corresponding to each R-TWT schedule of the m R-TWT schedules, the R-TWT service period underutilization ratio based on the transmission of the non-delay-sensitive service traffic during the R-TWT service period corresponding to each R-TWT schedule of the m R-TWT schedules, the channel utilization proportion during the R-TWT service period corresponding to each R-TWT schedule of the m R-TWT schedules, the channel utilization proportion based on the transmission of the R-TWT member STA during the R-TWT service period corresponding to each R-TWT schedule of the m R-TWT schedules, the channel utilization proportion based on the transmission of the delay-sensitive service traffic during the R-TWT service period corresponding to each R-TWT schedule of the m R-TWT schedules, and the channel clear proportion during the R-TWT service period corresponding to each R-TWT schedule of the m R-TWT schedules, the number of R-TWT member STAs of R-TWT corresponding to each R-TWT schedule of the m R-TWT schedules, and the available resource capacity information of each R-TWT schedule of the m R-TWT schedules.

In some embodiments, available resource capability information of a j-th R-TWT schedule among the m R-TWT schedules includes an amount of available remaining medium time that is available for a corresponding new R-TWT member STA to join an R-TWT service period, during the R-TWT service period corresponding to the j-th R-TWT schedule, where j is a positive integer, and j≤m.

In some embodiments, the service period load information of the delay-sensitive service is carried by a second element in a second frame;

where in a case where m> 1, the second element includes an R-TWT service period load list field, and the R-TWT service period load list field includes m R-TWT service period load fields; or, in a case where m=1, the second element includes an R-TWT service period load field;

where the R-TWT service period load field includes at least one of: a broadcast TWT identifier field, a field for an R-TWT service period load additional parameter present bitmap, a field for a number of R-TWT member STAs, a field for a cumulative proportion of duration of a current R-TWT service period, a field for a proportion of pre-scheduled transmission time of a delay-sensitive service traffic during the R-TWT service period, a field for an interference time proportion excluding an internal transmission of the BSS during the R-TWT service period, a field for transmission efficiency of a delay-sensitive service traffic during the R-TWT service period, a field for an available resource capability of a current R-TWT schedule, a field for an R-TWT service period utilization ratio based on a transmission of an R-TWT member STA, a field for an R-TWT service period utilization ratio based on a transmission of a delay-sensitive service traffic, a field for an R-TWT service period underutilization ratio based on a transmission of a non-R-TWT member STA, a field for an R-TWT service period underutilization ratio based on a transmission of a non-delay-sensitive service traffic, a field for a channel utilization proportion during the R-TWT service period, a field for a channel utilization proportion based on a transmission of an R-TWT member STA during the R-TWT service period, a field for a channel utilization proportion based on a transmission of a delay-sensitive service traffic during the R-TWT service period, or a field for a channel clear proportion during the R-TWT service period;

where the broadcast TWT identifier field is used to indicate a broadcast TWT identifier corresponding to an R-TWT schedule for a currently provided R-TWT service period load parameter, the field for the R-TWT service period load additional parameter present bitmap is used to indicate whether at least one field in a j-th R-TWT service period load field is present, the field for the number of R-TWT member STAs is used to indicate a number of R-TWT member STAs corresponding to the current R-TWT schedule, the field for the cumulative proportion of the duration of the current R-TWT service period is used to indicate a cumulative proportion of duration during the R-TWT service period corresponding to the current R-TWT schedule, the field for the proportion of the pre-scheduled transmission time of the delay-sensitive service traffic during the R-TWT service period is used to indicate a proportion of the pre-scheduled transmission time of the delay-sensitive service traffic during the R-TWT service period corresponding to the current R-TWT schedule, the field for the interference time proportion excluding the internal transmission of the BSS during the R-TWT service period is used to indicate a medium busy time proportion caused by interference excluding the internal transmission of the first BSS during the R-TWT service period corresponding to the current R-TWT schedule, the field for the transmission efficiency of the delay-sensitive service traffic during the R-TWT service period is used to indicate transmission efficiency of the delay-sensitive service traffic during the R-TWT service period corresponding to the current R-TWT schedule, the field for the available resource capability of the current R-TWT schedule is used to indicate available resource capability information of the current R-TWT schedule, the field for the R-TWT service period utilization ratio based on the transmission of the R-TWT member STA is used to indicate an R-TWT service period utilization ratio based on the transmission of the R-TWT member STA during the R-TWT service period corresponding to the current R-TWT schedule, the field for the R-TWT service period utilization ratio based on thee transmission of the delay-sensitive service traffic is used to indicate an R-TWT service period utilization ratio based on the transmission of the delay-sensitive service traffic during the R-TWT service period corresponding to the current R-TWT schedule, the field for the R-TWT service period underutilization ratio based on the transmission of the non-R-TWT member STA is used to indicate an R-TWT service period underutilization ratio based on the transmission of the non-R-TWT member STA during the R-TWT service period corresponding to the current R-TWT schedule, the field for the R-TWT service period underutilization ratio based on the transmission of the non-delay-sensitive service traffic is used to indicate an R-TWT service period underutilization ratio based on the transmission of the non-delay-sensitive service traffic during the R-TWT service period corresponding to the current R-TWT schedule, the field for the channel utilization proportion during the R-TWT service period is used to indicate a channel utilization proportion during the R-TWT service period corresponding to the current R-TWT schedule, the field for the channel utilization proportion based on the transmission of then R-TWT member STA during the R-TWT service period is used to indicate a channel utilization proportion based on the transmission of the R-TWT member STA during the R-TWT service period corresponding to the current R-TWT schedule, the field for the channel utilization proportion based on the transmission of the delay-sensitive service traffic during the R-TWT service period is used to indicate a channel utilization proportion based on the transmission of the delay-sensitive service traffic during the R-TWT service period corresponding to the current R-TWT schedule, and the field for the channel clear proportion during the R-TWT service period is used to indicate a channel clear proportion during the R-TWT service period corresponding to the current R-TWT schedule, where j is a positive integer, and j≤m.

In some embodiments, at least one field in the R-TWT service period load field includes some or all of fields including:

the field for the R-TWT service period utilization ratio based on the transmission of the R-TWT member STA, the field for the R-TWT service period utilization ratio based on the transmission of the delay-sensitive service traffic, the field for the R-TWT service period underutilization ratio based on the transmission of the non-R-TWT member STA, the field for the R-TWT service period underutilization ratio based on the transmission of the non-delay-sensitive service traffic, the field for the channel utilization proportion during the R-TWT service period, the field for the channel utilization proportion based on the transmission of the R-TWT member STA during the R-TWT service period, the field for the channel utilization proportion based on the transmission of the delay-sensitive service traffic during the R-TWT service period, and the field for the channel clear proportion during the R-TWT service period.

That is, in this embodiment, the at least one field in the R-TWT service period load field is an optional field.

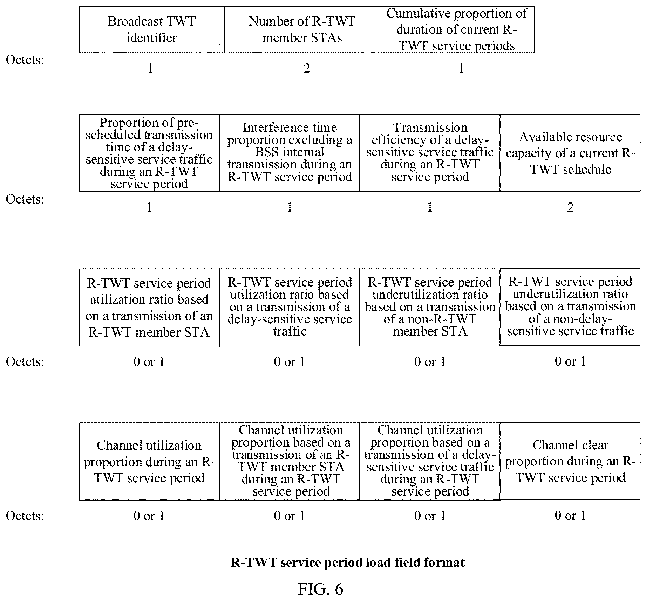

In some embodiments, in a case where the second element is an R-TWT service period load element (i.e., m> 1), the R-TWT service period load field does not include the field for the R-TWT service period load additional parameter present bitmap; and/or, the R-TWT service period load field includes the broadcast TWT identifier field. For example, the R-TWT service period load field may be as shown in FIG. 6.

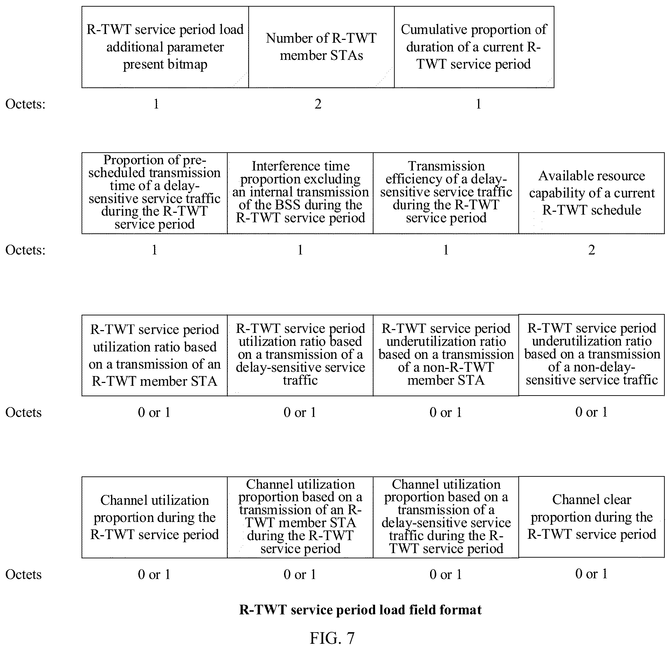

In some embodiments, in a case where the second element is an R-TWT service period load field (i.e., m=1), the R-TWT service period load field includes the field for the R-TWT service period load additional parameter present bitmap; and/or, the R-TWT service period load field does not include the broadcast TWT identifier field. For example, the R-TWT service period load field may be as shown in FIG. 7.

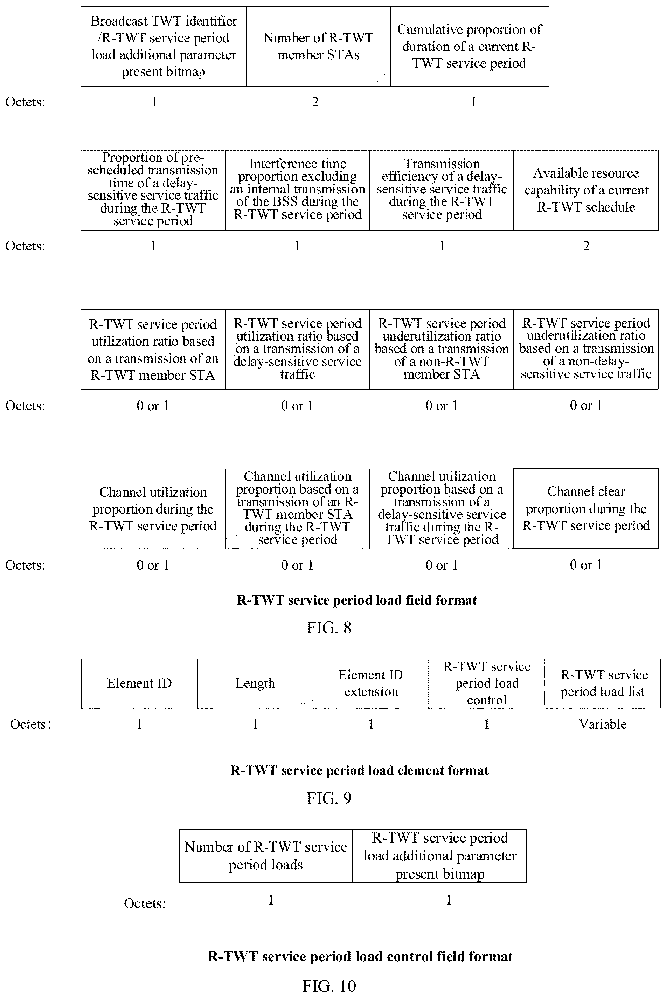

In some embodiments, the R-TWT service period load field may also be as shown in FIG. 8, and in a case where the second element is an R-TWT service period load element (i.e., m > 1), it may be simplified as FIG. 6; in a case where the second element includes an R-TWT service period load field (i.e., m=1), it may be simplified as FIG. 7.

For example, as shown in FIG. 7, the field for the R-TWT service period load additional parameter present bitmap contains a bitmap, indicating that an i-th field starting from "the field for the R-TWT service period utilization ratio based on the transmission of the R-TWT member STA" is present in the R-TWT service period load field contained in the R-TWT service period load list field, and the i-th item of the bitmap is set to 1. For each field starting from "the field for the R-TWT service period utilization ratio based on the transmission of the R-TWT member STA", the value 0 is reserved.

In some embodiments, the second element is an R-TWT service period load element, or the second element is an R-TWT element. Certainly, the second element may also be other elements, which is not limited in the embodiments of the present disclosure.

For example, in a case where m > 1, the second element is the R-TWT service period load element; and in a case where m=1, the second element is the R-TWT element.

In some embodiments, in a case where the second element is the R-TWT service period load element (i.e., m > 1), the second element further includes an R-TWT service period load control field, where the R-TWT service period load control field includes at least one of: a field for a number of R-TWT service period loads, or a field for an R-TWT service period load additional parameter present bitmap;
the field for the number of R-TWT service period loads is used to indicate a number of R-TWT service period load fields contained in the R-TWT service period load list field, and the field for the R-TWT service period load additional parameter present bitmap is used to indicate whether at least one field of the R-TWT service period load fields contained in the R-TWT service period load list field is present.

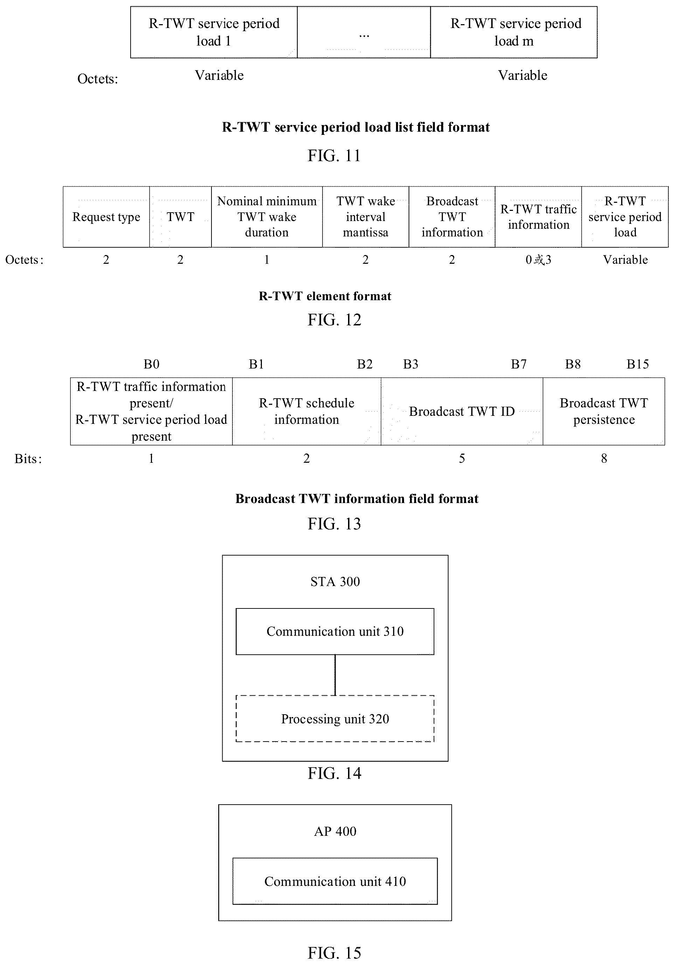

In some embodiments, the R-TWT service period load element may be as shown in FIG. 9, where the R-TWT service period load element includes an R-TWT service period load control field (occupying 2 bytes) and an R-TWT service period load list field (occupying a variable number of bytes). In some embodiments, the R-TWT service period load control field may be as shown in FIG. 10, where the R-TWT service period load control field includes a field for a number of R-TWT service period loads (occupying 1 byte) and a field for an R-TWT service period load additional parameter present bitmap (occupying 1 byte). In some embodiments, the R-TWT service period load list field may be as shown in FIG. 11, where the R-TWT service period load list field includes m R-TWT service period load fields, where each R-TWT service period load field may be as shown in FIG. 6.

Specifically, for example, as shown in FIG. 9, the field for the R-TWT service period load additional parameter present bitmap contains a bitmap, indicating that an i-th field starting from "the field for the R-TWT service period utilization ratio based on the transmission of the R-TWT member STA" is present in the R-TWT service period load field contained in the R-TWT service period load list field, and the i-th item of the bitmap is set to 1. For each field starting from "the field for the R-TWT service period utilization ratio based on the transmission of the R-TWT member STA", the value 0 is reserved.

In some embodiments, in a case where the second element is the R-TWT element, m=1;
where the second element further includes an R-TWT service period load present field, and the R-TWT service period load present field is used to indicate whether the R-TWT service period load field is present in the second element.

For example, the R-TWT service period load present field occupies 1 bit; where the value 0 indicates that the R-TWT service period load field is present in the second element (i.e., the R-TWT element), and the value 1 indicates that the R-TWT service period load field is not present in the second element (i.e., the R-TWT element); or, the value 1 indicates that the R-TWT service period load field is present in the second element (i.e., the R-TWT element), and the value 0 indicates that the R-TWT service period load field is not present in the second element (i.e., the R-TWT element).

Specifically, for example, the R-TWT element may be as shown in FIG. 12, including an R-TWT traffic information field (occupying 0 or 3 bytes, that is, the field is an optional field) and an R-TWT service period load field (a number of occupied fields is variable). Specifically, a "restricted TWT service period load (Restricted TWT load) field" is added to the TWT element, and a "restricted TWT service period load (Restricted TWT load)" field is added to the restricted TWT parameter set field of the restricted TWT element.

In some embodiments, the R-TWT service period load present field is in a broadcast TWT information field of the second element.

In some embodiments, the R-TWT service period load present field and an R-TWT traffic information present field share at least one bit in the broadcast TWT information field, where in a case where the R-TWT traffic information field is not contained in the second element, the at least one bit in the broadcast TWT information field only corresponds to the R-TWT service period load present field.

Specifically, for example, the broadcast TWT information field may be as shown in FIG. 13. Specifically, the "restricted TWT traffic information present (Restricted TWT Traffic Info Present)" subfield in the broadcast TWT information subfield (Broadcast TWT Info subfield) of the R-TWT element is updated to an "R-TWT traffic information present (Restricted TWT Traffic Info Present)/R-TWT service period load present" subfield. In a case where the R-TWT period information is announced through a management frame, that is, in a case where the negotiation type subfield of the TWT element is set to 2, the restricted TWT parameter set field of the restricted TWT element does not include the restricted TWT traffic information field, and meanwhile, the "restricted TWT traffic information present (Restricted TWT Traffic Info Present)/restricted TWT service period load present" field of the broadcast TWT information field is indicated as the "restricted TWT service period load present" field. In a case where the value of the "restricted TWT service period load present" field is 1, it indicates that the restricted TWT parameter set field of the restricted TWT element contains the restricted TWT service period load (Restricted TWT load) field; in a case where the value of the "restricted TWT service period load present" field is 0, it indicates that the restricted TWT parameter set field of the restricted TWT element does not contain the restricted TWT service period load (Restricted TWT load) field.

In some embodiments, the second frame is one of: a beacon frame, a probe response frame, an association response frame, and a reassociation response frame. Certainly, the second frame may also be other frames, which is not limited in the embodiments of the present disclosure.

In some embodiments, a cumulative proportion of duration during an R-TWT service period corresponding to a j-th R-TWT schedule among the m R-TWT schedules is determined based on at least one of: cumulative duration of the duration during the R-TWT service period corresponding to the j-th R-TWT schedule, measurement duration corresponding to the j-th R-TWT schedule, a number of consecutive beacon intervals for measuring the duration of the R-TWT service period and a channel application condition, or duration for an STA to schedule a beacon transmission; where j is a positive integer and j≤m.

For example, the cumulative proportion of the duration during the R-TWT service period corresponding to the j-th R-TWT schedule among the m R-TWT schedules is determined based on the cumulative duration of the duration of the R-TWT service period corresponding to the j-th R-TWT schedule, the measurement duration corresponding to the j-th R-TWT schedule.

For another example, the cumulative proportion of the duration during the R-TWT service period corresponding to the j-th R-TWT schedule among the m R-TWT schedules is determined based on the cumulative duration of the duration during the R-TWT service period corresponding to the j-th R-TWT schedule, the number of consecutive beacon intervals for measuring the duration of the R-TWT service period and the channel application condition, and the duration for the STA to schedule the beacon transmission.

In some embodiments, the cumulative proportion of the duration during the R-TWT service period corresponding to the j-th R-TWT schedule among the m R-TWT schedules is determined based on the following formula 6:

$$the\ cumulative\ proportion\ of\ the\ duration\ of\ the\ current\ R-TWT\ service\ period$$

$$= \left\lfloor \frac{\sum_{i=1}^{s} T_{SP}^{i}}{dot11ChannelUtilizationBeaconsInterval \times dot11BeaconPeriod \times 1024} \times 255 \right\rfloor$$

where $T_{SP}^{i}$ represents duration of an i-th service period in R-TWT corresponding to the j-th R-TWT schedule (e.g., in units of microseconds), $\sum_{i=1}^{s} T_{SP}^{i}$ represents cumulative duration of the duration during the R-TWT service period corresponding to the j-th R-TWT schedule (e.g., in units of microseconds), s represents a number of service periods in the R-TWT corresponding to the j-th R-TWT schedule, s is a positive integer, *dot11ChannelUtilizationBeaconsInterval* represents a number of consecutive beacon intervals used to measure the duration of the R-TWT service period and the channel application condition, *dot11BeaconPeriod* represents the duration for the STA to schedule the beacon transmission (e.g., in units of TUs), a time proportion can be represented by a linear ratio of 255, and 255 represents 100%.

In some embodiments, a proportion of pre-scheduled transmission time of a delay-sensitive service traffic during an R-TWT service period corresponding to a j-th R-TWT schedule among the m R-TWT schedules is determined based on at least one of: pre-scheduled transmission time of the delay-sensitive service traffic during the R-TWT service period corresponding to the j-th R-TWT schedule, or a given total R-TWT service period duration during the R-TWT service period corresponding to the j-th R-TWT schedule; where j is a positive integer and j≤m.

In some embodiments, the proportion of the pre-scheduled transmission time of the delay-sensitive service traffic

during the R-TWT service period corresponding to the j-th R-TWT schedule among the m R-TWT schedules is determined based on the following formula 7:

$$the\ proportion\ of\ the\ pre-scheduled\ transmission\ time\ of\ the\ delay$$
$$-sensitive\ service\ traffic\ during\ the\ R-TWT\ service\ period$$
$$=\left[\frac{the\ pre-scheduled\ transmission\ time\ of\ the\ delay-sensitive\ service\ traffic}{given\ total\ R-TWT\ service\ period\ duration}\right.$$

$$\left.\times\ 255\right]=\left[\ (1-\frac{\sum_{i=1}^{s}T_{SP-Scheduled}^{i}}{\sum_{i=1}^{s}T_{SP}^{i}})\ \times 255\right]$$

where $T_{SP-Scheduled}^{i}$ represents pre-scheduled transmission time of a delay-sensitive service traffic during an i-th service period in R-TWT corresponding to the j-th R-TWT schedule, $\sum_{i=1}^{s}T_{SP-Scheduled}^{i}$ represents pre-scheduled transmission time of the delay-sensitive service traffic during the R-TWT service period corresponding to the j-th R-TWT schedule, $T_{SP}^{i}$ represents duration of the i-th service period in the R-TWT corresponding to the j-th R-TWT schedule, $\sum_{i=1}^{s}T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the pre-scheduled transmission time of the delay-sensitive service traffic during the R-TWT service period refers to pre-scheduled transmission time of the delay-sensitive service traffic between the AP and the member STA during the R-TWT service period corresponding to the R-TWT schedule, which may be determined based on the uplink and/or downlink delay-sensitive service traffic requirements between the AP and the member STA, according to the transmission bandwidth and rate, MCS, NSS and other transmission parameters supported between the AP and the member STA. The uplink and/or downlink delay-sensitive service traffic requirements between the AP and the member STA may be determined by to-be-transmitted flow characteristics and QoS information in a QoS characteristics element carried when a SCS stream (if any) corresponding to the delay-sensitive service traffic is established through an SCS, and/or based on traffic conditions related to the buffer delay-sensitive service traffic reported by the station, such as buffer status report (BSR), etc.

In some embodiments, a medium busy time proportion caused by interference excluding the internal transmission of the first BSS during an R-TWT service period corresponding to a j-th R-TWT schedule of the m R-TWT schedules is determined based on at least one of: channel busy time during the R-TWT service period corresponding to the j-th R-TWT schedule, medium busy time caused by a transmission between an AP and an R-TWT member STA during the R-TWT service period corresponding to the j-th R-TWT schedule, medium busy time caused by a transmission between the AP and a non-R-TWT member STA during the R-TWT service period corresponding to the j-th R-TWT schedule, or a given total R-TWT service period duration during the R-TWT service period corresponding to the j-th R-TWT schedule; where j is a positive integer, and j≤m.

In some embodiments, the medium busy time proportion caused by interference excluding the internal transmission of the first BSS during an R-TWT service period corresponding to a j-th R-TWT schedule of the m R-TWT schedules is determined based on the following formula 8:

$$interference\ time\ proportion\ excluding\ the\ transmission\ of\ the\ BSS$$
$$during\ the\ R-TWT\ service\ period=$$
$$\left[\frac{\sum_{i=1}^{s}T_{SP-Channelbusy}^{i}-T_{busy}^{1}-T_{busy}^{3}}{\sum_{i=1}^{s}T_{SP}^{i}}\times 255\right]$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{busy}^{1}$ represents medium busy time caused by the transmission between the AP and the R-TWT member STA during the R-TWT service period corresponding to the j-th R-TWT schedule, $T_{busy}^{3}$ represents medium busy time caused by the transmission between the AP and the non-R-TWT member STA during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion may be represented by a linear ratio of 255, and 255 represents 100%.

Specifically, for example, the interference (e.g., OBSS interference) time excluding the transmission of the BSS during the R-TWT service period refers to time when the medium is busy caused by interference (e.g., OBSS interference) excluding the transmission of the BSS during the R-TWT service period, where the medium busyness is sensed by the AP through the indication of the physical or virtual carrier sensing (CS) mechanism.

In some embodiments, transmission efficiency of a delay-sensitive service traffic during an R-TWT service period corresponding to a j-th R-TWT schedule among the m R-TWT schedules is determined based on at least one of: medium busy time caused by a transmission of the delay-sensitive service traffic between an AP and an R-TWT member STA during the R-TWT service period corresponding to the j-th R-TWT schedule, or pre-scheduled transmission time of the delay-sensitive service traffic during the R-TWT service period corresponding to the j-th R-TWT schedule; where j is a positive integer, and j≤m.

In some embodiments, the transmission efficiency of the delay-sensitive service traffic during the R-TWT service period corresponding to the j-th R-TWT schedule among the m R-TWT schedules is determined based on the following formula 9:

$$
\begin{aligned}
&the\ transmission\ efficiency\ of\ the\ delay-sensitive\ service\ traffic\ during\ the\ R \\
&-TWT\ service\ period \\
&= \left[ \frac{medium\ busy\ time\ caused\ by\ the\ transmission\ of\ the\ delay-sensitive\ service\ traffic\ between\ the\ AP\ and\ the\ R-TWT\ member\ STA}{the\ pre-scheduled\ transmission\ time\ of\ the\ delay-sensitive\ service\ traffic\ during\ the\ R\ TWT-service\ period} \right. \\
&\left. \times 255 \right] = \left[ \frac{T_{busy}^{2}}{\sum_{i=1}^{s} T_{SP-Scheduled}^{i}} \times 255 \right]
\end{aligned}
$$

where $T_{busy}^{2}$ represents medium busy time caused by the transmission of the delay-sensitive service traffic between the AP and the R-TWT member STA during the R-TWT service period corresponding to the j-th R-TWT schedule, $T_{SP-Scheduled}^{i}$ represents pre-scheduled transmission time of the delay-sensitive service traffic during an i-th service period in R-TWT corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the transmission efficiency of the delay-sensitive service traffic during the R-TWT service period refers to a proportion of medium busy time caused by the transmission of the delay-sensitive service traffic between the AP and the member STA with respect to the pre-scheduled transmission time of the delay-sensitive service traffic during the R-TWT service period.

In some embodiments, an R-TWT service period utilization ratio based on a transmission of an R-TWT member STA during an R-TWT service period corresponding to a j-th R-TWT schedule among the m R-TWT schedules is determined based on at least one of: medium busy time caused by a transmission between an AP and an R-TWT member STA during the R-TWT service period corresponding to the j-th R-TWT schedule, or a given total R-TWT service period duration during the R-TWT service period corresponding to the j-th R-TWT schedule;

where j is a positive integer, and j≤m.

In some embodiments, the R-TWT service period utilization ratio based on the transmission of the R-TWT member STA during the R-TWT service period corresponding to the j-th R-TWT schedule among the m R-TWT schedules is determined based on the following formula 10:

$$
the\ R-TWT\ service\ period\ utilization\ ratio\ based\ on\ the\ transmission\ of
$$

$$
the\ R-TWT\ member\ STA\ =\left[\frac{T_{busy}^1}{\sum_{i=1}^s T_{SP}^i}\times 255\right]
$$

where $T_{busy}^1$ represents medium busy time caused by the transmission between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^s T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the field for the R-TWT service period utilization (R-TWT SP Utilization) based on the transmission of the member STA is used to define the time proportion of medium busyness caused by the transmission between the AP and the member STA corresponding to the restricted TWT schedule, which is sensed by the AP, during the R-TWT service period corresponding to the restricted TWT schedule, where the medium busyness may be indicated by the physical carrier sensing (CS) mechanism, and the time proportion may be represented by a linear ratio of 255 (255 represents 100%).

In some embodiments, an R-TWT service period utilization ratio based on a transmission of a delay-sensitive service traffic during an R-TWT service period corresponding to a j-th R-TWT schedule among the m R-TWT schedules is determined based on at least one of: medium busy time caused by the transmission of the delay-sensitive service traffic between an AP and an R-TWT member STA during the R-TWT service period corresponding to the j-th R-TWT schedule, or a given total R-TWT service period duration during the R-TWT service period corresponding to the j-th R-TWT schedule; where j is a positive integer, and j≤m.

In some embodiments, the R-TWT service period utilization ratio based on the transmission of the delay-sensitive service traffic during the R-TWT service period corresponding to the j-th R-TWT schedule among the m R-TWT schedules is determined based on the following formula 11:

$$
the\ R-TWT\ service\ period\ utilization\ ratio\ based\ on\ the\ transmission
$$

$$
of\ the\ delay-sensitive\ service\ traffic =
$$

$$
\left[\frac{T_{busy}^2}{\sum_{i=1}^s T_{SP}^i}\times 255\right]
$$

where $T_{busy}^2$ represents medium busy time caused by the transmission of the delay-sensitive service traffic between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^s T_{SP}^i$ represents cumulative duration of duration during the R-TWT service period corresponding to the j-th R-TWT, s represents a number of service periods in the R-TWT corresponding to the j-th R-TWT schedule, s is a positive integer, a time proportion can be represented by a linear ratio of 255, and 255 represents 100%.

Specifically, for example, the field for the R-TWT service period utilization (R-TWT SP Utilization) based on the transmission of the delay-sensitive service traffic is used to define the time proportion of medium busyness caused by the transmission of the delay-sensitive service traffic between the AP and the member STA corresponding to the restricted TWT schedule, which is sensed by the AP, during the R-TWT service period corresponding to the restricted TWT schedule, where the medium busyness may be indicated by the physical carrier sensing (CS) mechanism, and the time proportion may be represented by a linear ratio of 255 (255 represents 100%).

In some embodiments, an R-TWT service period underutilization ratio based on a transmission of a non-R-TWT member STA during an R-TWT service period corresponding to a j-th R-TWT schedule among the m R-TWT schedules is determined based on at least one of: medium busy time caused by the transmission between an AP and the non-R-TWT member STA during the R-TWT service period corresponding to the j-th R-TWT schedule, or a given total R-TWT service period duration during the R-TWT service period corresponding to the j-th R-TWT schedule;
where j is a positive integer, and j≤m.

In some embodiments, the R-TWT service period underutilization ratio based on the transmission of the non-R-TWT member STA during the R-TWT service period corresponding to the j-th R-TWT schedule among the m R-TWT schedules is determined based on the following formula 12:

$$the\ R-TWT\ service\ period\ underutilization\ ratio\ based\ on$$

$$the\ transmission\ of\ the\ non-R-TWT\ member\ STA = \left\lceil \frac{T_{busy}^3}{\sum_{i=1}^{s} T_{SP}^i} \times 255 \right\rceil$$

where $T_{busy}^3$ represents medium busy time caused by the transmission between the AP and the non-R-TWT member STA during the R-TWT service period corresponding to the j-th R-TWT schedule, $T_{SP}^i$ represents duration of the i-th service period in R-TWT corresponding to the j-th R-TWT schedule, $\sum_{i=1}^{s} T_{SP}^i$ represents cumulative duration of duration during the R-TWT service period corresponding to the j-th R-TWT, s represents a number of service periods in the R-TWT corresponding to the j-th R-TWT schedule, s is a positive integer, a time proportion can be represented by a linear ratio of 255, and 255 represents 100%.

Specifically, for example, the field for the R-TWT service period underutilization (R-TWT SP Underutilization) based on the transmission of the non-member STA is used to define the time proportion of medium busyness caused by the transmission between the AP and the non-member STA corresponding to the restricted TWT schedule, which is sensed by the AP, during the R-TWT service period corresponding to the restricted TWT schedule, where the medium busyness may be indicated by the physical carrier sensing (CS) mechanism, and the time proportion may be represented by a linear ratio of 255 (255 represents 100%).

In some embodiments, an R-TWT service period underutilization ratio based on a transmission of a non-delay-sensitive service traffic during an R-TWT service period corresponding to a j-th R-TWT schedule among the m R-TWT schedules is determined based on at least one of: medium busy time caused by a transmission between an AP and a non-R-TWT member STA during the R-TWT service period corresponding to the j-th R-TWT schedule, medium busy time caused by the transmission of the non-delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule;
where j is a positive integer and j≤m.

In some embodiments, the R-TWT service period underutilization ratio based on the transmission of the non-delay-sensitive service traffic during the R-TWT service period corresponding to the j-th R-TWT schedule among the m R-TWT schedules is determined based on the following formula 13:

$$the\ R-TWT\ service\ period\ underutilization\ ratio\ based\ on$$

$$the\ transmission\ of\ the\ non-delay-sensitive\ service\ traffic =$$

$$\left\lceil \frac{T_{busy}^4}{\sum_{i=1}^{s} T_{SP}^i} \times 255 \right\rceil$$

where $T_{busy}^4$ represents medium busy time caused by the transmission between the AP and the non-R-TWT member STA and the medium busy time caused by the transmission of the non-delay-sensitive service traffic between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^{s} T_{SP}^i$ represents cumulative duration of duration during the R-TWT service period corresponding to the j-th R-TWT, s represents a number of service periods in the R-TWT corresponding to the j-th R-TWT schedule, s is a positive integer, a time proportion can be represented by a linear ratio of 255, and 255 represents 100%.

Specifically, for example, the field for the R-TWT service period underutilization (R-TWT SP Underutilization) based on the transmission of the non-delay-sensitive service traffic is used to define the time proportion of medium busyness caused by the transmission between the AP and the non-member STA corresponding to the restricted TWT schedule and the transmission of the non-delay-sensitive service traffic between the AP and the member STA corresponding to the restricted TWT schedule, which is sensed by the AP, during the R-TWT service period corresponding to the restricted TWT schedule, where the medium busyness may be indicated by the physical carrier sensing (CS) mechanism, and the time proportion may be represented by a linear ratio of 255 (255 represents 100%).

In some embodiments, a channel utilization proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;

where j is a positive integer and j≤m.

In some embodiments, the channel utilization proportion during the R-TWT service period corresponding to the j-th R-TWT schedule among the m R-TWT schedules is determined based on the following formula 14:

$$the\ channel\ utilization\ proportion\ during\ the\ R-TWT\ service\ period =$$

$$\left[ \frac{\sum_{i=1}^{s} T_{SP-Channelbusy}^{i}}{\sum_{i=1}^{s} T_{SP}^{i}} \times 255 \right]$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the field for the channel utilization proportion during the R-TWT service period is used to define a time proportion of medium busyness which is sensed by the AP, during the R-TWT service period corresponding to the restricted TWT schedule, where the medium busyness is sensed by the AP through the indication of the physical or virtual carrier sensing (CS) mechanism, and the time proportion may be represented by a linear ratio of 255 (255 represents 100%).

In some embodiments, a channel utilization proportion based on a transmission of an R-TWT member STA during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission between an AP and the R-TWT member STA during the R-TWT service period corresponding to the j-th R-TWT schedule;

where j is a positive integer and j≤m.

In some embodiments, the channel utilization proportion based on the transmission of the R-TWT member STA during the R-TWT service period corresponding to the j-th R-TWT schedule among the m R-TWT schedules is determined based on the following formula 15:

...

$$\textit{the channel utilization proportion based on the transmission of the R}$$

$$- \textit{TWT member STA during the R} - \textit{TWT service period}$$

$$= \left[ \frac{\begin{array}{c} \textit{medium busy time caused by the transmission between the AP} \\ \textit{and the R} - \textit{TWT member STA} \end{array}}{\textit{channel busy time during the R} - \textit{TWT service period}} \right.$$

$$\left. \times 255 \right] = \left[ \frac{T^1_{busy}}{\left[ \sum_{i=1}^{s} T^i_{SP-Channelbusy} \right]} \times 255 \right]$$

where $T^1_{busy}$ represents medium busy time caused by the transmission between the AP and the R-TWT member STA during the R-TWT service period corresponding to the j-th R-TWT schedule, $T^i_{SP-Channelbusy}$ represents channel busy time during an i-th service period in R-TWT corresponding to the j-th R-TWT schedule, $\sum_{i=1}^{s} T^i_{SP-Channelbusy}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the field for the channel utilization proportion based on the transmission of the member STA during the R-TWT service period is used to define a proportion of time of medium busyness caused by the transmission between the AP and the member STA corresponding to the restricted TWT schedule, which is sensed by the AP, during the R-TWT service period corresponding to the restricted TWT schedule, with respect to the channel busy time, where the medium busyness caused by the transmission may be indicated by the physical carrier sensing (CS) mechanism, and the channel busyness is medium busyness sensed by the AP through the indication of the physical or virtual carrier sensing (CS) mechanism, where the time proportion may be represented by a linear ratio of 255 (255 represents 100%).

In some embodiments, a channel utilization proportion based on a transmission of a delay-sensitive service traffic during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission of the delay-sensitive service traffic between an AP and an R-TWT member STA during the R-TWT service period corresponding to the j-th R-TWT schedule;
where j is a positive integer, and j≤m.

In some embodiments, the channel utilization proportion based on the transmission of the delay-sensitive service traffic during the R-TWT service period corresponding to the j-th R-TWT schedule among the m R-TWT schedules is determined based on the following formula 16:

$$\textit{the channel utilization proportion based on the transmission of the delay}$$

$$- \textit{sensitive service traffic during the R} - \textit{TWT service period}$$

$$= \left[ \frac{\begin{array}{c} \textit{medium busy time caused by the transmission of the delay} - \textit{sensitive service traffic} \\ \textit{between the AP and the R} - \textit{TWT member STA} \end{array}}{\textit{channel busy time during the R} - \textit{TWT service period}} \right.$$

$$\left. \times 255 \right] = \left[ \frac{T^2_{busy}}{\left[ \sum_{i=1}^{s} T^i_{SP-Channelbusy} \right]} \times 255 \right]$$

where $T^2_{busy}$ represents medium busy time caused by the transmission of the delay-sensitive service traffic between the AP and the R-TWT member STA during the R-TWT service period corresponding to the j-th R-TWT schedule,

$T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the field for the channel utilization proportion based on the transmission of the delay-sensitive service traffic during the R-TWT service period is used to define a proportion of time of medium busy caused by the transmission of the delay-sensitive service traffic between the AP and the member STA corresponding to the restricted TWT schedule, which is sensed by the AP, during the R-TWT service period corresponding to the restricted TWT schedule, with respect to the channel busy time, where the medium busyness caused by the transmission may be indicated by the physical carrier sensing (CS) mechanism, and the channel busyness is medium busyness sensed by the AP through the indication of the physical or virtual carrier sensing (CS) mechanism, and the time proportion may be represented by a linear ratio of 255 (255 represents 100%).

In some embodiments, a channel clear proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;
where j is a positive integer, and j≤m.

In some embodiments, the channel clear proportion during the R-TWT service period corresponding to the j-th R-TWT schedule among the m R-TWT schedules is determined based on the following formula 17:

$$the\ channel\ clear\ time\ proportion\ during\ the\ R-TWT\ service\ period$$

$$= \left[\ (1 - \frac{channel\ busy\ time\ during\ the\ R-TWT\ service\ period}{given\ total\ R-TWT\ service\ period\ duration})\ \times 255\right]$$

$$= \left[\ (1 - \frac{\sum_{i=1}^{s} T_{SP-Channelbusy}^{i}}{\sum_{i=1}^{s} T_{SP}^{i}})\ \times 255\right]$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

Specifically, for example, the field for the channel clear proportion during the R-TWT service period is used to define a proportion occupied by the channel clear time excluding the time of medium busyness, which is sensed by the AP, during the R-TWT service period corresponding to the restricted TWT schedule, where the medium busyness is sensed by the AP through the indication of the physical or virtual carrier sensing (CS) mechanism, where the time proportion may be represented by a linear ratio of 255 (255 represents 100%).

It should be understood that the above formula 1 to formula 17 may be simply transformed to obtain some new formulas, and the transformed formulas also fall within the protection scope of the embodiments of the present disclosure.

Therefore, in the embodiments of the present disclosure, the STA may acquire the channel utilization information during the R-TWT service periods corresponding to all R-TWT schedules established in the first BSS through the service period load information of the delay-sensitive service, or the STA may acquire the channel utilization information during the R-TWT service periods corresponding to m R-TWT schedules established in the first BSS through the service period load information of the delay-sensitive service, so that the STA may perform a subsequent transmission of the delay-sensitive service traffic based on the acquired channel utilization information to optimize the performance of the transmission of the delay-sensitive service traffic based on R-TWT.

The above, in combination with FIG. 4 to FIG. 13, describes in detail the method embodiments of the present disclosure, and the following, in combination with FIG. 14 to FIG. 18, describes in detail apparatus embodiments of the present disclosure, and it should be understood that the apparatus embodiments and the method embodiments correspond to each other, and similar descriptions may refer to the method embodiments.

FIG. 14 shows a schematic block diagram of an STA 300 according to the embodiments of the present disclosure. As shown in FIG. 14, the STA 300 includes:

a communication unit 310, configured to receive service period load information of a delay-sensitive service;
where the service period load information of the delay-sensitive service includes at least channel utilization information during restricted-target wake time (R-TWT) service periods corresponding to all R-TWT schedules established in a first basic service set (BSS), or the service period load information of the delay-sensitive service includes at least channel utilization information during R-TWT service periods corresponding to m R-TWT schedules established in a first BSS;
where a number of all R-TWT schedules established in the first BSS is n, m and n are both positive integers, and m<n.

In some embodiments, in a case where the service period load information of the delay-sensitive service includes at least the channel utilization information during the R-TWT service periods corresponding to all R-TWT schedules established in the first BSS, the channel utilization information during the R-TWT service periods corresponding to all R-TWT schedules established in the first BSS includes at least one of:
a cumulative proportion of duration during the R-TWT service periods corresponding to all R-TWT schedules established in the first BSS, a transmission proportion of an access point (AP) and an R-TWT member STA during the R-TWT service periods corresponding to all R-TWT schedules established in the first BSS, transmission efficiency of delay-sensitive service traffics during the R-TWT service periods corresponding to all R-TWT schedules established in the first BSS, a transmission time proportion of delay-sensitive service traffics during the R-TWT service periods corresponding to all R-TWT schedules established in the first BSS, or an interference time proportion excluding an internal transmission of the first BSS during the R-TWT service periods corresponding to all R-TWT schedules established in the first BSS.

In some embodiments, in a case where the service period load information of the delay-sensitive service includes at least the channel utilization information during the R-TWT service periods corresponding to all R-TWT schedules established in the first BSS, the service period load information of the delay-sensitive service further includes at least one of: a number of extremely high throughput (EHT) STAs that currently support R-TWT in the first BSS, a number of EHT STAs that currently do not support R-TWT in the first BSS, a number of pre-EHT STAs that support quiet intervals in the first BSS, a number of pre-EHT STAs that do not support quiet intervals in the first BSS, available resource capability information of all R-TWT schedules established in the first BSS, available resource capability information of all R-TWT schedules to be established in the first BSS, or available resource capability information of R-TWT schedules in the first BSS.

In some embodiments, the service period load information of the delay-sensitive service is carried by a first element in a first frame;

where the first element includes at least one of fields as follows: a field for an additional parameter present bitmap, a field for a number of EHT STAs supporting R-TWT, a field for a number of pre-EHT STAs supporting quiet intervals, a field for a number of EHT STAs that do not support R-TWT, a field for a number of pre-EHT STAs that do not support quiet intervals, a field for a cumulative proportion of duration of all current R-TWT service periods, a field for a transmission proportion of an AP and a member STA during all current R-TWT service periods, a field for transmission efficiency of delay-sensitive service traffics during all current R-TWT service periods, a field for a proportion of pre-scheduled transmission time of delay-sensitive service traffics during all R-TWT service periods, a field for an interference time proportion excluding a BSS internal transmission during all R-TWT service periods, a field for available resource capabilities of all established R-TWT schedules, a field for an available resource capability of an R-TWT schedule to be established, or a field for an available resource capability of an R-TWT schedule;
where the field for the additional parameter present bitmap is used to indicate whether at least one field in the first element is present, the field for the number of EHT STAs supporting R-TWT is used to indicate a number of EHT STAs that currently support R-TWT in the first BSS, the field for the number of pre-EHT STAs supporting quiet intervals is used to indicate a number of pre-EHT STAs that support quiet intervals in the first BSS, the field for the number of EHT STAs that do not support R-TWT is used to indicate a number of EHT STAs that currently do not support R-TWT in the first BSS, the field for the number of pre-EHT STAs that do not support quiet intervals is used to indicate a number of pre-EHT STAs that do not support quiet intervals in the first BSS, the field for the cumulative proportion of duration of all current R-TWT service periods is used to indicate a cumulative proportion of duration during the R-TWT service periods corresponding to all R-TWT schedules established in the first BSS, the field for the transmission proportion of the AP and the R-TWT member STA during all current R-TWT service periods is used to indicate a transmission proportion of the AP and an R-TWT member STA during the R-TWT service periods corresponding to all R-TWT schedules established in the first BSS, the field for the transmission efficiency of the delay-sensitive service traffics during all current R-TWT service periods is used to indicate transmission efficiency of the delay-sensitive service traffics during the R-TWT service periods corresponding to all R-TWT schedules established in the first BSS, the field for the proportion of the pre-scheduled transmission time of the delay-sensitive service traffics during all R-TWT service periods is used to indicate the transmission time proportion of the delay-sensitive service traffics during the R-TWT service periods corresponding to all R-TWT schedules established in the first BSS, the field for the interference time proportion excluding the BSS internal transmission during all R-TWT service periods is used to indicate the interference time proportion excluding an internal transmission of the first BSS during the R-TWT service periods corresponding to all R-TWT schedules established in the first BSS, the field for the available resource capabilities of all established R-TWT schedules is used to indicate available resource capability information of all R-TWT schedules established in the first BSS; the field for the available resource capability of the R-TWT schedule to be established is used to indicate available resource capability information of all R-TWT schedules to be established in the first BSS; the field for the available resource capability of the R-TWT schedules is used to indicate available resource capability information of the R-TWT schedules in the first BSS.

In some embodiments, at least one field in the first element includes some or all of fields including:
the field for the cumulative proportions of the duration of all current R-TWT service periods, the field for the transmission proportion of the AP and the R-TWT member STA during all current R-TWT service periods, the field for the transmission efficiency of the delay-sensitive service traffics during all current R-TWT service periods, the field for the proportion of the pre-scheduled transmission time of the delay-sensitive service traffics during all R-TWT service periods, the field for the interference time proportion excluding the BSS internal transmission during all R-TWT service periods, the field for the available resource capabilities of all established R-TWT schedules, the field for the available resource capability of the R-TWT schedule to be established, and the field for the available resource capability of the R-TWT schedule.

In some embodiments, the first element is a BSS R-TWT service period load element.

In some embodiments, the first frame is one of: a beacon frame, a probe response frame, an association response frame, and a reassociation response frame.

In some embodiments, the available resource capability information of all R-TWT schedules established in the first BSS includes an amount of available remaining medium time that is further available for a corresponding new R-TWT member STA to join the R-TWT service periods during the R-TWT service periods corresponding to all R-TWT schedules established in the first BSS, within a measurement duration corresponding to the first BSS; and/or,

the available resource capability information of all R-TWT schedules to be established in the first BSS includes an amount of remaining medium time that is currently available during the R-TWT service periods corresponding to the R-TWT schedules to be established, within a measurement duration corresponding to the first BSS; and/or,

the available resource capability information of the R-TWT schedules in the first BSS includes an amount of available remaining medium time during R-TWT service periods corresponding to currently established R-TWT schedules and an amount of remaining medium time currently available during R-TWT service periods corresponding to R-TWT schedules to be established, within a measurement duration corresponding to the first BSS.

In some embodiments, the cumulative proportion of the duration during the R-TWT service periods corresponding to all R-TWT schedules established in the first BSS is determined based on at least one of: cumulative duration of duration during all current R-TWT service periods, a measurement duration corresponding to the first BSS, a number of consecutive beacon intervals used to measure the duration of the R-TWT service periods and channel application conditions, or duration for an STA to schedule a beacon transmission.

In some embodiments, the cumulative proportion of the duration during the R-TWT service periods corresponding to all R-TWT schedules established in the first BSS is determined based on a formula of:

$$\textit{the cumulative proportion of the durations during the R}$$

$$- TWT \textit{ service periods corresponding to all current } R - TWT \textit{ schedules}$$

$$= \left\lceil \frac{\sum_{i=1}^{n} T_{SP}^{i}}{dot11ChannelUtilizationBeaconsInterval \times dot11BeaconPeriod \times 1024} \times 255 \right\rceil$$

where $T_{SP}^{i}$ represents duration during an R-TWT service period corresponding to an i-th R-TWT schedule among all R-TWT schedules established in the first BSS, $\sum_{i=1}^{n} T_{SP}^{i}$ represents the cumulative duration of the duration during the R-TWT service periods corresponding to all R-TWT schedules established in the first BSS, *dot11ChannelUtilizationBeaconsIntervals* represents the number of consecutive beacon intervals used to measure the duration of the R-TWT service periods and the channel application conditions, dot11BeaconPeriod represents the duration for the STA to schedule the beacon transmission, a time proportion can be represented by a linear ratio of 255, and 255 represents 100%.

In some embodiments, the transmission proportion of the AP and the R-TWT member STA during the R-TWT service periods corresponding to all R-TWT schedules established in the first BSS is determined based on at least one of: all medium busy time caused by a transmission between the AP and the R-TWT member STA, or cumulative duration of duration during all current R-TWT service periods.

In some embodiments, the transmission proportion of the AP and the R-TWT member STA during the R-TWT service periods corresponding to all R-TWT schedules established in the first BSS is determined based on a formula of:

$$the\ transmission\ proportion\ of\ the\ AP\ and\ the\ R-TWT\ member\ STA$$

$$during\ all\ current\ R-TWT\ service\ periods =$$

$$\left[\frac{T^{ALL}_{member-busy}}{\sum_{i=1}^{n} T^{i}_{SP}} \times 255\right]$$

where $T^{ALL}_{member-busy}$ represents all medium busy time caused by the transmission between the AP and the R-TWT member STA, $T^{i}_{SP}$ represents duration during an R-TWT service period corresponding to an i-th R-TWT schedule among all R-TWT schedules established in the first BSS, and $\sum_{i=1}^{n} T^{i}_{SP}$ represents cumulative duration of duration during the R-TWT service periods corresponding to all R-TWT schedules established in the first BSS, a time proportion can be represented by a linear ratio of 255, and 255 represents 100%.

In some embodiments, the transmission efficiency of the delay-sensitive service traffics during the R-TWT service periods corresponding to all R-TWT schedules established in the first BSS is determined based on at least one of: all medium busy time caused by a transmission of the delay-sensitive service traffics between the AP and the R-TWT member STA, or pre-scheduled transmission time of delay-sensitive service traffics during all current R-TWT service periods.

In some embodiments, the transmission efficiency of the delay-sensitive service traffics during the R-TWT service periods corresponding to all R-TWT schedules established in the first BSS is determined based on a formula of:

$$the\ transmission\ efficiency\ of\ the\ delay-sensitive\ service\ traffics$$

$$during\ all\ current\ R-TWT\ service\ periods$$

$$= \left[\frac{T^{ALL}_{LST-busy}}{\sum_{i=1}^{n} T^{i}_{SP-Scheduled}} \times 255\right]$$

where $T^{ALL}_{LST-busy}$ represents all medium busy time caused by the transmission of the delay-sensitive service traffics between the AP and the R-TWT member STA, $T^{i}_{SP-Scheduled}$ represents pre-scheduled transmission time of a delay-sensitive service traffic during an R-TWT service period corresponding to an i-th R-TWT schedule among all R-TWT schedules established in the first BSS, $\sum_{i=1}^{n} T^{i}_{SP-Scheduled}$ represents pre-scheduled transmission time of the delay-sensitive service traffics during all R-TWT service periods, a time proportion can be represented by a linear ratio of 255, and 255 represents 100%.

In some embodiments, the transmission time proportion of the delay-sensitive service traffics during the R-TWT service periods corresponding to all R-TWT schedules established in the first BSS is determined based on at least one of: pre-scheduled transmission time of delay-sensitive service traffics during all R-TWT service periods, or accumulated duration of duration during all current R-TWT service periods.

In some embodiments, the transmission time proportion of the delay-sensitive service traffics during the R-TWT service periods corresponding to all R-TWT schedules established in the first BSS is determined based on a formula of:

*the proportion of the prescheduled transmission time of the delay*

*− sensitive service traffics during all R − TWT service periods*

$$= \left[ \frac{\sum_{i=1}^{n} T_{SP-Scheduled}^{i}}{\sum_{i=1}^{n} T_{SP}^{i}} \times 255 \right]$$

where $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

In some embodiments, the interference time proportion excluding the internal transmission of the first BSS during the R-TWT service periods corresponding to all R-TWT schedules established in the first BSS, is determined based on at least one of: channel busy time during all R-TWT service periods, medium busy time caused by a transmission between the AP and an associated STA, or cumulative duration of duration during all current R-TWT service periods.

In some embodiments, the interference time proportion excluding the internal transmission of the first BSS during the R-TWT service periods corresponding to all R-TWT schedules established in the first BSS, is determined based on a formula of:

*the interference time proportion excluding the internal transmission of the BSS*

*during all R − TWT service periods*

$$= \left[ \frac{\sum_{i=1}^{n} T_{SP-Channelbusy}^{i} - T_{busy}^{asso}}{\sum_{i=1}^{n} T_{SP}^{i}} \times 255 \right]$$

where $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{busy}^{asso}$ represents medium busy time caused by the transmission between the AP and the associated STA, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

In some embodiments, in a case where the service period load information of the delay-sensitive service includes at least the channel utilization information during the R-TWT service periods corresponding to the m R-TWT schedules established in the first BSS, the channel utilization information during the R-TWT service periods corresponding to the m R-TWT schedules established in the first BSS includes at least one of:

a cumulative proportion of duration during an R-TWT service period corresponding to each R-TWT schedule of the m R-TWT schedules, a proportion of pre-scheduled transmission time of a delay-sensitive service traffic during an R-TWT service period corresponding to each R-TWT schedule of the m R-TWT schedules, transmission efficiency of a delay-sensitive service traffic during an R-TWT service period corresponding to each R-TWT schedule of the m R-TWT schedules, a medium busy time proportion caused by interference excluding an internal transmission of the first BSS during an R-TWT service period corresponding to each R-TWT schedule of the m R-TWT schedules, an R-TWT service period utilization ratio based on a transmission of an R-TWT member STA during an R-TWT service period corresponding to each R-TWT schedule of the m R-TWT schedules, an R-TWT service period utilization ratio based on a transmission of a delay-sensitive service traffic during an R-TWT service period corresponding to each R-TWT schedule of the m R-TWT schedules, an R-TWT service period underutilization ratio based on a transmission of a non-R-TWT member STA during an R-TWT service period corresponding to each R-TWT schedule of the m R-TWT schedules, an R-TWT service period underutilization ratio based on a transmission of a non-delay-sensitive service traffic during an R-TWT service period corresponding to each R-TWT schedule of the m R-TWT schedules, a channel utilization proportion during an R-TWT service period corresponding to each R-TWT schedule of the m R-TWT schedules, a channel utilization proportion based on a transmission of an R-TWT member STA during an R-TWT service period corresponding to each R-TWT schedule of the m R-TWT schedules, a channel utilization proportion based on a transmission of a delay-sensitive service traffic during an R-TWT service period corresponding to each R-TWT schedule of the m R-TWT schedules, or a channel clear proportion during an R-TWT service period corresponding to each R-TWT schedule of the m R-TWT schedules.

In some embodiments, in a case where the service period load information of the delay-sensitive service includes at least the channel utilization information during the R-TWT service periods corresponding to the m R-TWT schedules established in the first BSS, the service period load information of the delay-sensitive service further includes at least one of:

a number of R-TWT member STAs of R-TWT corresponding to each R-TWT schedule of the m R-TWT schedules, or available resource capability information of each R-TWT schedule of the m R-TWT schedules.

In some embodiments, available resource capability information of a j-th R-TWT schedule among the m R-TWT schedules includes an amount of available remaining medium time that is available for a corresponding new R-TWT member STA to join an R-TWT service period, during the R-TWT service period corresponding to the j-th R-TWT schedule, where j is a positive integer, and j≤m.

In some embodiments, the service period load information of the delay-sensitive service is carried by a second element in a second frame;

where in a case where m> 1, the second element includes an R-TWT service period load list field, and the R-TWT service period load list field includes m R-TWT service period load fields; or, in a case where m=1, the second element includes an R-TWT service period load field;

where the R-TWT service period load field includes at least one of: a broadcast TWT identifier field, a field for an R-TWT service period load additional parameter present bitmap, a field for a number of R-TWT member STAs, a field for a cumulative proportion of duration of a current R-TWT service period, a field for a proportion of pre-scheduled transmission time of a delay-sensitive service traffic during the R-TWT service period, a field for an interference time proportion excluding an internal transmission of the BSS during the R-TWT service period, a field for transmission efficiency of a delay-sensitive service traffic during the R-TWT service period, a field for an available resource capability of a current R-TWT schedule, a field for an R-TWT service period utilization ratio based on a transmission of an R-TWT member STA, a field for an R-TWT service period utilization ratio based on a transmission of a delay-sensitive service traffic, a field for an R-TWT service period underutilization ratio based on a transmission of a non-R-TWT member STA, a field for an R-TWT service period underutilization ratio based on a transmission of a non-delay-sensitive service traffic, a field for a channel utilization proportion during the R-TWT service period, a field for a channel utilization proportion based on a transmission of an R-TWT member STA during the R-TWT service period, a field for a channel utilization proportion based on a transmission of a delay-sensitive service traffic during the R-TWT service period, or a field for a channel clear proportion during the R-TWT service period;

where the broadcast TWT identifier field is used to indicate a broadcast TWT identifier corresponding to an R-TWT schedule for a currently provided R-TWT service period load parameter, the field for the R-TWT service period load additional parameter present bitmap is used to indicate whether at least one field in a j-th R-TWT service period load field is present, the field for the number of R-TWT member STAs is used to indicate a number of R-TWT member STAs corresponding to the current R-TWT schedule, the field for the cumulative proportion of the duration of the current R-TWT service period is used to indicate a cumulative proportion of duration during the R-TWT service period corresponding to the current R-TWT schedule, the field for the proportion of the pre-scheduled transmission time of the delay-sensitive service traffic during the R-TWT service period is used to indicate a proportion of pre-scheduled transmission time of the delay-sensitive service traffic during the R-TWT service period corresponding to the current R-TWT schedule, the field for the interference time proportion excluding the internal transmission of the BSS during the R-TWT service period is used to indicate a medium busy time proportion caused by interference excluding the internal transmission of the first BSS during the R-TWT service period corresponding to the current R-TWT schedule, the field for the transmission efficiency of the delay-sensitive service traffic during the R-TWT service period is used to indicate transmission efficiency of the delay-sensitive service traffic during the R-TWT service period corresponding to the current R-TWT schedule, the field for the available resource capability of the current R-TWT schedule is used to indicate available resource capability information of the current R-TWT schedule, the field for the R-TWT service period utilization ratio based on the transmission of the R-TWT member STA is used to indicate an R-TWT service period utilization ratio based on the transmission of the R-TWT member STA during the R-TWT service period corresponding to the current R-TWT schedule, the field for the R-TWT service period utilization ratio based on thee transmission of the delay-sensitive service traffic is used to indicate an R-TWT service period utilization ratio based on the transmission of the delay-sensitive service traffic during the R-TWT service period corresponding to the current R-TWT schedule, the field for the R-TWT service period underutilization ratio based on the transmission of the non-R-TWT member STA is used to indicate an R-TWT service period underutilization ratio based on the transmission of the non-R-TWT member STA during the R-TWT service period corresponding to the current R-TWT schedule, the field for the R-TWT service period underutilization ratio based on the transmission of the non-delay-sensitive service traffic is used to indicate an R-TWT service period underutilization ratio based on the transmission of the non-delay-sensitive service traffic during the R-TWT service period corresponding to the current R-TWT schedule, the field for the channel utilization proportion during the R-TWT service period is used to indicate a channel utilization proportion during the R-TWT service period corresponding to the current R-TWT schedule, the field for the channel utilization proportion based on the transmission of then R-TWT member STA during the R-TWT service period is used to indicate a channel utilization proportion based on the transmission of the R-TWT member STA during the R-TWT service period corresponding to the current R-TWT schedule, the field for the channel utilization proportion based on the transmission of the delay-sensitive service traffic during the R-TWT service period is used to indicate a channel utilization proportion based on the transmission of the delay-sensitive service traffic during the R-TWT service period corresponding to the current R-TWT schedule, and the field for the channel clear proportion during the R-TWT service period is used to indicate a channel clear proportion during the R-TWT service period corresponding to the current R-TWT schedule, where j is a positive integer, and j≤m.

In some embodiments, the second element is an R-TWT service period load element, or the second element is an R-TWT element.

In some embodiments, in a case where the second element is the R-TWT service period load element, the second element further includes an R-TWT service period load control field, where the R-TWT service period load control field includes at least one of: a field for a number of R-TWT service period loads, or a field for an R-TWT service period load additional parameter present bitmap;

where the field for the number of R-TWT service period loads is used to indicate a number of R-TWT service period load fields contained in the R-TWT service period load list field, and the field for the R-TWT service period load additional parameter present bitmap is used to indicate whether at least one field of the R-TWT service period load fields contained in the R-TWT service period load list field is present.

In some embodiments, the R-TWT service period load field does not include the field for the R-TWT service period load additional parameter present bitmap; and/or, the R-TWT service period load field includes the broadcast TWT identifier field.

In some embodiments, in a case where the second element is the R-TWT element, m=1;

where the second element further includes an R-TWT service period load present field, and the R-TWT service period load present field is used to indicate whether the R-TWT service period load field is present in the second element.

In some embodiments, the R-TWT service period load present field is in a broadcast TWT information field of the second element.

In some embodiments, the R-TWT service period load present field and an R-TWT traffic information present field share at least one bit in the broadcast TWT information field, where in a case where the R-TWT traffic information field is not contained in the second element, the at least one bit in the broadcast TWT information field only corresponds to the R-TWT service period load present field.

In some embodiments, the R-TWT service period load field includes the field for the R-TWT service period load additional parameter present bitmap; and/or, the R-TWT service period load field does not include the broadcast TWT identifier field.

In some embodiments, at least one field in the R-TWT service period load field includes some or all of fields including:

the field for the R-TWT service period utilization ratio based on the transmission of the R-TWT member STA, the field for the R-TWT service period utilization ratio based on the transmission of the delay-sensitive service traffic, the field for the R-TWT service period underutilization ratio based on the transmission of the non-R-TWT member STA, the field for the R-TWT service period underutilization ratio based on the transmission of the non-delay-sensitive service traffic, the field for the channel utilization proportion during the R-TWT service period, the field for the channel utilization proportion based on the transmission of the R-TWT member STA during the R-TWT service period, the field for the channel utilization proportion based on the transmission of the delay-sensitive service traffic during the R-TWT service period, and the field for the channel clear proportion during the R-TWT service period.

In some embodiments, the second frame is one of: a beacon frame, a probe response frame, an association response frame, and a reassociation response frame.

In some embodiments, a cumulative proportion of duration during an R-TWT service period corresponding to a j-th R-TWT schedule among the m R-TWT schedules is determined based on at least one of: cumulative duration of the duration of the R-TWT service period corresponding to the j-th R-TWT schedule, measurement duration corresponding to the j-th R-TWT schedule, a number of consecutive beacon intervals for measuring the duration of the R-TWT service period and a channel application condition, or duration for an STA to schedule a beacon transmission;

where j is a positive integer and j≤m.

In some embodiments, the cumulative proportion of the duration during the R-TWT service period corresponding to the j-th R-TWT schedule among the m R-TWT schedules is determined based on a formula of:

$$the\ cumulative\ proportion\ of\ the\ duration\ of\ the\ current\ R-TWT\ service\ period$$

$$= \left\lfloor \frac{\sum_{i=1}^{s} T_{SP}^{i}}{dot11ChannelUtilizationBeaconsInterval \times dot11BeaconPeriod \times 1024} \times 255 \right\rfloor$$

where $T_{SP}^{i}$ represents duration of an i-th service period in R-TWT corresponding to the j-th R-TWT schedule, $\sum_{i=1}^{s} T_{SP}^{i}$ represents cumulative duration of the duration during the R-TWT service period corresponding to the j-th R-TWT schedule, s represents a number of service periods in the R-TWT corresponding to the j-th R-TWT schedule, s is a positive integer, *dot11ChannelUtiljlzajonBeaconsJnterval* represents a number of consecutive beacon intervals used to measure the duration of the R-TWT service period and the channel application condition, *dot11BeaconPerjod* represents the duration for the STA to schedule the beacon transmission, a time proportion can be represented by a linear ratio of 255, and 255 represents 100%.

In some embodiments, a proportion of pre-scheduled transmission time of a delay-sensitive service traffic during an R-TWT service period corresponding to a j-th R-TWT schedule among the m R-TWT schedules is determined based on at least one of: pre-scheduled transmission time of the delay-sensitive service traffic during the R-TWT service period corresponding to the j-th R-TWT schedule, or a given total R-TWT service period duration during the R-TWT service period corresponding to the j-th R-TWT schedule;

where j is a positive integer and j≤m.

In some embodiments, the proportion of the pre-scheduled transmission time of the delay-sensitive service traffic during the R-TWT service period corresponding to the j-th R-TWT schedule among the m R-TWT schedules is determined based on a formula of:

$$the\ proportion\ of\ pre-scheduled\ transmission\ time\ of\ the\ delay$$

$$-sensitive\ service\ traffic\ during\ the\ R-TWT\ service\ period$$

$$= \left\lfloor \begin{array}{c} the\ pre-scheduled\ transmission\ time\ of\ the\ delay-sensitive\ service\ traffic \\ during\ the\ R-TWT\ service\ period \\ \hline given\ total\ R-TWT\ service\ period\ duration \end{array} \right.$$

$$\times 255 \Bigg\rfloor = \left[ \ (1 - \frac{\sum_{i=1}^{s} T_{SP-Scheduled}^{i}}{\sum_{i=1}^{s} T_{SP}^{i}}) \ \times 255 \right]$$

where $T_{SP-Scheduled}^{i}$ represents pre-scheduled transmission time of a delay-sensitive service traffic during an i-th service period in R-TWT corresponding to the j-th R-TWT schedule, $\sum_{i=1}^{s} T_{SP-Scheduled}^{i}$ represents pre-scheduled transmission time of the delay-sensitive service traffic during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a medium busy time proportion caused by interference excluding the internal transmission of the first BSS during an R-TWT service period corresponding to a j-th R-TWT schedule of the m R-TWT schedules is determined based on at least one of: channel busy time during the R-TWT service period corresponding to the j-th R-TWT schedule, medium busy time caused by a transmission between an AP and an R-TWT member STA during the R-TWT service period corresponding to the j-th R-TWT schedule, medium busy time caused by a transmission between the AP and a non-R-TWT member STA during the R-TWT service period corresponding to the j-th R-TWT schedule, or a given total R-TWT service period duration during the R-TWT service period corresponding to the j-th R-TWT schedule;

where j is a positive integer, and j≤m.

In some embodiments, the medium busy time proportion caused by interference excluding the internal transmission of the first BSS during an R-TWT service period corresponding to a j-th R-TWT schedule of the m R-TWT schedules is determined based on a formula of:

$$interference\ time\ proportion\ excluding\ the\ transmission\ of\ the\ BSS$$

$$during\ the\ R-TWT\ service\ period =$$

$$\left[\frac{\sum_{i=1}^{s} T_{SP-Channelbusy}^{i} - T_{busy}^{1} - T_{busy}^{3}}{\sum_{i=1}^{s} T_{SP}^{i}} \times 255\right]$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{busy}^{1}$ represents medium busy time caused by the transmission between the AP and the R-TWT member STA during the R-TWT service period corresponding to the j-th R-TWT schedule, $T_{busy}^{3}$ represents medium busy time caused by the transmission between the AP and the non-R-TWT member STA during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, transmission efficiency of a delay-sensitive service traffic during an R-TWT service period corresponding to a j-th R-TWT schedule among the m R-TWT schedules is determined based on at least one of: medium busy time caused by a transmission of the delay-sensitive service traffic between an AP and an R-TWT member STA during the R-TWT service period corresponding to the j-th R-TWT schedule, or pre-scheduled transmission time of the delay-sensitive service traffic during the R-TWT service period corresponding to the j-th R-TWT schedule;

where j is a positive integer, and j≤m.

In some embodiments, the transmission efficiency of the delay-sensitive service traffic during the R-TWT service period corresponding to the j-th R-TWT schedule among the m R-TWT schedules is determined based on a formula of:

$$the\ transmission\ efficiency\ of\ the\ delay-sensitive\ service\ traffic\ during\ the\ R$$

$$-TWT\ service\ period$$

$$=\left[\frac{medium\ busy\ time\ caused\ by\ the\ transmission\ of\ the\ delay-sensitive\ service}{the\ pre-scheduled\ transmission\ time\ of\ the\ delay-sensitive\ service\ traffic}\right.$$
$$\left.\frac{traffic\ between\ the\ AP\ and\ the\ R-TWT\ member\ STA}{during\ the\ R-TWT\ service\ period}\right.$$

$$\left.\times 255\right] = \left[\frac{T_{busy}^{2}}{\sum_{i=1}^{s} T_{SP-Scheduled}^{i}} \times 255\right]$$

where $T^2_{busy}$ represents medium busy time caused by the transmission of the delay-sensitive service traffic between the AP and the R-TWT member STA during the R-TWT service period corresponding to the j-th R-TWT schedule, $T^i_{SP-Scheduled}$ represents pre-scheduled transmission time of the delay-sensitive service traffic during an i-th service period in R-TWT corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period utilization ratio based on a transmission of an R-TWT member STA during an R-TWT service period corresponding to a j-th R-TWT schedule among the m R-TWT schedules is determined based on at least one of: medium busy time caused by a transmission between an AP and an R-TWT member STA during the R-TWT service period corresponding to the j-th R-TWT schedule, or a given total R-TWT service period duration during the R-TWT service period corresponding to the j-th R-TWT schedule;

where j is a positive integer, and j≤m.

In some embodiments, the R-TWT service period utilization ratio based on the transmission of the R-TWT member STA during the R-TWT service period corresponding to the j-th R-TWT schedule among the m R-TWT schedules is determined based on a formula of:

$$the\ R-TWT\ service\ period\ utilization\ ratio\ based\ on\ the$$

$$transmission\ of\ the\ R-TWT\ member\ STA\ =$$

$$\left\lceil \frac{T^1_{busy}}{\sum^s_{i=1} T^i_{SP}} \times 255 \right\rceil$$

where $T^1_{busy}$ represents medium busy time caused by the transmission between the AP and the R-TWT member STA during the R-TWT service period corresponding to the j-th R-TWT schedule, $T^i_{SP}$ represents duration of an i-th service period in R-TWT corresponding to the j-th R-TWT schedule, $\sum^s_{i=1} T^i_{SP}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period utilization ratio based on a transmission of a delay-sensitive service traffic during an R-TWT service period corresponding to a j-th R-TWT schedule among the m R-TWT schedules is determined based on at least one of: medium busy time caused by the transmission of the delay-sensitive service traffic between an AP and an R-TWT member STA during the R-TWT service period corresponding to the j-th R-TWT schedule, or a given total R-TWT service period duration during the R-TWT service period corresponding to the j-th R-TWT schedule;

where j is a positive integer, and j≤m.

In some embodiments, the R-TWT service period utilization rate based on the transmission of the delay-sensitive service traffic during the R-TWT service period corresponding to the j-th R-TWT schedule in the m R-TWT schedules is determined based on the following formula:

$$the\ R-TWT\ service\ period\ utilization\ ratio\ based\ on$$

$$the\ transmission\ of\ the\ delay-sensitive\ service\ traffic = \left\lceil \frac{T^2_{busy}}{\sum^s_{i=1} T^i_{SP}} \times 255 \right\rceil$$

where $T^2_{busy}$ represents medium busy time caused by the transmission of the delay-sensitive service traffic between the AP and the R-TWT member STA during the R-TWT service period corresponding to the j-th R-TWT schedule, $T^i_{SP}$ represents duration of an i-th service period in R-TWT corresponding to the j-th R-TWT schedule, $\sum^s_{i=1} T^i_{SP}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period underutilization ratio based on a transmission of a non-R-TWT member STA during an R-TWT service period corresponding to a j-th R-TWT schedule among the m R-TWT schedules is determined based on at least one of: medium busy time caused by the transmission between an AP and the non-R-TWT member STA during the R-TWT service period corresponding to the j-th R-TWT schedule, or a given total R-TWT service period duration during the R-TWT service period corresponding to the j-th R-TWT schedule; where j is a positive integer, and j≤m.

In some embodiments, the R-TWT service period underutilization ratio based on the transmission of the non-R-TWT member STA during the R-TWT service period corresponding to the j-th R-TWT schedule among the m R-TWT schedules is determined based on a formula of:

$$the\ R-TWT\ service\ period\ underutilization\ ratio\ based\ on$$

$$the\ transmission\ of\ the\ non-R-TWT\ member\ STA = \left[\frac{T_{busy}^3}{\sum_{i=1}^{s} T_{SP}^i} \times 255\right]$$

where $T_{busy}^3$ represents medium busy time caused by the transmission between the AP and the non-R-TWT member STA during the R-TWT service period corresponding to the j-th R-TWT schedule, $T_{SP}^i$ represents duration of the i-th service period in R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period underutilization ratio based on a transmission of a non-delay-sensitive service traffic during an R-TWT service period corresponding to a j-th R-TWT schedule among the m R-TWT schedules is determined based on at least one of: medium busy time caused by a transmission between an AP and a non-R-TWT member STA during the R-TWT service period corresponding to the j-th R-TWT schedule, medium busy time caused by the transmission of the non-delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule; where j is a positive integer and j≤m.

In some embodiments, the R-TWT service period underutilization ratio based on the transmission of the non-delay-sensitive service traffic during the R-TWT service period corresponding to the j-th R-TWT schedule among the m R-TWT schedules is determined based on a formula of:

$$the\ R-TWT\ service\ period\ underutilization\ ratio\ based\ on\ the\ transmission$$

$$of\ the\ non-delay-sensitive\ service\ traffic =$$

$$\left[\frac{T_{busy}^4}{\sum_{i=1}^{s} T_{SP}^i} \times 255\right]$$

where $T_{busy}^4$ represents medium busy time caused by the transmission between the AP and the non-R-TWT member STA and the medium busy time caused by the transmission of the non-delay-sensitive service traffic between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel utilization proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;

where j is a positive integer and j≤m.

In some embodiments, the channel utilization proportion during the R-TWT service period corresponding to the j-th R-TWT schedule among the m R-TWT schedules is determined based on a formula of:

$$the\ channel\ utilization\ proportion\ during\ the\ R-TWT\ service\ period =$$

$$\left[ \frac{\sum_{i=1}^{s} T_{SP-Channelbusy}^{i}}{\sum_{i=1}^{s} T_{SP}^{i}} \times 255 \right]$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel utilization proportion based on a transmission of an R-TWT member STA during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission between an AP and the R-TWT member STA during the R-TWT service period corresponding to the j-th R-TWT schedule;

where j is a positive integer and j≤m.

In some embodiments, the channel utilization proportion based on the transmission of the R-TWT member STA during the R-TWT service period corresponding to the j-th R-TWT schedule among the m R-TWT schedules is determined based on a formula of:

$$the\ channel\ utilization\ proportion\ based\ on\ the\ transmission\ of\ the\ R$$
$$-TWT\ member\ STA\ during\ the\ R-TWT\ service\ period$$
$$= \left[ \frac{medium\ busy\ time\ caused\ by\ the\ transmission\ between\ the\ AP\ and\ the\ R-TWT\ member\ STA}{channel\ busy\ time\ during\ the\ R-TWT\ service\ period} \times 255 \right] = \left[ \frac{T_{busy}^{1}}{\sum_{i=1}^{s} T_{SP-Channelbusy}^{i}} \times 255 \right]$$

where $T_{busy}^{1}$ represents medium busy time caused by the transmission between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel utilization proportion based on a transmission of a delay-sensitive service traffic during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission of the delay-sensitive service traffic between an AP and an R-TWT member STA during the R-TWT service period corresponding to the j-th R-TWT schedule;

where j is a positive integer, and j≤m.

In some embodiments, the channel utilization proportion based on the transmission of the delay-sensitive service traffic during the R-TWT service period corresponding to the j-th R-TWT schedule among the m R-TWT schedules is determined based on a formula of:

$$
\begin{aligned}
&\textit{the channel utilization proportion based on the transmission of the delay} \\
&- \textit{sensitive service traffic during the R} - \textit{TWT service period} \\
&= \left[ \frac{\begin{array}{c}\textit{medium busy time caused by the transmission of the delay} - \textit{sensitive service traffic} \\ \textit{between the AP and the R} - \textit{TWT member STA}\end{array}}{\textit{channel busy time during the R} - \textit{TWT service period}} \right. \\
&\left. \times 255 \right] = \left[ \frac{T_{busy}^{2}}{\sum_{i=1}^{s} T_{SP-Channelbusy}^{i}} \times 255 \right]
\end{aligned}
$$

where $T_{busy}^{2}$ represents medium busy time caused by the transmission of the delay-sensitive service traffic between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel clear proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;

where j is a positive integer, and j≤m.

In some embodiments, the channel clear proportion during the R-TWT service period corresponding to the j-th R-TWT schedule among the m R-TWT schedules is determined based on a formula of:

$$
\begin{aligned}
&\textit{the channel clear time proportion during the R} - \textit{TWT service period} \\
&= \left[ \left( 1 - \frac{\textit{channel busy time during the R} - \textit{TWT service period}}{\textit{given total R} - \textit{TWT service period duration}} \right) \times 255 \right] \\
&= \left[ \left( 1 - \frac{\sum_{i=1}^{s} T_{SP-Channelbusy}^{i}}{\sum_{i=1}^{s} T_{SP}^{i}} \right) \times 255 \right]
\end{aligned}
$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^i$ represents duration of the i-th service period in the R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, the STA 300 further includes: a processing unit 320;

the processing unit 320 is configured to select an AP and/or a link for a transmission of a delay-sensitive service traffic according to the service period load information of the delay-sensitive service; and/or,
the processing unit 320 is configured to select broadcast target wake time (TWT) corresponding to a target R-TWT schedule established and intended to be joined by a target AP according to R-TWT service period load information, and/or, the processing unit 320 is configured to select broadcast TWT corresponding to a target R-TWT schedule established and intended to be joined by a target link according to R-TWT service period load information.

In some embodiments, a non-access multi-link device (Non-AP MLD) to which the STA belongs, selects a link of a target traffic identifier (TID) mapped in an uplink direction and/or a downlink direction in a traffic identifier-to-link mapping process, based on R-TWT service period load information.

In some embodiments, the communication unit mentioned above may be a communication interface or a transceiver, or an input/output interface of a communication chip or a system on chip. The processing unit mentioned above may be one or more processors.

It should be understood that the STA 300 according to the embodiments of the present disclosure may correspond to the STA in the method embodiments of the present disclosure, and the above and other operations and/or functions of each unit in the STA 300 are respectively for implementing the corresponding procedure of the STA in the method 200 shown in FIG. 4, which will not be repeated here for the sake of brevity.

FIG. 15 shows a schematic block diagram of an AP 400 according to the embodiments of the present disclosure. As shown in FIG. 15, the AP 400 includes:

a communication unit 410, configured to transmit service period load information of a delay-sensitive service;
where the service period load information of the delay-sensitive service includes at least channel utilization information during restricted-target wake time (R-TWT) service periods corresponding to all R-TWT schedules established in a first basic service set (BSS), or the service period load information of the delay-sensitive service includes at least channel utilization information during R-TWT service periods corresponding to m R-TWT schedules established in a first BSS;
where a number of all R-TWT schedules established in the first BSS is n, m and n are both positive integers, and m<n.

In some embodiments, in a case where the service period load information of the delay-sensitive service includes at least the channel utilization information during the R-TWT service periods corresponding to all R-TWT schedules established in the first BSS, the channel utilization information during the R-TWT service periods corresponding to all R-TWT schedules established in the first BSS includes at least one of:
a cumulative proportion of duration during the R-TWT service periods corresponding to all R-TWT schedules established in the first BSS, a transmission proportion of the AP and an R-TWT member station (STA) during the R-TWT service periods corresponding to all R-TWT schedules established in the first BSS, transmission efficiency of delay-sensitive service traffics during the R-TWT service periods corresponding to all R-TWT schedules established in the first BSS, a transmission time proportion of delay-sensitive service traffics during the R-TWT service periods corresponding to all R-TWT schedules established in the first BSS, or an interference time proportion excluding an internal transmission of the first BSS during the R-TWT service periods corresponding to all R-TWT schedules established in the first BSS.

In some embodiments, in a case where the service period load information of the delay-sensitive service includes at least the channel utilization information during the R-TWT service periods corresponding to all R-TWT schedules established in the first BSS, the service period load information of the delay-sensitive service further includes at least one of: a number of extremely high throughput (EHT) STAs that currently support R-TWT in the first BSS, a number of EHT STAs that currently do not support R-TWT in the first BSS, a number of pre-EHT STAs that support quiet intervals in the first BSS, a number of pre-EHT STAs that do not support quiet intervals in the first BSS, available resource capability information of all R-TWT schedules established in the first BSS, available resource capability information of all R-TWT schedules to be established in the first BSS, or available resource capability information of R-TWT schedules in the first BSS.

In some embodiments, the service period load information of the delay-sensitive service is carried by a first element in a first frame;

where the first element includes at least one of fields as follows: a field for an additional parameter present bitmap, a field for a number of EHT STAs supporting R-TWT, a field for a number of pre-EHT STAs supporting quiet intervals, a field for a number of EHT STAs that do not support R-TWT, a field for a number of pre-EHT STAs that do not support quiet intervals, a field for a cumulative proportion of duration of all current R-TWT service periods, a field for a transmission proportion of the AP and a member STA during all current R-TWT service periods, a field for transmission efficiency of delay-sensitive service traffics during all current R-TWT service periods, a field for a proportion of pre-scheduled transmission time of delay-sensitive service traffics during all R-TWT service periods, a field for an interference time proportion excluding a BSS internal transmission during all R-TWT service periods, a field for available resource capabilities of all established R-TWT schedules, a field for an available resource capability of an R-TWT schedule to be established, or a field for an available resource capability of an R-TWT schedule;

where the field for the additional parameter present bitmap is used to indicate whether at least one field in the first element is present, the field for the number of EHT STAs supporting R-TWT is used to indicate a number of EHT STAs that currently support R-TWT in the first BSS, the field for the number of pre-EHT STAs supporting quiet intervals is used to indicate a number of pre-EHT STAs that support quiet intervals in the first BSS, the field for the number of EHT STAs that do not support R-TWT is used to indicate a number of EHT STAs that currently do not support R-TWT in the first BSS, the field for the number of pre-EHT STAs that do not support quiet intervals is used to indicate a number of pre-EHT STAs that do not support quiet intervals in the first BSS, the field for the cumulative proportion of duration of all current R-TWT service periods is used to indicate a cumulative proportion of duration during the R-TWT service periods corresponding to all R-TWT schedules established in the first BSS, the field for the transmission proportion of the AP and the R-TWT member STA during all current R-TWT service periods is used to indicate a transmission proportion of the AP and an R-TWT member STA during the R-TWT service periods corresponding to all R-TWT schedules established in the first BSS, the field for the transmission efficiency of the delay-sensitive service traffics during all current R-TWT service periods is used to indicate transmission efficiency of the delay-sensitive service traffics during the R-TWT service periods corresponding to all R-TWT schedules established in the first BSS, the field for the proportion of the pre-scheduled transmission time of the delay-sensitive service traffics during all R-TWT service periods is used to indicate the transmission time proportion of the delay-sensitive service traffics during the R-TWT service periods corresponding to all R-TWT schedules established in the first BSS, the field for the interference time proportion excluding the BSS internal transmission during all R-TWT service periods is used to indicate the interference time proportion excluding an internal transmission of the first BSS during the R-TWT service periods corresponding to all R-TWT schedules established in the first BSS, the field for the available resource capabilities of all established R-TWT schedules is used to indicate available resource capability information of all R-TWT schedules established in the first BSS; the field for the available resource capability of the R-TWT schedule to be established is used to indicate available resource capability information of all R-TWT schedules to be established in the first BSS; the field for the available resource capability of the R-TWT schedules is used to indicate available resource capability information of the R-TWT schedules in the first BSS.

In some embodiments, at least one field in the first element includes some or all of fields including: the field for the cumulative proportions of the duration of all current R-TWT service periods, the field for the transmission proportion of the AP and the R-TWT member STA during all current R-TWT service periods, the field for the transmission efficiency of the delay-sensitive service traffics during all current R-TWT service periods, the field for the proportion of the pre-scheduled transmission time of the delay-sensitive service traffics during all R-TWT service periods, the field for the interference time proportion excluding the BSS internal transmission during all R-TWT service periods, the field for the available resource capabilities of all established R-TWT schedules, the field for the available resource capability of the R-TWT schedule to be established, and the field for the available resource capability of the R-TWT schedule.

In some embodiments, the first element is a BSS R-TWT service period load element.

In some embodiments, the first frame is one of: a beacon frame, a probe response frame, an association response frame, and a reassociation response frame.

In some embodiments, the available resource capability information of all R-TWT schedules established in the first BSS includes an amount of available remaining medium time that is further available for a corresponding new R-TWT member STA to join the R-TWT service periods during the R-TWT service periods corresponding to all R-TWT schedules established in the first BSS, within a measurement duration corresponding to the first BSS; and/or,

the available resource capability information of all R-TWT schedules to be established in the first BSS includes an amount of remaining medium time that is currently available during the R-TWT service periods corresponding to the R-TWT schedules to be established, within a measurement duration corresponding to the first BSS; and/or, the available resource capability information of the R-TWT schedules in the first BSS includes an amount of available remaining medium time during R-TWT service periods corresponding to currently established R-TWT schedules and an amount of remaining medium time currently available during R-TWT service periods corresponding to R-TWT schedules to be established, within a measurement duration corresponding to the first BSS.

In some embodiments, the cumulative proportion of the duration during the R-TWT service periods corresponding to all R-TWT schedules established in the first BSS is determined based on at least one of: cumulative duration of duration during all current R-TWT service periods, a measurement duration corresponding to the first BSS, a number of consecutive beacon intervals used to measure the duration of the R-TWT service periods and channel application conditions, or duration for an STA to schedule a beacon transmission.

In some embodiments, the cumulative proportion of the duration during the R-TWT service periods corresponding to all R-TWT schedules established in the first BSS is determined based on a formula of:

$$the\ cumulative\ proportion\ of\ the\ durations\ during\ the\ R$$

$$-TWT\ service\ periods\ corresponding\ to\ all\ current\ R-TWT\ schedules$$

$$= \left[ \frac{\sum_{i=1}^{n} T_{SP}^{i}}{dot11ChannelUtilizationBeaconsInterval \times dot11BeaconPeriod \times 1024} \times 255 \right]$$

where $T_{SP}^{i}$ represents duration during an R-TWT service period corresponding to an i-th R-TWT schedule among all R-TWT schedules established in the first BSS, $\sum_{i=1}^{n} T_{SP}^{i}$ represents the cumulative duration of the duration during the R-TWT service periods corresponding to all R-TWT schedules established in the first BSS, *dot11ChannelUtilizationBeaconsIntervals* represents the number of consecutive beacon intervals used to measure the duration of the R-TWT service periods and the channel application conditions, dot11BeaconPeriod represents the duration for the STA to schedule the beacon transmission, a time proportion can be represented by a linear ratio of 255, and 255 represents 100%.

In some embodiments, the transmission proportion of the AP and the R-TWT member STA during the R-TWT service periods corresponding to all R-TWT schedules established in the first BSS is determined based on at least one of: all medium busy time caused by a transmission between the AP and the R-TWT member STA, or cumulative duration of duration during all current R-TWT service periods.

In some embodiments, the transmission proportion of the AP and the R-TWT member STA during the R-TWT service periods corresponding to all R-TWT schedules established in the first BSS is determined based on a formula of:

$$the\ transmission\ proportion\ of\ the\ AP\ and\ the\ R$$

$$-TWT\ member\ STA\ during\ all\ current\ R-TWT\ service\ periods =$$

$$\left[ \frac{T_{member-busy}^{ALL}}{\sum_{i=1}^{n} T_{SP}^{i}} \times 255 \right]$$

where $T_{member-busy}^{ALL}$ represents all medium busy time caused by the transmission between the AP and the R-TWT member STA, $T_{SP}^{i}$ represents duration during an R-TWT service period corresponding to an i-th R-TWT schedule among all R-TWT schedules established in the first BSS, and $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

In some embodiments, the transmission efficiency of the delay-sensitive service traffics during the R-TWT service periods corresponding to all R-TWT schedules established in the first BSS is determined based on at least one of: all medium busy time caused by a transmission of the delay-sensitive service traffics between the AP and the R-TWT member STA, or pre-scheduled transmission time of delay-sensitive service traffics during all current R-TWT service periods.

In some embodiments, the transmission efficiency of the delay-sensitive service traffics during the R-TWT service periods corresponding to all R-TWT schedules established in the first BSS is determined based on a formula of:

$$the\ transmission\ efficiency\ of\ the\ delay$$

$$-\ sensitive\ service\ traffics\ during\ all\ current\ R$$

$$-\ TWT\ service\ periods = \left\lceil \frac{T_{LST-busy}^{ALL}}{\sum_{i=1}^{n} T_{SP-Scheduled}^{i}} \times 255 \right\rceil$$

where $T_{LST-busy}^{ALL}$ represents all medium busy time caused by the transmission of the delay-sensitive service traffics between the AP and the R-TWT member STA, $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, a time proportion can be represented by a linear ratio of 255, and 255 represents 100%.

In some embodiments, the transmission time proportion of the delay-sensitive service traffics during the R-TWT service periods corresponding to all R-TWT schedules established in the first BSS is determined based on at least one of: pre-scheduled transmission time of delay-sensitive service traffics during all R-TWT service periods, or accumulated duration of duration during all current R-TWT service periods.

In some embodiments, the transmission time proportion of the delay-sensitive service traffics during the R-TWT service periods corresponding to all R-TWT schedules established in the first BSS is determined based on a formula of:

$$the\ proportion\ of\ the\ prescheduled\ transmission\ time\ of\ the\ delay$$

$$-\ sensitive\ service\ traffics\ during\ all\ R - TWT\ service\ periods$$

$$= \left\lceil \frac{\sum_{i=1}^{n} T_{SP-Scheduled}^{i}}{\sum_{i=1}^{n} T_{SP}^{i}} \times 255 \right\rceil$$

where $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

In some embodiments, the interference time proportion excluding the internal transmission of the first BSS during the R-TWT service periods corresponding to all R-TWT schedules established in the first BSS, is determined based on at least one of: channel busy time during all R-TWT service periods, medium busy time caused by a transmission between the AP and an associated STA, or cumulative duration of duration during all current R-TWT service periods.

In some embodiments, the interference time proportion excluding the internal transmission of the first BSS during the R-TWT service periods corresponding to all R-TWT schedules established in the first BSS, is determined based on a formula of:

*the interference time proportion excluding the internal transmission of*

*the BSS during all R − TWT service periods*

$$= \left\lceil \frac{\sum_{i=1}^{n} T_{SP-Channelbusy}^{i} - T_{busy}^{asso}}{\sum_{i=1}^{n} T_{SP}^{i}} \times 255 \right\rceil$$

where $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{busy}^{asso}$ represents medium busy time caused by the transmission between the AP and the associated STA, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

In some embodiments, in a case where the service period load information of the delay-sensitive service includes at least the channel utilization information during the R-TWT service periods corresponding to the m R-TWT schedules established in the first BSS, the channel utilization information during the R-TWT service periods corresponding to the m R-TWT schedules established in the first BSS includes at least one of:

a cumulative proportion of duration during an R-TWT service period corresponding to each R-TWT schedule of the m R-TWT schedules, a proportion of pre-scheduled transmission time of a delay-sensitive service traffic during an R-TWT service period corresponding to each R-TWT schedule of the m R-TWT schedules, transmission efficiency of a delay-sensitive service traffic during an R-TWT service period corresponding to each R-TWT schedule of the m R-TWT schedules, a medium busy time proportion caused by interference excluding an internal transmission of the first BSS during an R-TWT service period corresponding to each R-TWT schedule of the m R-TWT schedules, an R-TWT service period utilization ratio based on a transmission of an R-TWT member STA during an R-TWT service period corresponding to each R-TWT schedule of the m R-TWT schedules, an R-TWT service period utilization ratio based on a transmission of a delay-sensitive service traffic during an R-TWT service period corresponding to each R-TWT schedule of the m R-TWT schedules, an R-TWT service period underutilization ratio based on a transmission of a non-R-TWT member STA during an R-TWT service period corresponding to each R-TWT schedule of the m R-TWT schedules, an R-TWT service period underutilization ratio based on a transmission of a non-delay-sensitive service traffic during an R-TWT service period corresponding to each R-TWT schedule of the m R-TWT schedules, a channel utilization proportion during an R-TWT service period corresponding to each R-TWT schedule of the m R-TWT schedules, a channel utilization proportion based on a transmission of an R-TWT member STA during an R-TWT service period corresponding to each R-TWT schedule of the m R-TWT schedules, a channel utilization proportion based on a transmission of a delay-sensitive service traffic during an R-TWT service period corresponding to each R-TWT schedule of the m R-TWT schedules, or a channel clear proportion during an R-TWT service period corresponding to each R-TWT schedule of the m R-TWT schedules.

In some embodiments, in a case where the service period load information of the delay-sensitive service includes at least the channel utilization information during the R-TWT service periods corresponding to the m R-TWT schedules established in the first BSS, the service period load information of the delay-sensitive service further includes at least one of:

a number of R-TWT member STAs of R-TWT corresponding to each R-TWT schedule of the m R-TWT schedules, or available resource capability information of each R-TWT schedule of the m R-TWT schedules.

In some embodiments, available resource capability information of a j-th R-TWT schedule among the m R-TWT schedules includes an amount of available remaining medium time that is available for a corresponding new R-TWT member STA to join an R-TWT service period, during the R-TWT service period corresponding to the j-th R-TWT schedule, where j is a positive integer, and j≤m.

In some embodiments, the service period load information of the delay-sensitive service is carried by a second element in a second frame;

where in a case where m> 1, the second element includes an R-TWT service period load list field, and the R-TWT service period load list field includes m R-TWT service period load fields; or, in a case where m=1, the second element includes an R-TWT service period load field;

where the R-TWT service period load field includes at least one of: a broadcast TWT identifier field, a field for an R-TWT service period load additional parameter present bitmap, a field for a number of R-TWT member STAs, a field for a cumulative proportion of duration of a current R-TWT service period, a field for a proportion of pre-scheduled transmission time of a delay-sensitive service traffic during the R-TWT service period, a field for an interference time proportion excluding an internal transmission of the BSS during the R-TWT service period, a field for transmission efficiency of a delay-sensitive service traffic during the R-TWT service period, a field for an available resource capability of a current R-TWT schedule, a field for an R-TWT service period utilization ratio based on a transmission of an R-TWT member STA, a field for an R-TWT service period utilization ratio based on a transmission of a delay-sensitive service traffic, a field for an R-TWT service period underutilization ratio based on a transmission of a non-R-TWT member STA, a field for an R-TWT service period underutilization ratio based on a transmission of a non-delay-sensitive service traffic, a field for a channel utilization proportion during the R-TWT service period, a field for a channel utilization proportion based on a transmission of an R-TWT member STA during the R-TWT service period, a field for a channel utilization proportion based on a transmission of a delay-sensitive service traffic during the R-TWT service period, or a field for a channel clear proportion during the R-TWT service period;

where the broadcast TWT identifier field is used to indicate a broadcast TWT identifier corresponding to an R-TWT schedule for a currently provided R-TWT service period load parameter, the field for the R-TWT service period load additional parameter present bitmap is used to indicate whether at least one field in a j-th R-TWT service period load field is present, the field for the number of R-TWT member STAs is used to indicate a number of R-TWT member STAs corresponding to the current R-TWT schedule, the field for the cumulative proportion of the duration of the current R-TWT service period is used to indicate a cumulative proportion of duration during the R-TWT service period corresponding to the current R-TWT schedule, the field for the proportion of the pre-scheduled transmission time of the delay-sensitive service traffic during the R-TWT service period is used to indicate a proportion of pre-scheduled transmission time of the delay-sensitive service traffic during the R-TWT service period corresponding to the current R-TWT schedule, the field for the interference time proportion excluding the internal transmission of the BSS during the R-TWT service period is used to indicate a medium busy time proportion caused by interference excluding the internal transmission of the first BSS during the R-TWT service period corresponding to the current R-TWT schedule, the field for the transmission efficiency of the delay-sensitive service traffic during the R-TWT service period is used to indicate transmission efficiency of the delay-sensitive service traffic during the R-TWT service period corresponding to the current R-TWT schedule, the field for the available resource capability of the current R-TWT schedule is used to indicate available resource capability information of the current R-TWT schedule, the field for the R-TWT service period utilization ratio based on the transmission of the R-TWT member STA is used to indicate an R-TWT service period utilization ratio based on the transmission of the R-TWT member STA during the R-TWT service period corresponding to the current R-TWT schedule, the field for the R-TWT service period utilization ratio based on thee transmission of the delay-sensitive service traffic is used to indicate an R-TWT service period utilization ratio based on the transmission of the delay-sensitive service traffic during the R-TWT service period corresponding to the current R-TWT schedule, the field for the R-TWT service period underutilization ratio based on the transmission of the non-R-TWT member STA is used to indicate an R-TWT service period underutilization ratio based on the transmission of the non-R-TWT member STA during the R-TWT service period corresponding to the current R-TWT schedule, the field for the R-TWT service period underutilization ratio based on the transmission of the non-delay-sensitive service traffic is used to indicate an R-TWT service period underutilization ratio based on the transmission of the non-delay-sensitive service traffic during the R-TWT service period corresponding to the current R-TWT schedule, the field for the channel utilization proportion during the R-TWT service period is used to indicate a channel utilization proportion during the R-TWT service period corresponding to the current R-TWT schedule, the field for the channel utilization proportion based on the transmission of then R-TWT member STA during the R-TWT service period is used to indicate a channel utilization proportion based on the transmission of the R-TWT member STA during the R-TWT service period corresponding to the current R-TWT schedule, the field for the channel utilization proportion based on the transmission of the delay-sensitive service traffic during the R-TWT service period is used to indicate a channel utilization proportion based on the transmission of the delay-sensitive service traffic during the R-TWT service period corresponding to the current R-TWT schedule, and the field for the channel clear proportion during the R-TWT service period is used to indicate a channel clear proportion during the R-TWT service period corresponding to the current R-TWT schedule, where j is a positive integer, and j≤m.

In some embodiments, the second element is an R-TWT service period load element, or the second element is an R-TWT element.

In some embodiments, in a case where the second element is the R-TWT service period load element, the second element further includes an R-TWT service period load control field, where the R-TWT service period load control field includes at least one of: a field for a number of R-TWT service period loads, or a field for an R-TWT service period load additional parameter present bitmap;

where the field for the number of R-TWT service period loads is used to indicate a number of R-TWT service period load fields contained in the R-TWT service period load list field, and the field for the R-TWT service period load additional parameter present bitmap is used to indicate whether at least one field of the R-TWT service period load fields contained in the R-TWT service period load list field is present.

In some embodiments, the R-TWT service period load field does not include the field for the R-TWT service period load additional parameter present bitmap; and/or, the R-TWT service period load field includes the broadcast TWT identifier field.

In some embodiments, in a case where the second element is the R-TWT element, m=1;

where the second element further includes an R-TWT service period load present field, and the R-TWT service period load present field is used to indicate whether the R-TWT service period load field is present in the second element.

In some embodiments, the R-TWT service period load present field is in a broadcast TWT information field of the second element.

In some embodiments, the R-TWT service period load present field and an R-TWT traffic information present field share at least one bit in the broadcast TWT information field, where in a case where the R-TWT traffic information field is not contained in the second element, the at least one bit in the broadcast TWT information field only corresponds to the R-TWT service period load present field.

In some embodiments, the R-TWT service period load field includes the field for the R-TWT service period load additional parameter present bitmap; and/or, the R-TWT service period load field does not include the broadcast TWT identifier field.

In some embodiments, at least one field in the R-TWT service period load field includes some or all of the following fields:

the field for the R-TWT service period utilization ratio based on the transmission of the R-TWT member STA, the field for the R-TWT service period utilization ratio based on the transmission of the delay-sensitive service traffic, the field for the R-TWT service period underutilization ratio based on the transmission of the non-R-TWT member STA, the field for the R-TWT service period underutilization ratio based on the transmission of the non-delay-sensitive service traffic, the field for the channel utilization proportion during the R-TWT service period, the field for the channel utilization proportion based on the transmission of the R-TWT member STA during the R-TWT service period, the field for the channel utilization proportion based on the transmission of the delay-sensitive service traffic during the R-TWT service period, and the field for the channel clear proportion during the R-TWT service period.

In some embodiments, the second frame is one of: a beacon frame, a probe response frame, an association response frame, and a reassociation response frame.

In some embodiments, a cumulative proportion of duration during an R-TWT service period corresponding to a j-th R-TWT schedule among the m R-TWT schedules is determined based on at least one of: cumulative duration of the duration of the R-TWT service period corresponding to the j-th R-TWT schedule, measurement duration corresponding to the j-th R-TWT schedule, a number of consecutive beacon intervals for measuring the duration of the R-TWT service period and a channel application condition, or duration for an STA to schedule a beacon transmission;

where j is a positive integer and j≤m.

In some embodiments, the cumulative proportion of the duration during the R-TWT service period corresponding to the j-th R-TWT schedule among the m R-TWT schedules is determined based on a formula of:

$$the\ cumulative\ proportion\ of\ the\ duration\ of\ the\ current\ R-TWT\ service\ period$$

$$= \left[ \frac{\sum_{i=1}^{s} T_{SP}^{i}}{dot11ChannelUtilizationBeaconsInterval \times dot11BeaconPeriod \times 1024} \times 255 \right]$$

where $T_{SP}^{i}$ represents duration of an i-th service period in R-TWT corresponding to the j-th R-TWT schedule, $\sum_{i=1}^{s} T_{SP}^{i}$ represents cumulative duration of the duration during the R-TWT service period corresponding to the j-th R-TWT schedule, s represents a number of service periods in the R-TWT corresponding to the j-th R-TWT schedule, s is a positive integer, *dot11ChannelUtilizationBeaconsInterval* represents a number of consecutive beacon intervals used to measure the duration of the R-TWT service period and the channel application condition, *dot11BeaconPeriod* represents the duration for the STA to schedule the beacon transmission, a time proportion can be represented by a linear ratio of 255, and 255 represents 100%.

In some embodiments, a proportion of pre-scheduled transmission time of a delay-sensitive service traffic during an R-TWT service period corresponding to a j-th R-TWT schedule among the m R-TWT schedules is determined based on at least one of: pre-scheduled transmission time of the delay-sensitive service traffic during the R-TWT service period corresponding to the j-th R-TWT schedule, or a given total R-TWT service period duration during the R-TWT service period corresponding to the j-th R-TWT schedule;

where j is a positive integer and j≤m.

In some embodiments, the proportion of the pre-scheduled transmission time of the delay-sensitive service traffic during the R-TWT service period corresponding to the j-th R-TWT schedule among the m R-TWT schedules is determined based on a formula of:

$$
\begin{aligned}
&\textit{the proportion of the pre} - \textit{scheduled transmission time of the delay} \\
&- \textit{sensitive service traffic during the } R - \textit{TWT service period} \\
&= \left[ \frac{\begin{matrix} \textit{the pre} - \textit{scheduled transmission time of the delay} - \textit{sensitive service traffic} \\ \textit{during the } R - \textit{TWT service period} \end{matrix}}{\textit{given total } R - \textit{TWT service period duration}} \right. \\
&\left. \times 255 \right] = \left[ \left( 1 - \frac{\sum_{i=1}^{s} T_{SP-Scheduled}^{i}}{\sum_{i=1}^{s} T_{SP}^{i}} \right) \times 255 \right]
\end{aligned}
$$

where $T_{SP-Scheduled}^{i}$ represents pre-scheduled transmission time of a delay-sensitive service traffic during an i-th service period in R-TWT corresponding to the j-th R-TWT schedule, $\sum_{i=1}^{s} T_{SP-Scheduled}^{i}$ represents pre-scheduled transmission time of the delay-sensitive service traffic during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a medium busy time proportion caused by interference excluding the internal transmission of the first BSS during an R-TWT service period corresponding to a j-th R-TWT schedule of the m R-TWT schedules is determined based on at least one of: channel busy time during the R-TWT service period corresponding to the j-th R-TWT schedule, medium busy time caused by a transmission between the AP and an R-TWT member STA during the R-TWT service period corresponding to the j-th R-TWT schedule, medium busy time caused by a transmission between the AP and a non-R-TWT member STA during the R-TWT service period corresponding to the j-th R-TWT schedule, or a given total R-TWT service period duration during the R-TWT service period corresponding to the j-th R-TWT schedule;

where j is a positive integer, and j≤m.

In some embodiments, the medium busy time proportion caused by interference excluding the internal transmission of the first BSS during an R-TWT service period corresponding to a j-th R-TWT schedule of the m R-TWT schedules is determined based on a formula of:

$$
\begin{aligned}
&\textit{interference time proportion excluding the transmission of the} \\
&\textit{BSS during the } R - \textit{TWT service period} = \\
&\left[ \frac{\sum_{i=1}^{s} T_{SP-Channelbusy}^{i} - T_{busy}^{1} - T_{busy}^{3}}{\sum_{i=1}^{s} T_{SP}^{i}} \times 255 \right]
\end{aligned}
$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{busy}^{1}$ represents medium busy time caused by the transmission between the AP and the R-TWT member STA during the R-TWT service period corresponding to the j-th R-TWT schedule, $T_{busy}^{3}$ represents medium busy time caused by the transmission between the AP and the non-R-TWT member STA during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, transmission efficiency of a delay-sensitive service traffic during an R-TWT service period corresponding to a j-th R-TWT schedule among the m R-TWT schedules is determined based on at least one of: medium busy time caused by a transmission of the delay-sensitive service traffic between the AP and an R-TWT member STA during the R-TWT service period corresponding to the j-th R-TWT schedule, or pre-scheduled transmission time of the delay-sensitive service traffic during the R-TWT service period corresponding to the j-th R-TWT schedule; where j is a positive integer, and j≤m.

In some embodiments, the transmission efficiency of the delay-sensitive service traffic during the R-TWT service period corresponding to the j-th R-TWT schedule among the m R-TWT schedules is determined based on a formula of:

$$
\begin{aligned}
&the\ transmission\ efficiency\ of\ the\ delay-sensitive\ service\ traffic\ during\ the\ R\\
&-TWT\ service\ period\\[6pt]
&= \left[\dfrac{\begin{array}{c}medium\ busy\ time\ caused\ by\ the\ transmission\ of\ the\ delay-sensitive\ service\\ traffic\ between\ the\ AP\ and\ the\ R-TWT\ member\ STA\end{array}}{\begin{array}{c}the\ pre-scheduled\ transmission\ time\ of\ the\ delay-sensitive\ service\ traffic\\ during\ the\ R-TWT\ service\ period\end{array}}\right.\\[12pt]
&\left. \times 255 \right] = \left[\dfrac{T_{busy}^{2}}{\sum_{i=1}^{s} T_{SP-Scheduled}^{i}} \times 255\right]
\end{aligned}
$$

where $T_{busy}^{2}$ represents medium busy time caused by the transmission of the delay-sensitive service traffic between the AP and the R-TWT member STA during the R-TWT service period corresponding to the j-th R-TWT schedule, $T_{SP-Scheduled}^{i}$ represents pre-scheduled transmission time of the delay-sensitive service traffic during an i-th service period in R-TWT corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period utilization ratio based on a transmission of an R-TWT member STA during an R-TWT service period corresponding to a j-th R-TWT schedule among the m R-TWT schedules is determined based on at least one of: medium busy time caused by a transmission between the AP and an R-TWT member STA during the R-TWT service period corresponding to the j-th R-TWT schedule, or a given total R-TWT service period duration during the R-TWT service period corresponding to the j-th R-TWT schedule; where j is a positive integer, and j≤m.

In some embodiments, the R-TWT service period utilization ratio based on the transmission of the R-TWT member STA during the R-TWT service period corresponding to the j-th R-TWT schedule among the m R-TWT schedules is determined based on a formula of:

$$the\ R-TWT\ service\ period\ utilization\ ratio\ based\ on\ the\ transmission\ of\ the\ R$$
$$-TWT\ member\ STA\ =$$

$$\left\lceil \frac{T_{busy}^{1}}{\sum_{i=1}^{s} T_{SP}^{i}} \times 255 \right\rceil$$

where $T_{busy}^{1}$ represents medium busy time caused by the transmission between the AP and the R-TWT member STA during the R-TWT service period corresponding to the j-th R-TWT schedule, $T_{SP}^{i}$ represents duration of an i-th service period in R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period utilization ratio based on a transmission of a delay-sensitive service traffic during an R-TWT service period corresponding to a j-th R-TWT schedule among the m R-TWT schedules is determined based on at least one of: medium busy time caused by the transmission of the delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule; where j is a positive integer, and j≤m.

In some embodiments, the R-TWT service period utilization ratio based on the transmission of the delay-sensitive service traffic during the R-TWT service period corresponding to the j-th R-TWT schedule among the m R-TWT schedules is determined based on a formula of:

$$the\ R-TWT\ service\ period\ utilization\ ratio\ based\ on\ the\ transmission\ of$$
$$the\ delay-sensitive\ service\ traffic\ =$$

$$\left\lceil \frac{T_{busy}^{2}}{\sum_{i=1}^{s} T_{SP}^{i}} \times 255 \right\rceil$$

where $T_{busy}^{2}$ represents medium busy time caused by the transmission of the delay-sensitive service traffic between the AP and the R-TWT member STA during the R-TWT service period corresponding to the j-th R-TWT schedule, $T_{SP}^{i}$ represents duration of an i-th service period in R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period underutilization ratio based on a transmission of a non-R-TWT member STA during an R-TWT service period corresponding to a j-th R-TWT schedule among the m R-TWT schedules is determined based on at least one of: medium busy time caused by the transmission between the AP and the non-R-TWT member STA during the R-TWT service period corresponding to the j-th R-TWT schedule, or a given total R-TWT service period duration during the R-TWT service period corresponding to the j-th R-TWT schedule; where j is a positive integer, and j≤m.

In some embodiments, the R-TWT service period underutilization ratio based on the transmission of the non-R-TWT member STA during the R-TWT service period corresponding to the j-th R-TWT schedule among the m R-TWT schedules is determined based on a formula of:

$$the\ R-TWT\ service\ period\ underutilization\ ratio\ based\ on\ the\ transmission$$

$$of\ the\ non-R-TWT\ member\ STA =$$

$$\left[\frac{T^3_{busy}}{\sum^s_{i=1} T^i_{SP}} \times 255\right]$$

where $T^3_{busy}$ represents medium busy time caused by the transmission between the AP and the non-R-TWT member STA during the R-TWT service period corresponding to the j-th R-TWT schedule, $T^i_{SP}$ represents duration of the i-th service period in R-TWT corresponding to the j-th R-TWT schedule, $\sum^s_{i=1} T^i_{SP}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, an R-TWT service period underutilization ratio based on a transmission of a non-delay-sensitive service traffic during an R-TWT service period corresponding to a j-th R-TWT schedule among the m R-TWT schedules is determined based on at least one of: medium busy time caused by a transmission between the AP and a non-R-TWT member STA during the R-TWT service period corresponding to the j-th R-TWT schedule, medium busy time caused by the transmission of the non-delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule;
where j is a positive integer and j≤m.

In some embodiments, the R-TWT service period underutilization ratio based on the transmission of the non-delay-sensitive service traffic during the R-TWT service period corresponding to the j-th R-TWT schedule among the m R-TWT schedules is determined based on a formula of:

$$the\ R-TWT\ service\ period\ underutilization\ ratio\ based\ on\ the\ transmission\ of$$

$$the\ non-delay-sensitive\ service\ traffic =$$

$$\left[\frac{T^4_{busy}}{\sum^s_{i=1} T^i_{SP}} \times 255\right]$$

where $T^4_{busy}$ represents medium busy time caused by the transmission between the AP and the non-R-TWT member STA and the medium busy time caused by the transmission of the non-delay-sensitive service traffic between the AP and the R-TWT member STA during the R-TWT service period corresponding to the j-th R-TWT schedule, $T^i_{SP}$ represents duration of an i-th service period in R-TWT corresponding to the j-th R-TWT schedule, $\sum^s_{i=1} T^i_{SP}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel utilization proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;
where j is a positive integer and j≤m.

In some embodiments, the channel utilization proportion during the R-TWT service period corresponding to the j-th R-TWT schedule among the m R-TWT schedules is determined based on a formula of:

$$the\ channel\ utilization\ proportion\ during\ the\ R-TWT\ service\ period =$$

$$\left[ \frac{\sum_{i=1}^{s} T_{SP-Channelbusy}^{i}}{\sum_{i=1}^{s} T_{SP}^{i}} \times 255 \right]$$

where $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel utilization proportion based on a transmission of an R-TWT member STA during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission between the AP and the R-TWT member STA during the R-TWT service period corresponding to the j-th R-TWT schedule;

where j is a positive integer and j≤m.

In some embodiments, the channel utilization proportion based on the transmission of the R-TWT member STA during the R-TWT service period corresponding to the j-th R-TWT schedule among the m R-TWT schedules is determined based on a formula of:

$$the\ channel\ utilization\ proportion\ based\ on\ the\ transmission\ of\ the\ R$$

$$-TWT\ member\ STA\ during\ the\ R-TWT\ service\ period$$

$$= \left[ \frac{medium\ busy\ time\ caused\ by\ the\ transmission\ between\ the\ AP\ and\ the\ R-TWT\ member\ STA}{channel\ busy\ time\ during\ the\ R-TWT\ service\ period} \right.$$

$$\left. \times 255 \right] = \left[ \frac{T_{busy}^{1}}{\sum_{i=1}^{s} T_{SP-Channelbusy}^{i}} \times 255 \right]$$

where $T_{busy}^{1}$ represents medium busy time caused by the transmission between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel utilization proportion based on a transmission of a delay-sensitive service traffic during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission of the delay-sensitive service traffic between the AP and an R-TWT member STA during the R-TWT service period corresponding to the j-th R-TWT schedule;

where j is a positive integer, and j≤m.

In some embodiments, the channel utilization proportion based on the transmission of the delay-sensitive service traffic during the R-TWT service period corresponding to the j-th R-TWT schedule among the m R-TWT schedules is determined based on a formula of:

$$the\ channel\ utilization\ proportion\ based\ on\ the\ transmission\ of\ the\ delay$$
$$-\ sensitive\ service\ traffic\ during\ the\ R-TWT\ service\ period$$
$$=\left[\frac{\begin{array}{c}medium\ busy\ time\ caused\ by\ the\ transmission\ of\ the\ delay-sensitive\ service\ traffic\\ between\ the\ AP\ and\ the\ R-TWT\ member\ STA\end{array}}{channel\ busy\ time\ during\ the\ R-TWT\ service\ period}\right.$$
$$\left.\times 255\right]=\left[\frac{T_{busy}^{2}}{\sum_{i=1}^{s}T_{SP-Channelbusy}^{i}}\times 255\right]$$

where $T_{busy}^{2}$ represents medium busy time caused by the transmission of the delay-sensitive service traffic between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s}T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, a channel clear proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;
where j is a positive integer, and j≤m.

In some embodiments, the channel clear proportion during the R-TWT service period corresponding to the j-th R-TWT schedule among the m R-TWT schedules is determined based on a formula of:

$$the\ channel\ clear\ time\ proportion\ during\ the\ R-TWT\ service\ period$$
$$=\left[\left(1-\frac{channel\ busy\ time\ during\ the\ R-TWT\ service\ period}{given\ total\ R-TWT\ service\ period\ duration}\right)\times 255\right]$$
$$=\left[\left(1-\frac{\sum_{i=1}^{s}T_{SP-Channelbusy}^{i}}{\sum_{i=1}^{s}T_{SP}^{i}}\right)\times 255\right]$$

where $T_{SP-Channelbusy}^{i}$ represents channel busy time during an i-th service period in R-TWT corresponding to the j-th R-TWT schedule, $\sum_{i=1}^{s}T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s}T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

In some embodiments, the service period load information of the delay-sensitive service is used to select an AP and/or a link for a transmission of a delay-sensitive service traffic; and/or, R-TWT service period load information is used to select broadcast target wake time (TWT) corresponding to a target R-TWT schedule established and intended to be joined by a target AP, and/or, R-TWT service period load information is used to select broadcast TWT corresponding to a target R-TWT schedule established and intended to be joined by a target link.

In some embodiments, R-TWT service period load information is used by a non-access multi-link device (Non-AP MLD) to select a link of a target traffic identifier (TID) mapped in an uplink direction and/or a downlink direction in a traffic identifier-to-link mapping process.

In some embodiments, the communication unit mentioned above may be a communication interface or a transceiver, or an input/output interface of a communication chip or a system on chip. The processing unit mentioned above may be one or more processors.

It should be understood that the AP 400 according to the embodiments of the present disclosure may correspond to the AP in the method embodiments of the present disclosure, and the above and other operations and/or functions of each unit in the AP 400 are respectively for implementing the corresponding procedure of the AP in the method 200 shown in FIG. 4, which will not be repeated here for the sake of brevity.

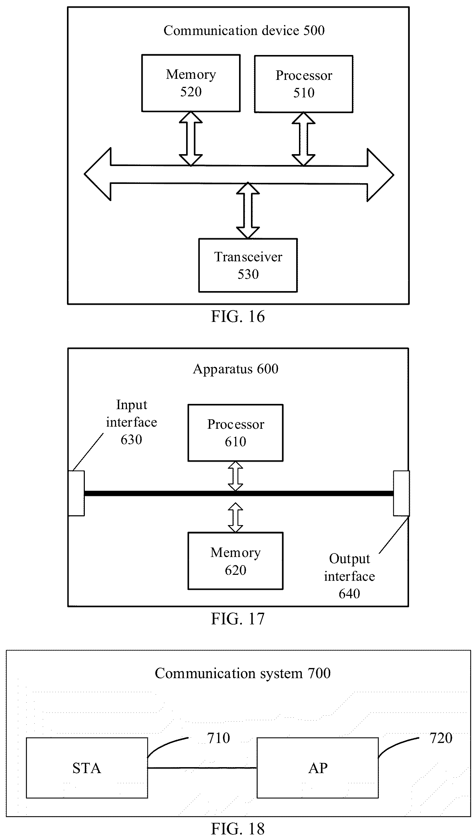

FIG. 16 is a schematic structural diagram of a communication device 500 provided in the embodiments of the present disclosure. The communication device 500 shown in FIG. 16 includes a processor 510, and the processor 510 may call a computer program from a memory and run the computer program to implement the method in the embodiments of the present disclosure.

In some embodiments, as shown in FIG. 16, the communication device 500 may further include a memory 520. The processor 510 may call a computer program from the memory 520 and run the computer program to implement the method in the embodiments of the present disclosure.

The memory 520 may be a separate device independent of the processor 510, or may be integrated into the processor 510.

In some embodiments, as shown in FIG. 16, the communication device 500 may further include a transceiver 530. The processor 510 may control the transceiver 530 to communicate with other devices, specifically, to transmit information or data to other devices, or to receive information or data transmitted by other devices.

The transceiver 530 may include a transmitter and a receiver. The transceiver 530 may further include an antenna, and the number of antennas may be one or more.

In some embodiments, the processor 510 may implement a function of the processing unit in the STA, or the processor 510 may implement a function of a processing unit in the AP, which will not be repeated here for the sake of brevity.

In some embodiments, the transceiver 530 may implement a function of the communication unit in the STA, which will not be repeated here for the sake of brevity.

In some embodiments, the transceiver 530 may implement a function of the communication unit in the AP, which will not be repeated here for the sake of brevity.

In some embodiments, the communication device 500 may specifically be the AP in the embodiments of the present disclosure, and the communication device 500 may implement the corresponding procedures implemented by the AP in various methods of the embodiments of the present disclosure, which will not be repeated here for the sake of brevity.

In some embodiments, the communication device 500 may specifically be the STA in the embodiments of the present disclosure, and the communication device 500 may implement the corresponding procedures implemented by the STA in various methods in the embodiments of the present disclosure, which will not be repeated here for the sake of brevity.

FIG. 17 is a schematic structural diagram of an apparatus in the embodiments of the present disclosure. The apparatus 600 shown in FIG. 17 includes a processor 610, and the processor 610 may call a computer program from a memory and run the computer program to implement the methods in the embodiments of the present disclosure.

In some embodiments, as shown in FIG. 17, the apparatus 600 may further include a memory 620. The processor 610 may call a computer program from the memory 620 and run the computer program to implement the methods in the embodiments of the present disclosure.

The memory 620 may be a separate device independent of the processor 610, or may be integrated into the processor 610.

In some embodiments, the processor 610 may implement the functions of the processing unit in the STA, or the processor 610 may implement the functions of a processing unit in the AP, which will not be repeated here for the sake of brevity.

In some embodiments, the apparatus 600 may further include an input interface 630. The processor 610 may control the input interface 630 to communicate with other devices or chips, specifically, to obtain information or data transmitted from other devices or chips. In some embodiments, the processor 610 may be located on-chip or off-chip.

In some embodiments, the input interface 630 may implement the functions of the communication unit in the STA, or the input interface 630 may implement the functions of the communication unit in the AP.

In some embodiments, the apparatus 600 may further include an output interface 640. The processor 610 may control the output interface 640 to communicate with other devices or chips, specifically, to output information or data to other devices or chips. In some embodiments, the processor 610 may be located on-chip or off-chip.

In some embodiments, the output interface 640 may implement the functions of the communication unit in the STA, or the output interface 640 may implement the functions of the communication unit in the AP.

In some embodiments, the apparatus may be applied to the AP in the embodiments of the present disclosure, and the apparatus may implement the corresponding procedures implemented by the AP in various methods of the embodiments of the present disclosure, which will not be repeated here for the sake of brevity.

In some embodiments, the apparatus may be applied to the STA in the embodiments of the present disclosure, and the apparatus may implement the corresponding procedures implemented by the STA in various methods of the embodiments of the present disclosure, which will not be repeated here for the sake of brevity.

In some embodiments, the apparatus mentioned in the embodiments of the present disclosure may also be a chip. For example, it may be a system-on-chip, a system chip, a chip system, or an on-chip system chip.

FIG. 18 is a schematic block diagram of a communication system 700 provided in the embodiments of the present disclosure. As shown in FIG. 18, the communication system 700 includes an STA 710 and an AP 720.

The STA 710 may be configured to implement the corresponding functions implemented by the STA in the above-mentioned methods, and the AP 720 may be configured to implement the corresponding functions implemented by the AP in the above-mentioned methods, which will not be repeated here for the sake of brevity.

It should be understood that the processor of the embodiments of the present disclosure may be an integrated circuit chip with a signal processing capability. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present disclosure may be implemented or performed. A general-purpose processor may be a microprocessor, or the processor may also be any conventional processor, etc. The steps of the method disclosed in combination with the embodiments of the present disclosure may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present disclosure may be a volatile memory or a non-volatile memory, or may include both volatile and non-volatile memories. Herein, the non-volatile memory may be a Read-Only Memory (ROM), a programmable ROM (PROM), an erasable PROM (EPROM), an electrically EPROM (EEPROM) or a flash memory. The volatile memory may be a Random Access Memory (RAM), which is used as an external cache. Through illustrative, rather than limiting, illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchronous (Synchlink) DRAM (SLDRAM) and a direct rambus RAM (DR RAM). It should be noted that the memory of the system and the method described herein are intended to include, but not limited to, these and any other suitable types of memories.

It should be understood that the above memory is exemplary but not limiting illustration, e.g., the memory in embodiments of the present disclosure may also be an SRAM), a DRAM, an SDRAM, a DDR SDRAM, an ESDRAM, an SLDRAM, and a DR RAM, etc. That is, the memory in the embodiments of the present disclosure is intended to include, but not limited to, these and any other suitable types of memories.

The embodiments of the present disclosure further provide a computer-readable storage medium for storing a computer program.

In some embodiments, the computer-readable storage medium may be applied to the AP in the embodiments of the present disclosure, and the computer program causes a computer to perform the corresponding procedure implemented by the AP in the various methods of the embodiments of the present disclosure, which will not be repeated here for the sake of brevity.

In some embodiments, the computer-readable storage medium may be applied to the STA in the embodiments of the present disclosure, and the computer program causes a computer to perform the corresponding procedure implemented by the STA in various methods of the embodiments of the present disclosure, which will not be repeated here for the sake of brevity.

The embodiments of the present disclosure further provide a computer program product including computer program instructions.

In some embodiments, the computer program product may be applied to the AP in the embodiments of the present disclosure, and the computer program instructions cause a computer to perform the corresponding procedure implemented by the AP in the various methods of the embodiments of the present disclosure, which will not be repeated here for the sake of brevity.

In some embodiments, the computer program product may be applied to the STA in the embodiments of the present disclosure, and the computer program instruction causes a computer to perform the corresponding procedure implemented by the STA in various methods of the embodiments of the present disclosure, which will not be repeated here for the sake of brevity.

The embodiments of the present disclosure further provide a computer program.

In some embodiments, the computer program may be applied to the AP in the embodiments of the present disclosure, the computer program when being executed on a computer, causes the computer to perform the corresponding procedure implemented by the AP in various methods of the embodiments of the present disclosure, which will not be repeated here for the sake of brevity.

In some embodiments, the computer program may be applied to the STA in the embodiments of the present disclosure, the computer program when being executed on a computer, causes the computer to perform the corresponding procedure implemented by the STA in various methods of the embodiments of the present disclosure, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present disclosure.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the present disclosure, it should be understood that, the disclosed system, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present disclosure may be integrated into one processing unit, or the various units may exist physically separately, or two or more units may be integrated into one unit.

If the described functions are implemented in the form of a software functional unit and sold or used as an independent product, they may be stored in a computer-readable storage medium. Based on this understanding, the technical solutions of the present disclosure essentially, or a part of the technical solutions that contributes to the prior art, or a part of the technical solutions, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present disclosure. And, the storage medium mentioned above includes a USB flash drive (U disk), a mobile hard disk, a Read-Only Memory (ROM), a Random Access Memory (RAM), a diskette, or an optical disk, and various media that may store program codes.

The above content is only specific implementations of the present disclosure, but the protection scope of the present disclosure is not limited thereto, and any skilled person familiar with this technical field may easily think of changes or substitutions within the technical scope disclosed in the present disclosure, which should be all covered within the protection scope of the present disclosure. Therefore, the protection scope of the present disclosure should be determined based on the protection scope of the claims.

Claims

1. A wireless communication method, comprising:

receiving, by a station (STA), service period load information of a delay-sensitive service;
wherein the service period load information of the delay-sensitive service comprises at least channel utilization information during restricted-target wake time (R-TWT) service periods corresponding to all R-TWT schedules established in a first basic service set (BSS), or the service period load information of the delay-sensitive service comprises at least channel utilization information during R-TWT service periods corresponding to m R-TWT schedules established in a first BSS;
wherein a number of all R-TWT schedules established in the first BSS is n, m and n are both positive integers, and m<n.

2. The method according to claim 1, wherein
in a case where the service period load information of the delay-sensitive service comprises at least the channel utilization information during the R-TWT service periods corresponding to all R-TWT schedules established in the first BSS, the channel utilization information during the R-TWT service periods corresponding to all R-TWT schedules established in the first BSS comprises at least one of:
a cumulative proportion of duration during the R-TWT service periods corresponding to all R-TWT schedules established in the first BSS, a transmission proportion of an access point (AP) and an R-TWT member STA during the R-TWT service periods corresponding to all R-TWT schedules established in the first BSS, transmission efficiency of delay-sensitive service traffics during the R-TWT service periods corresponding to all R-TWT schedules established in the first BSS, a transmission time proportion of delay-sensitive service traffics during the R-TWT service periods corresponding to all R-TWT schedules established in the first BSS, or an interference time proportion excluding an internal transmission of the first BSS during the R-TWT service periods corresponding to all R-TWT schedules established in the first BSS.

3. The method according to claim 1 or 2, wherein
in a case where the service period load information of the delay-sensitive service comprises at least the channel utilization information during the R-TWT service periods corresponding to all R-TWT schedules established in the first BSS, the service period load information of the delay-sensitive service further comprises at least one of: a number of extremely high throughput (EHT) STAs that currently support R-TWT in the first BSS, a number of EHT STAs that currently do not support R-TWT in the first BSS, a number of pre-EHT STAs that support quiet intervals in the first BSS, a number of pre-EHT STAs that do not support quiet intervals in the first BSS, available resource capability information of all R-TWT schedules established in the first BSS, available resource capability information of all R-TWT schedules to be established in the first BSS, or available resource capability information of R-TWT schedules in the first BSS.

4. The method according to claim 2 or 3, wherein

the service period load information of the delay-sensitive service is carried by a first element in a first frame;
wherein the first element comprises at least one of fields as follows: a field for an additional parameter present bitmap, a field for a number of EHT STAs supporting R-TWT, a field for a number of pre-EHT STAs supporting quiet intervals, a field for a number of EHT STAs that do not support R-TWT, a field for a number of pre-EHT STAs that do not support quiet intervals, a field for a cumulative proportion of duration of all current R-TWT service periods, a field for a transmission proportion of an AP and a member STA during all current R-TWT service periods, a field for transmission efficiency of delay-sensitive service traffics during all current R-TWT service periods, a field for a proportion of pre-scheduled transmission time of delay-sensitive service traffics during all R-TWT service periods, a field for an interference time proportion excluding a BSS internal transmission during all R-TWT service periods, a field for available resource capabilities of all established R-TWT schedules, a field for an available resource capability of an R-TWT schedule to be established, or a field for an available resource capability of an R-TWT schedule;
wherein the field for the additional parameter present bitmap is used to indicate whether at least one field in the first element is present, the field for the number of EHT STAs supporting R-TWT is used to indicate a number of EHT STAs that currently support R-TWT in the first BSS, the field for the number of pre-EHT STAs supporting quiet intervals is used to indicate a number of pre-EHT STAs that support quiet intervals in the first BSS, the field for the number of EHT STAs that do not support R-TWT is used to indicate a number of EHT STAs that currently do not support R-TWT in the first BSS, the field for the number of pre-EHT STAs that do not support quiet intervals is used to indicate a number of pre-EHT STAs that do not support quiet intervals in the first BSS, the field for the cumulative proportion of duration of all current R-TWT service periods is used to indicate a cumulative proportion of duration during the R-TWT service periods corresponding to all R-TWT schedules established in the first BSS, the field for the transmission proportion of the AP and the R-TWT member STA during all current R-TWT service periods is used to indicate a transmission proportion of the AP and an R-TWT member STA during the R-TWT service periods corresponding to all R-TWT schedules established in the first BSS, the field for the transmission efficiency of the delay-sensitive service traffics during all current R-TWT service periods is used to indicate transmission efficiency of the delay-sensitive service traffics during the R-TWT service periods corresponding to all R-TWT schedules established in the first BSS, the field for the proportion of the pre-scheduled transmission time of the delay-sensitive service traffics during all R-TWT service periods is used to indicate the transmission time proportion of the delay-sensitive service traffics during the R-TWT service periods corresponding to all R-TWT schedules established in the first BSS, the field for the interference time proportion excluding the BSS internal transmission during all R-TWT service periods is used to indicate the interference time proportion excluding an internal transmission of the first BSS during the R-TWT service periods corresponding to all R-TWT schedules established in the first BSS, the field for the available resource capabilities of all established R-TWT schedules is used to indicate available resource capability information of all R-TWT schedules established in the first BSS; the field for the available resource capability of the R-TWT schedule to be established is used to indicate available resource capability information of all R-TWT schedules to be established in the first BSS; the field for the available resource capability of the R-TWT schedules is used to indicate available resource capability information of the R-TWT schedules in the first BSS.

5. The method according to claim 4, wherein
at least one field in the first element comprises some or all of fields comprising:
the field for the cumulative proportions of the duration of all current R-TWT service periods, the field for the transmission proportion of the AP and the R-TWT member STA during all current R-TWT service periods, the field for the transmission efficiency of the delay-sensitive service traffics during all current R-TWT service periods, the field for the proportion of the pre-scheduled transmission time of the delay-sensitive service traffics during all R-TWT service periods, the field for the interference time proportion excluding the BSS internal transmission during all R-TWT service periods, the field for the available resource capabilities of all established R-TWT schedules, the field for the available resource capability of the R-TWT schedule to be established, and the field for the available resource capability of the R-TWT schedule.

6. The method according to claim 4 or 5, wherein
the first element is a BSS R-TWT service period load element.

7. The method according to any one of claims 4 to 6, wherein
the first frame is one of: a beacon frame, a probe response frame, an association response frame, and a reassociation response frame.

8. The method according to any one of claims 3 to 7, wherein

the available resource capability information of all R-TWT schedules established in the first BSS comprises an amount of available remaining medium time that is further available for a corresponding new R-TWT member STA to join the R-TWT service periods during the R-TWT service periods corresponding to all R-TWT schedules established in the first BSS, within a measurement duration corresponding to the first BSS; and/or,
the available resource capability information of all R-TWT schedules to be established in the first BSS comprises an amount of remaining medium time that is currently available during the R-TWT service periods corresponding to the R-TWT schedules to be established, within a measurement duration corresponding to the first BSS; and/or,
the available resource capability information of the R-TWT schedules in the first BSS comprises an amount of available remaining medium time during R-TWT service periods corresponding to currently established R-TWT schedules and an amount of remaining medium time currently available during R-TWT service periods corresponding to R-TWT schedules to be established, within a measurement duration corresponding to the first BSS.

9. The method according to any one of claims 2 to 8, wherein
the cumulative proportion of the duration during the R-TWT service periods corresponding to all R-TWT schedules established in the first BSS is determined based on at least one of: cumulative duration of duration during all current R-TWT service periods, a measurement duration corresponding to the first BSS, a number of consecutive beacon intervals used to measure the duration of the R-TWT service periods and channel application conditions, or duration for an STA to schedule a beacon transmission.

**10.** The method according to claim 9, wherein

the cumulative proportion of the duration during the R-TWT service periods corresponding to all R-TWT schedules established in the first BSS is determined based on a formula of:

$$the\ cumulative\ proportion\ of\ the\ durations\ during\ the\ R$$
$$- TWT\ service\ periods\ corresponding\ to\ all\ current\ R - TWT\ schedules$$
$$= \left[ \frac{\sum_{i=1}^{n} T_{SP}^{i}}{dot11ChannelUtilizationBeaconsInterval \times dot11BeaconPeriod \times 1024} \times 255 \right]$$

wherein $T_{SP}^{i}$ represents duration during an R-TWT service period corresponding to an i-th R-TWT schedule among all R-TWT schedules established in the first BSS, $\sum_{i=1}^{n} T_{SP}^{i}$ represents the cumulative duration of the duration during the R-TWT service periods corresponding to all R-TWT schedules established in the first BSS, *dot11ChannelUtilizationBeaconsIntervals* represents the number of consecutive beacon intervals used to measure the duration of the R-TWT service periods and the channel application conditions, dot11BeaconPeriod represents the duration for the STA to schedule the beacon transmission, a time proportion can be represented by a linear ratio of 255, and 255 represents 100%.

**11.** The method according to any one of claims 2 to 8, wherein
the transmission proportion of the AP and the R-TWT member STA during the R-TWT service periods corresponding to all R-TWT schedules established in the first BSS is determined based on at least one of: all medium busy time caused by a transmission between the AP and the R-TWT member STA, or cumulative duration of duration during all current R-TWT service periods.

**12.** The method according to claim 11, wherein

the transmission proportion of the AP and the R-TWT member STA during the R-TWT service periods corresponding to all R-TWT schedules established in the first BSS is determined based on a formula of:

$$the\ transmission\ proportion\ of\ the\ AP\ and\ the\ R$$
$$- TWT\ member\ STA\ during\ all\ current\ R - TWT\ service\ periods =$$
$$\left[ \frac{T_{member-busy}^{ALL}}{\sum_{i=1}^{n} T_{SP}^{i}} \times 255 \right]$$

wherein $T_{member-busy}^{ALL}$ represents all medium busy time caused by the transmission between the AP and the R-TWT member STA, $T_{SP}^{i}$ represents duration during an R-TWT service period corresponding to an i-th R-TWT schedule among all R-TWT schedules established in the first BSS, and $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

**13.** The method according to any one of claims 2 to 8, wherein
the transmission efficiency of the delay-sensitive service traffics during the R-TWT service periods corresponding to all R-TWT schedules established in the first BSS is determined based on at least one of: all medium busy time caused by a transmission of the delay-sensitive service traffics between the AP and the R-TWT member STA, or pre-scheduled transmission time of delay-sensitive service traffics during all current R-TWT service periods.

**14.** The method according to claim 13, wherein

the transmission efficiency of the delay-sensitive service traffics during the R-TWT service periods corresponding to all R-TWT schedules established in the first BSS is determined based on a formula of:

$$the\ transmission\ efficiency\ of\ the\ delay$$
$$-\ sensitive\ service\ traffics\ during\ all\ current\ R$$
$$-\ TWT\ service\ periods$$
$$= \left\lfloor \frac{T_{LST-busy}^{ALL}}{\sum_{i=1}^{n} T_{SP-Scheduled}^{i}} \times 255 \right\rfloor$$

wherein $T_{LST-busy}^{ALL}$ represents all medium busy time caused by the transmission of the delay-sensitive service traffics between the AP and the R-TWT member STA, $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, a time proportion can be represented by a linear ratio of 255, and 255 represents 100%.

15. The method according to any one of claims 2 to 8, wherein
the transmission time proportion of the delay-sensitive service traffics during the R-TWT service periods corresponding to all R-TWT schedules established in the first BSS is determined based on at least one of: pre-scheduled transmission time of delay-sensitive service traffics during all R-TWT service periods, or accumulated duration of duration during all current R-TWT service periods.

16. The method according to claim 15, wherein

the transmission time proportion of the delay-sensitive service traffics during the R-TWT service periods corresponding to all R-TWT schedules established in the first BSS is determined based on a formula of:

$$the\ proportion\ of\ the\ prescheduled\ transmission\ time\ of\ the\ delay$$
$$-\ sensitive\ service\ traffics\ during\ all\ R - TWT\ service\ periods$$
$$= \left\lfloor \frac{\sum_{i=1}^{n} T_{SP-Scheduled}^{i}}{\sum_{i=1}^{n} T_{SP}^{i}} \times 255 \right\rfloor$$

wherein $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

17. The method according to any one of claims 2 to 8, wherein
the interference time proportion excluding the internal transmission of the first BSS during the R-TWT service periods corresponding to all R-TWT schedules established in the first BSS, is determined based on at least one of: channel busy time during all R-TWT service periods, medium busy time caused by a transmission between the AP and an associated STA, or cumulative duration of duration during all current R-TWT service periods.

18. The method according to claim 17, wherein

the interference time proportion excluding the internal transmission of the first BSS during the R-TWT service periods corresponding to all R-TWT schedules established in the first BSS, is determined based on a formula of:

$the\ interference\ time\ proportion\ excluding\ the\ internal\ transmission\ of\ the\ BSS\ during\ all\ R-TWT\ service\ periods$

$$= \left\lceil \frac{\sum_{i=1}^{n} T_{SP-Channelbusy}^{i} - T_{busy}^{asso}}{\sum_{i=1}^{n} T_{SP}^{i}} \times 255 \right\rceil$$

wherein $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{busy}^{asso}$ represents medium busy time caused by the transmission between the AP and the associated STA, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

19. The method according to claim 1, wherein
in a case where the service period load information of the delay-sensitive service comprises at least the channel utilization information during the R-TWT service periods corresponding to the m R-TWT schedules established in the first BSS, the channel utilization information during the R-TWT service periods corresponding to the m R-TWT schedules established in the first BSS comprises at least one of:
a cumulative proportion of duration during an R-TWT service period corresponding to each R-TWT schedule of the m R-TWT schedules, a proportion of pre-scheduled transmission time of a delay-sensitive service traffic during an R-TWT service period corresponding to each R-TWT schedule of the m R-TWT schedules, transmission efficiency of a delay-sensitive service traffic during an R-TWT service period corresponding to each R-TWT schedule of the m R-TWT schedules, a medium busy time proportion caused by interference excluding an internal transmission of the first BSS during an R-TWT service period corresponding to each R-TWT schedule of the m R-TWT schedules, an R-TWT service period utilization ratio based on a transmission of an R-TWT member STA during an R-TWT service period corresponding to each R-TWT schedule of the m R-TWT schedules, an R-TWT service period utilization ratio based on a transmission of a delay-sensitive service traffic during an R-TWT service period corresponding to each R-TWT schedule of the m R-TWT schedules, an R-TWT service period underutilization ratio based on a transmission of a non-R-TWT member STA during an R-TWT service period corresponding to each R-TWT schedule of the m R-TWT schedules, an R-TWT service period underutilization ratio based on a transmission of a non-delay-sensitive service traffic during an R-TWT service period corresponding to each R-TWT schedule of the m R-TWT schedules, a channel utilization proportion during an R-TWT service period corresponding to each R-TWT schedule of the m R-TWT schedules, a channel utilization proportion based on a transmission of an R-TWT member STA during an R-TWT service period corresponding to each R-TWT schedule of the m R-TWT schedules, a channel utilization proportion based on a transmission of a delay-sensitive service traffic during an R-TWT service period corresponding to each R-TWT schedule of the m R-TWT schedules, or a channel clear proportion during an R-TWT service period corresponding to each R-TWT schedule of the m R-TWT schedules.

20. The method according to claim 1 or 19, wherein
in a case where the service period load information of the delay-sensitive service comprises at least the channel utilization information during the R-TWT service periods corresponding to the m R-TWT schedules established in the first BSS, the service period load information of the delay-sensitive service further comprises at least one of: a number of R-TWT member STAs of R-TWT corresponding to each R-TWT schedule of the m R-TWT schedules, or available resource capability information of each R-TWT schedule of the m R-TWT schedules.

21. The method according to claim 20, wherein
available resource capability information of a j-th R-TWT schedule among the m R-TWT schedules comprises an amount of available remaining medium time that is available for a corresponding new R-TWT member STA to join an R-TWT service period, during the R-TWT service period corresponding to the j-th R-TWT schedule, wherein j is a positive integer, and j≤ m.

22. The method according to any one of claims 19 to 21, wherein

the service period load information of the delay-sensitive service is carried by a second element in a second frame;
wherein in a case where m> 1, the second element comprises an R-TWT service period load list field, and the R-TWT service period load list field comprises m R-TWT service period load fields; or, in a case where m=1, the second element comprises an R-TWT service period load field;
wherein the R-TWT service period load field comprises at least one of: a broadcast TWT identifier field, a field for an R-TWT service period load additional parameter present bitmap, a field for a number of R-TWT member STAs, a field for a cumulative proportion of duration of a current R-TWT service period, a field for a proportion of pre-scheduled transmission time of a delay-sensitive service traffic during the R-TWT service period, a field for an interference time proportion excluding an internal transmission of the BSS during the R-TWT service period, a field for transmission efficiency of a delay-sensitive service traffic during the R-TWT service period, a field for an available resource capability of a current R-TWT schedule, a field for an R-TWT service period utilization ratio based on a transmission of an R-TWT member STA, a field for an R-TWT service period utilization ratio based on a transmission of a delay-sensitive service traffic, a field for an R-TWT service period underutilization ratio based on a transmission of a non-R-TWT member STA, a field for an R-TWT service period underutilization ratio based on a transmission of a non-delay-sensitive service traffic, a field for a channel utilization proportion during the R-TWT service period, a field for a channel utilization proportion based on a transmission of an R-TWT member STA during the R-TWT service period, a field for a channel utilization proportion based on a transmission of a delay-sensitive service traffic during the R-TWT service period, or a field for a channel clear proportion during the R-TWT service period;
wherein the broadcast TWT identifier field is used to indicate a broadcast TWT identifier corresponding to an R-TWT schedule for a currently provided R-TWT service period load parameter, the field for the R-TWT service period load additional parameter present bitmap is used to indicate whether at least one field in a j-th R-TWT service period load field is present, the field for the number of R-TWT member STAs is used to indicate a number of R-TWT member STAs corresponding to the current R-TWT schedule, the field for the cumulative proportion of the duration of the current R-TWT service period is used to indicate a cumulative proportion of duration during the R-TWT service period corresponding to the current R-TWT schedule, the field for the proportion of the pre-scheduled transmission time of the delay-sensitive service traffic during the R-TWT service period is used to indicate a proportion of pre-scheduled transmission time of the delay-sensitive service traffic during the R-TWT service period corresponding to the current R-TWT schedule, the field for the interference time proportion excluding the internal transmission of the BSS during the R-TWT service period is used to indicate a medium busy time proportion caused by interference excluding the internal transmission of the first BSS during the R-TWT service period corresponding to the current R-TWT schedule, the field for the transmission efficiency of the delay-sensitive service traffic during the R-TWT service period is used to indicate transmission efficiency of the delay-sensitive service traffic during the R-TWT service period corresponding to the current R-TWT schedule, the field for the available resource capability of the current R-TWT schedule is used to indicate available resource capability information of the current R-TWT schedule, the field for the R-TWT service period utilization ratio based on the transmission of the R-TWT member STA is used to indicate an R-TWT service period utilization ratio based on the transmission of the R-TWT member STA during the R-TWT service period corresponding to the current R-TWT schedule, the field for the R-TWT service period utilization ratio based on thee transmission of the delay-sensitive service traffic is used to indicate an R-TWT service period utilization ratio based on the transmission of the delay-sensitive service traffic during the R-TWT service period corresponding to the current R-TWT schedule, the field for the R-TWT service period underutilization ratio based on the transmission of the non-R-TWT member STA is used to indicate an R-TWT service period underutilization ratio based on the transmission of the non-R-TWT member STA during the R-TWT service period corresponding to the current R-TWT schedule, the field for the R-TWT service period underutilization ratio based on the transmission of the non-delay-sensitive service traffic is used to indicate an R-TWT service period underutilization ratio based on the transmission of the non-delay-sensitive service traffic during the R-TWT service period corresponding to the current R-TWT schedule, the field for the channel utilization proportion during the R-TWT service period is used to indicate a channel utilization proportion during the R-TWT service period corresponding to the current R-TWT schedule, the field for the channel utilization proportion based on the transmission of then R-TWT member STA during the R-TWT service period is used to indicate a channel utilization proportion based on the transmission of the R-TWT member STA during the R-TWT service period corresponding to the current R-TWT schedule, the field for the channel utilization proportion based on the transmission of the delay-sensitive service traffic during the R-TWT service period is used to indicate a channel utilization proportion based on the transmission of the delay-sensitive service traffic during the R-TWT service period corresponding to the current R-TWT schedule, and the field for the channel clear proportion during the R-TWT service period is used to indicate a channel clear proportion during the R-TWT service period corresponding to the current R-TWT schedule, wherein j is a positive integer, and j≤m.

23. The method according to claim 22, wherein
the second element is an R-TWT service period load element, or the second element is an R-TWT element.

24. The method according to claim 23, wherein

in a case where the second element is the R-TWT service period load element, the second element further comprises an R-TWT service period load control field, wherein the R-TWT service period load control field comprises at least one of: a field for a number of R-TWT service period loads, or a field for an R-TWT service period load additional parameter present bitmap;
wherein the field for the number of R-TWT service period loads is used to indicate a number of R-TWT service period load fields contained in the R-TWT service period load list field, and the field for the R-TWT service period load additional parameter present bitmap is used to indicate whether at least one field of the R-TWT service period load fields contained in the R-TWT service period load list field is present.

25. The method according to claim 24, wherein
the R-TWT service period load field does not comprise the field for the R-TWT service period load additional parameter present bitmap; and/or, the R-TWT service period load field comprises the broadcast TWT identifier field.

26. The method according to claim 23, wherein

in a case where the second element is the R-TWT element, m=1;
wherein the second element further comprises an R-TWT service period load present field, and the R-TWT service period load present field is used to indicate whether the R-TWT service period load field is present in the second element.

27. The method according to claim 26, wherein
the R-TWT service period load present field is in a broadcast TWT information field of the second element.

28. The method according to claim 27, wherein
the R-TWT service period load present field and an R-TWT traffic information present field share at least one bit in the broadcast TWT information field, wherein in a case where the R-TWT traffic information field is not contained in the second element, the at least one bit in the broadcast TWT information field only corresponds to the R-TWT service period load present field.

29. The method according to any one of claims 26 to 28, wherein
the R-TWT service period load field comprises the field for the R-TWT service period load additional parameter present bitmap; and/or, the R-TWT service period load field does not comprise the broadcast TWT identifier field.

30. The method according to any one of claims 22 to 29, wherein
at least one field in the R-TWT service period load field comprises some or all of fields comprising:
the field for the R-TWT service period utilization ratio based on the transmission of the R-TWT member STA, the field for the R-TWT service period utilization ratio based on the transmission of the delay-sensitive service traffic, the field for the R-TWT service period underutilization ratio based on the transmission of the non-R-TWT member STA, the field for the R-TWT service period underutilization ratio based on the transmission of the non-delay-sensitive service traffic, the field for the channel utilization proportion during the R-TWT service period, the field for the channel utilization proportion based on the transmission of the R-TWT member STA during the R-TWT service period, the field for the channel utilization proportion based on the transmission of the delay-sensitive service traffic during the R-TWT service period, and the field for the channel clear proportion during the R-TWT service period.

31. The method according to any one of claims 22 to 30, wherein
the second frame is one of: a beacon frame, a probe response frame, an association response frame, and a reassociation response frame.

32. The method according to any one of claims 19 to 31, wherein

a cumulative proportion of duration during an R-TWT service period corresponding to a j-th R-TWT schedule among the m R-TWT schedules is determined based on at least one of: cumulative duration of the duration of the R-TWT service period corresponding to the j-th R-TWT schedule, measurement duration corresponding to the j-th R-TWT schedule, a number of consecutive beacon intervals for measuring the duration of the R-TWT service period and a channel application condition, or duration for an STA to schedule a beacon transmission;
wherein j is a positive integer and j≤m.

33. The method according to claim 32, wherein

the cumulative proportion of the duration during the R-TWT service period corresponding to the j-th R-TWT schedule among the m R-TWT schedules is determined based on a formula of:

$$the\ cumulative\ proportion\ of\ the\ duration\ of\ the\ current\ R-TWT\ service\ period$$

$$= \left[ \frac{\sum_{i=1}^{s} T_{SP}^{i}}{dot11ChannelUtilizationBeaconsInterval \times dot11BeaconPeriod \times 1024} \times 255 \right]$$

wherein $T_{SP}^{i}$ represents duration of an i-th service period in R-TWT corresponding to the j-th R-TWT schedule,

$\sum_{i=1}^{s} T_{SP}^{i}$ represents cumulative duration of the duration during the R-TWT service period corresponding to the j-th R-TWT schedule, s represents a number of service periods in the R-TWT corresponding to the j-th R-TWT schedule, s is a positive integer, *dot11ChannelUtjljzatjonBeaconsJnterval* represents a number of consecutive beacon intervals used to measure the duration of the R-TWT service period and the channel application condition, *dot11BeaconPerjod* represents the duration for the STA to schedule the beacon transmission, a time proportion can be represented by a linear ratio of 255, and 255 represents 100%.

34. The method according to any one of claims 19 to 31, wherein

a proportion of pre-scheduled transmission time of a delay-sensitive service traffic during an R-TWT service period corresponding to a j-th R-TWT schedule among the m R-TWT schedules is determined based on at least one of: pre-scheduled transmission time of the delay-sensitive service traffic during the R-TWT service period corresponding to the j-th R-TWT schedule, or a given total R-TWT service period duration during the R-TWT service period corresponding to the j-th R-TWT schedule;
wherein j is a positive integer and j≤m.

35. The method according to claim 34, wherein

the proportion of the pre-scheduled transmission time of the delay-sensitive service traffic during the R-TWT service period corresponding to the j-th R-TWT schedule among the m R-TWT schedules is determined based on a formula of:

$$the\ proportion\ of\ the\ pre-scheduled\ transmission\ time\ of\ the\ delay$$
$$-\ sensitive\ service\ traffic\ during\ the\ R-TWT\ service\ period$$

$$=\left[\frac{\begin{array}{c}the\ pre-scheduled\ transmission\ time\ of\ the\ delay-sensitive\ service\ traffic\\during\ the\ R-TWT\ service\ period\end{array}}{given\ total\ R-TWT\ service\ period\ duration}\right.$$

$$\left.\times\ 255\right]=\left[\ (1-\frac{\sum_{i=1}^{s}T_{SP-Scheduled}^{i}}{\sum_{i=1}^{s}T_{SP}^{i}})\ \times\ 255\right]$$

wherein $T_{SP-Scheduled}^{i}$ represents pre-scheduled transmission time of a delay-sensitive service traffic during an i-th service period in R-TWT corresponding to the j-th R-TWT schedule, $\sum_{i=1}^{s}T_{SP-Scheduled}^{i}$ represents pre-scheduled transmission time of the delay-sensitive service traffic during the R-TWT service period corresponding to the j-th R-TWT schedule, $T_{SP}^{i}$ represents duration of the i-th service period in the R-TWT corresponding to the j-th R-TWT schedule, $\sum_{i=1}^{s}T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

36. The method according to any one of claims 19 to 31, wherein

a medium busy time proportion caused by interference excluding the internal transmission of the first BSS during an R-TWT service period corresponding to a j-th R-TWT schedule of the m R-TWT schedules is determined based on at least one of: channel busy time during the R-TWT service period corresponding to the j-th R-TWT schedule, medium busy time caused by a transmission between an AP and an R-TWT member STA during the R-TWT service period corresponding to the j-th R-TWT schedule, medium busy time caused by a transmission between the AP and a non-R-TWT member STA during the R-TWT service period corresponding to the j-th R-TWT schedule, or a given total R-TWT service period duration during the R-TWT service period corresponding to the j-th R-TWT schedule;
wherein j is a positive integer, and j≤m.

37. The method according to claim 36, wherein

the medium busy time proportion caused by interference excluding the internal transmission of the first BSS during an R-TWT service period corresponding to a j-th R-TWT schedule of the m R-TWT schedules is determined based on a formula of:

$$interference\ time\ proportion\ excluding\ the\ transmission\ of\ the\ BSS$$
$$during\ the\ R-TWT\ service\ period\ =$$
$$\left[\frac{\sum_{i=1}^{s}T_{SP-Channelbusy}^{i}-T_{busy}^{1}-T_{busy}^{3}}{\sum_{i=1}^{s}T_{SP}^{i}}\times\ 255\right]$$

wherein $T_{SP-Channelbusy}^{i}$ represents channel busy time during an i-th service period in R-TWT corresponding to the j-th R-TWT schedule, $\sum_{i=1}^{s}T_{SP-Channelbusy}^{i}$ represents channel busy time during the R-TWT service period corresponding to the j-th R-TWT schedule, $T_{busy}^1$ represents medium busy time caused by the transmission between the AP and the R-TWT member STA during the R-TWT service period corresponding to the j-th R-TWT schedule, $T_{busy}^3$ represents medium busy time caused by the transmission between the AP and the non-R-TWT member STA during the R-TWT service period corresponding to the j-th R-TWT schedule, $T_{SP}^i$ represents duration of the i-th service period in the R-TWT corresponding to the j-th R-TWT schedule, $\sum_{i=1}^s T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**38.** The method according to any one of claims 19 to 31, wherein

transmission efficiency of a delay-sensitive service traffic during an R-TWT service period corresponding to a j-th R-TWT schedule among the m R-TWT schedules is determined based on at least one of: medium busy time caused by a transmission of the delay-sensitive service traffic between an AP and an R-TWT member STA during the R-TWT service period corresponding to the j-th R-TWT schedule, or pre-scheduled transmission time of the delay-sensitive service traffic during the R-TWT service period corresponding to the j-th R-TWT schedule; wherein j is a positive integer, and j≤m.

**39.** The method according to claim 38, wherein

the transmission efficiency of the delay-sensitive service traffic during the R-TWT service period corresponding to the j-th R-TWT schedule among the m R-TWT schedules is determined based on a formula of:

$$
\begin{aligned}
&\textit{the transmission efficiency of the delay} - \textit{sensitive service traffic during the R} \\
&- \textit{TWT service period} \\
&= \left[ \frac{\begin{array}{c}\textit{medium busy time caused by the transmission of the delay} - \textit{sensitive service}\\ \textit{traffic between the AP and the R} - \textit{TWT member STA}\end{array}}{\begin{array}{c}\textit{the pre} - \textit{scheduled transmission time of the delay} - \textit{sensitive service traffic}\\ \textit{during the R} - \textit{TWT service period}\end{array}} \right.\\
&\left. \times 255 \right] = \left[ \frac{T_{busy}^2}{\sum_{i=1}^s T_{SP-Scheduled}^i} \times 255 \right]
\end{aligned}
$$

wherein $T_{busy}^2$ represents medium busy time caused by the transmission of the delay-sensitive service traffic between the AP and the R-TWT member STA during the R-TWT service period corresponding to the j-th R-TWT schedule, $T_{SP-Scheduled}^i$ represents pre-scheduled transmission time of the delay-sensitive service traffic during an i-th service period in R-TWT corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**40.** The method according to any one of claims 19 to 31, wherein

an R-TWT service period utilization ratio based on a transmission of an R-TWT member STA during an R-TWT service period corresponding to a j-th R-TWT schedule among the m R-TWT schedules is determined based on at least one of: medium busy time caused by a transmission between an AP and an R-TWT member STA during the R-TWT service period corresponding to the j-th R-TWT schedule, or a given total R-TWT service period duration during the R-TWT service period corresponding to the j-th R-TWT schedule;

wherein j is a positive integer, and j≤m.

41. The method according to claim 40, wherein

the R-TWT service period utilization ratio based on the transmission of the R-TWT member STA during the R-TWT service period corresponding to the j-th R-TWT schedule among the m R-TWT schedules is determined based on a formula of:

$$the\ R-TWT\ service\ period\ utilization\ ratio\ based\ on\ the\ transmission\ of\ the\ R$$
$$-TWT\ member\ STA\ =$$
$$\left[\frac{T_{busy}^1}{\sum_{i=1}^{s} T_{SP}^i} \times 255\right]$$

wherein $T_{busy}^1$ represents medium busy time caused by the transmission between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

42. The method according to any one of claims 19 to 31, wherein

an R-TWT service period utilization ratio based on a transmission of a delay-sensitive service traffic during an R-TWT service period corresponding to a j-th R-TWT schedule among the m R-TWT schedules is determined based on at least one of: medium busy time caused by the transmission of the delay-sensitive service traffic between an AP and an R-TWT member STA during the R-TWT service period corresponding to the j-th R-TWT schedule, or a given total R-TWT service period duration during the R-TWT service period corresponding to the j-th R-TWT schedule;

wherein j is a positive integer, and j≤m.

43. The method according to claim 42, wherein

the R-TWT service period utilization ratio based on the transmission of the delay-sensitive service traffic during the R-TWT service period corresponding to the j-th R-TWT schedule among the m R-TWT schedules is determined based on a formula of:

$$the\ R-TWT\ service\ period\ utilization\ ratio\ based\ on\ the\ transmission\ of$$
$$the\ delay-sensitive\ service\ traffic\ =$$
$$\left[\frac{T_{busy}^2}{\sum_{i=1}^{s} T_{SP}^i} \times 255\right]$$

wherein $T_{busy}^2$ represents medium busy time caused by the transmission of the delay-sensitive service traffic between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

44. The method according to any one of claims 19 to 31, wherein

an R-TWT service period underutilization ratio based on a transmission of a non-R-TWT member STA during an R-TWT service period corresponding to a j-th R-TWT schedule among the m R-TWT schedules is determined based on at least one of: medium busy time caused by the transmission between an AP and the non-R-TWT member STA during the R-TWT service period corresponding to the j-th R-TWT schedule, or a given total R-TWT service period duration during the R-TWT service period corresponding to the j-th R-TWT schedule; wherein j is a positive integer, and j≤m.

45. The method according to claim 44, wherein

the R-TWT service period underutilization ratio based on the transmission of the non-R-TWT member STA during the R-TWT service period corresponding to the j-th R-TWT schedule among the m R-TWT schedules is determined based on a formula of:

$$the\ R-TWT\ service\ period\ underutilization\ ratio\ based\ on\ the\ transmission$$

$$of\ the\ non-R-TWT\ member\ STA =$$

$$\left[ \frac{T_{busy}^{3}}{\sum_{i=1}^{s} T_{SP}^{i}} \times 255 \right]$$

wherein $T_{busy}^{3}$ represents medium busy time caused by the transmission between the AP and the non-R-TWT member STA during the R-TWT service period corresponding to the j-th R-TWT schedule, $T_{SP}^{i}$ represents duration of the i-th service period in R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

46. The method according to any one of claims 19 to 31, wherein

an R-TWT service period underutilization ratio based on a transmission of a non-delay-sensitive service traffic during an R-TWT service period corresponding to a j-th R-TWT schedule among the m R-TWT schedules is determined based on at least one of: medium busy time caused by a transmission between an AP and a non-R-TWT member STA during the R-TWT service period corresponding to the j-th R-TWT schedule, medium busy time caused by the transmission of the non-delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule; wherein j is a positive integer and j≤m.

47. The method according to claim 46, wherein

the R-TWT service period underutilization ratio based on the transmission of the non-delay-sensitive service traffic during the R-TWT service period corresponding to the j-th R-TWT schedule among the m R-TWT schedules is determined based on a formula of:

$$the\ R-TWT\ service\ period\ underutilization\ ratio\ based\ on\ the\ transmission$$

$$of\ the\ non-delay-sensitive\ service\ traffic=$$

$$\left[\frac{T_{busy}^{4}}{\sum_{i=1}^{s}T_{SP}^{i}}\times255\right]$$

wherein $T_{busy}^{4}$ represents medium busy time caused by the transmission between the AP and the non-R-TWT member STA and the medium busy time caused by the transmission of the non-delay-sensitive service traffic between the AP and the R-TWT member STA during the R-TWT service period corresponding to the j-th R-TWT schedule, $T_{SP}^{i}$ represents duration of an i-th service period in R-TWT corresponding to the j-th R-TWT schedule, $\sum_{i=1}^{s}T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**48.** The method according to any one of claims 19 to 31, wherein

a channel utilization proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;
wherein j is a positive integer and j≤m.

**49.** The method according to claim 48, wherein

the channel utilization proportion during the R-TWT service period corresponding to the j-th R-TWT schedule among the m R-TWT schedules is determined based on a formula of:

$$the\ channel\ utilization\ proportion\ during\ the\ R-TWT\ service\ period=$$

$$\left[\frac{\sum_{i=1}^{s}T_{SP-Channelbusy}^{i}}{\sum_{i=1}^{s}T_{SP}^{i}}\times255\right]$$

wherein $T_{SP-Channelbusy}^{i}$ represents channel busy time during an i-th service period in R-TWT corresponding to the j-th R-TWT schedule, $\sum_{i=1}^{s}T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s}T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**50.** The method according to any one of claims 19 to 31, wherein

a channel utilization proportion based on a transmission of an R-TWT member STA during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission between an AP and the R-TWT member STA during the R-TWT service period corresponding to the j-th R-TWT schedule;

wherein j is a positive integer and j≤m.

**51.** The method according to claim 50, wherein

the channel utilization proportion based on the transmission of the R-TWT member STA during the R-TWT service period corresponding to the j-th R-TWT schedule among the m R-TWT schedules is determined based on a formula of:

$$
\begin{aligned}
&\text{the channel utilization proportion based on the transmission of the } R \\
&- TWT \text{ member } STA \text{ during the } R - TWT \text{ service period} \\
&= \left[ \frac{\begin{array}{c}\text{medium busy time caused by the transmission between the } AP \\ \text{and the } R - TWT \text{ member } STA\end{array}}{\text{channel busy time during the } R - TWT \text{ service period}} \right. \\
&\left. \times 255 \right] = \left[ \frac{T_{busy}^{1}}{\sum_{i=1}^{s} T_{SP-Channelbusy}^{i}} \times 255 \right]
\end{aligned}
$$

wherein $T_{busy}^{1}$ represents medium busy time caused by the transmission between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**52.** The method according to any one of claims 19 to 31, wherein

a channel utilization proportion based on a transmission of a delay-sensitive service traffic during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission of the delay-sensitive service traffic between an AP and an R-TWT member STA during the R-TWT service period corresponding to the j-th R-TWT schedule;
wherein j is a positive integer, and j≤m.

**53.** The method according to claim 52, wherein

the channel utilization proportion based on the transmission of the delay-sensitive service traffic during the R-TWT service period corresponding to the j-th R-TWT schedule among the m R-TWT schedules is determined based on a formula of:

$$the\ channel\ utilization\ proportion\ based\ on\ the\ transmission\ of\ the\ delay$$

$$-\ sensitive\ service\ traffic\ during\ the\ R-TWT\ service\ period$$

$$=\left[\frac{medium\ busy\ time\ caused\ by\ the\ transmission\ of\ the\ delay-sensitive\ service\ traffic}{channel\ busy\ time\ during\ the\ R-TWT\ service\ period}\right.$$

$$\left.\times\ 255\right]=\left[\frac{T_{busy}^{2}}{\sum_{i=1}^{s}T_{SP-Channelbusy}^{i}}\times\ 255\right]$$

wherein $T_{busy}^{2}$ represents medium busy time caused by the transmission of the delay-sensitive service traffic between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s}T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

54. The method according to any one of claims 19 to 31, wherein

a channel clear proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;
wherein j is a positive integer, and j≤m.

55. The method according to claim 54, wherein

the channel clear proportion during the R-TWT service period corresponding to the j-th R-TWT schedule among the m R-TWT schedules is determined based on a formula of:

$$the\ channel\ clear\ time\ proportion\ during\ the\ R-TWT\ service\ period$$

$$=\left[\ (1\right.$$

$$\left.-\frac{channel\ busy\ time\ during\ the\ R-TWT\ service\ period}{given\ total\ R-TWT\ service\ period\ duration})\ \times\ 255\right]$$

$$=\left[\ (1-\frac{\sum_{i=1}^{s}T_{SP-Channelbusy}^{i}}{\sum_{i=1}^{s}T_{SP}^{i}})\ \times\ 255\right]$$

wherein $T_{SP-Channelbusy}^{i}$ represents channel busy time during an i-th service period in R-TWT corresponding to the j-th R-TWT schedule, $\sum_{i=1}^{s}T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s}T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

56. The method according to any one of claims 1 to 55, wherein the method further comprises:

selecting, by the STA, an AP and/or a link for a transmission of a delay-sensitive service traffic according to the service period load information of the delay-sensitive service; and/or,
selecting, by the STA, broadcast target wake time (TWT) corresponding to a target R-TWT schedule established and intended to be joined by a target AP according to the R-TWT service period load information, and/or selecting, by the STA, broadcast TWT corresponding to a target R-TWT schedule established and intended to be joined by a target link according to the R-TWT service period load information.

57. The method according to any one of claims 1 to 56, wherein
a non-access multi-link device (Non-AP MLD) to which the STA belongs, selects a link of a target traffic identifier (TID) mapped in an uplink direction and/or a downlink direction in a traffic identifier-to-link mapping process, based on the R-TWT service period load information.

58. A wireless communication method, comprising:

transmitting, by an access point (AP), service period load information of a delay-sensitive service;
wherein the service period load information of the delay-sensitive service comprises at least channel utilization information during restricted-target wake time (R-TWT) service periods corresponding to all R-TWT schedules established in a first basic service set (BSS), or the service period load information of the delay-sensitive service comprises at least channel utilization information during R-TWT service periods corresponding to m R-TWT schedules established in a first BSS;
wherein a number of all R-TWT schedules established in the first BSS is n, m and n are both positive integers, and m<n.

59. The method according to claim 58, wherein
in a case where the service period load information of the delay-sensitive service comprises at least the channel utilization information during the R-TWT service periods corresponding to all R-TWT schedules established in the first BSS, the channel utilization information during the R-TWT service periods corresponding to all R-TWT schedules established in the first BSS comprises at least one of:
a cumulative proportion of duration during the R-TWT service periods corresponding to all R-TWT schedules established in the first BSS, a transmission proportion of the AP and an R-TWT member station (STA) during the R-TWT service periods corresponding to all R-TWT schedules established in the first BSS, transmission efficiency of delay-sensitive service traffics during the R-TWT service periods corresponding to all R-TWT schedules established in the first BSS, a transmission time proportion of delay-sensitive service traffics during the R-TWT service periods corresponding to all R-TWT schedules established in the first BSS, or an interference time proportion excluding an internal transmission of the first BSS during the R-TWT service periods corresponding to all R-TWT schedules established in the first BSS.

60. The method according to claim 58 or 59, wherein
in a case where the service period load information of the delay-sensitive service comprises at least the channel utilization information during the R-TWT service periods corresponding to all R-TWT schedules established in the first BSS, the service period load information of the delay-sensitive service further comprises at least one of: a number of extremely high throughput (EHT) STAs that currently support R-TWT in the first BSS, a number of EHT STAs that currently do not support R-TWT in the first BSS, a number of pre-EHT STAs that support quiet intervals in the first BSS, a number of pre-EHT STAs that do not support quiet intervals in the first BSS, available resource capability information of all R-TWT schedules established in the first BSS, available resource capability information of all R-TWT schedules to be established in the first BSS, or available resource capability information of R-TWT schedules in the first BSS.

61. The method according to claim 59 or 60, wherein

the service period load information of the delay-sensitive service is carried by a first element in a first frame;
wherein the first element comprises at least one of fields as follows: a field for an additional parameter present bitmap, a field for a number of EHT STAs supporting R-TWT, a field for a number of pre-EHT STAs supporting quiet intervals, a field for a number of EHT STAs that do not support R-TWT, a field for a number of pre-EHT STAs that do not support quiet intervals, a field for a cumulative proportion of duration of all current R-TWT service periods, a field for a transmission proportion of the AP and a member STA during all current R-TWT service periods, a field for transmission efficiency of delay-sensitive service traffics during all current R-TWT service periods, a field for a proportion of pre-scheduled transmission time of delay-sensitive service traffics during all R-TWT service periods, a field for an interference time proportion excluding a BSS internal transmission during all R-TWT service periods, a field for available resource capabilities of all established R-TWT schedules, a field for an available resource capability of an R-TWT schedule to be established, or a field for an available resource capability of an R-TWT schedule;

wherein the field for the additional parameter present bitmap is used to indicate whether at least one field in the first element is present, the field for the number of EHT STAs supporting R-TWT is used to indicate a number of EHT STAs that currently support R-TWT in the first BSS, the field for the number of pre-EHT STAs supporting quiet intervals is used to indicate a number of pre-EHT STAs that support quiet intervals in the first BSS, the field for the number of EHT STAs that do not support R-TWT is used to indicate a number of EHT STAs that currently do not support R-TWT in the first BSS, the field for the number of pre-EHT STAs that do not support quiet intervals is used to indicate a number of pre-EHT STAs that do not support quiet intervals in the first BSS, the field for the cumulative proportion of duration of all current R-TWT service periods is used to indicate a cumulative proportion of duration during the R-TWT service periods corresponding to all R-TWT schedules established in the first BSS, the field for the transmission proportion of the AP and the R-TWT member STA during all current R-TWT service periods is used to indicate a transmission proportion of the AP and an R-TWT member STA during the R-TWT service periods corresponding to all R-TWT schedules established in the first BSS, the field for the transmission efficiency of the delay-sensitive service traffics during all current R-TWT service periods is used to indicate transmission efficiency of the delay-sensitive service traffics during the R-TWT service periods corresponding to all R-TWT schedules established in the first BSS, the field for the proportion of the pre-scheduled transmission time of the delay-sensitive service traffics during all R-TWT service periods is used to indicate the transmission time proportion of the delay-sensitive service traffics during the R-TWT service periods corresponding to all R-TWT schedules established in the first BSS, the field for the interference time proportion excluding the BSS internal transmission during all R-TWT service periods is used to indicate the interference time proportion excluding an internal transmission of the first BSS during the R-TWT service periods corresponding to all R-TWT schedules established in the first BSS, the field for the available resource capabilities of all established R-TWT schedules is used to indicate available resource capability information of all R-TWT schedules established in the first BSS; the field for the available resource capability of the R-TWT schedule to be established is used to indicate available resource capability information of all R-TWT schedules to be established in the first BSS; the field for the available resource capability of the R-TWT schedules is used to indicate available resource capability information of the R-TWT schedules in the first BSS.

62. The method according to claim 61, wherein

at least one field in the first element comprises some or all of fields comprising:

the field for the cumulative proportions of the duration of all current R-TWT service periods, the field for the transmission proportion of the AP and the R-TWT member STA during all current R-TWT service periods, the field for the transmission efficiency of the delay-sensitive service traffics during all current R-TWT service periods, the field for the proportion of the pre-scheduled transmission time of the delay-sensitive service traffics during all R-TWT service periods, the field for the interference time proportion excluding the BSS internal transmission during all R-TWT service periods, the field for the available resource capabilities of all established R-TWT schedules, the field for the available resource capability of the R-TWT schedule to be established, and the field for the available resource capability of the R-TWT schedule.

63. The method according to claim 61 or 62, wherein

the first element is a BSS R-TWT service period load element.

64. The method according to any one of claims 61 to 63, wherein

the first frame is one of: a beacon frame, a probe response frame, an association response frame, and a reassociation response frame.

65. The method according to any one of claims 60 to 64, wherein

the available resource capability information of all R-TWT schedules established in the first BSS comprises an amount of available remaining medium time that is further available for a corresponding new R-TWT member STA to join the R-TWT service periods during the R-TWT service periods corresponding to all R-TWT schedules established in the first BSS, within a measurement duration corresponding to the first BSS; and/or,

the available resource capability information of all R-TWT schedules to be established in the first BSS comprises an amount of remaining medium time that is currently available during the R-TWT service periods corresponding to the R-TWT schedules to be established, within a measurement duration corresponding to the first BSS; and/or, the available resource capability information of the R-TWT schedules in the first BSS comprises an amount of available remaining medium time during R-TWT service periods corresponding to currently established R-TWT schedules and an amount of remaining medium time currently available during R-TWT service periods corresponding to R-TWT schedules to be established, within a measurement duration corresponding to the first BSS.

66. The method according to any one of claims 59 to 65, wherein

the cumulative proportion of the duration during the R-TWT service periods corresponding to all R-TWT schedules established in the first BSS is determined based on at least one of: cumulative duration of duration during all current R-TWT service periods, a measurement duration corresponding to the first BSS, a number of consecutive beacon intervals used to measure the duration of the R-TWT service periods and channel application conditions, or duration for an STA to schedule a beacon transmission.

67. The method according to claim 66, wherein

the cumulative proportion of the duration during the R-TWT service periods corresponding to all R-TWT schedules established in the first BSS is determined based on a formula of:

$$
\text{the cumulative proportion of the durations during the R}
$$
$$
- TWT\ service\ periods\ corresponding\ to\ all\ current\ R - TWT\ schedules
$$
$$
= \left[ \frac{\sum_{i=1}^{n} T_{SP}^{i}}{dot11ChannelUtilizationBeaconsInterval \times dot11BeaconPeriod \times 1024} \times 255 \right]
$$

wherein $T_{SP}^{i}$ represents duration during an R-TWT service period corresponding to an i-th R-TWT schedule among all R-TWT schedules established in the first BSS, $\sum_{i=1}^{n} T_{SP}^{i}$ represents the cumulative duration of the duration during the R-TWT service periods corresponding to all R-TWT schedules established in the first BSS, *dot11ChannelUtilizationBeaconsIntervals* represents the number of consecutive beacon intervals used to measure the duration of the R-TWT service periods and the channel application conditions, dot11BeaconPeriod represents the duration for the STA to schedule the beacon transmission, a time proportion can be represented by a linear ratio of 255, and 255 represents 100%.

68. The method according to any one of claims 59 to 65, wherein

the transmission proportion of the AP and the R-TWT member STA during the R-TWT service periods corresponding to all R-TWT schedules established in the first BSS is determined based on at least one of: all medium busy time caused by a transmission between the AP and the R-TWT member STA, or cumulative duration of duration during all current R-TWT service periods.

69. The method according to claim 68, wherein

the transmission proportion of the AP and the R-TWT member STA during the R-TWT service periods corresponding to all R-TWT schedules established in the first BSS is determined based on a formula of:

$$
\text{the transmission proportion of the AP and the R}
$$
$$
- TWT\ member\ STA\ during\ all\ current\ R - TWT\ service\ periods =
$$
$$
\left[ \frac{T_{member-busy}^{ALL}}{\sum_{i=1}^{n} T_{SP}^{i}} \times 255 \right]
$$

wherein $T_{member-busy}^{ALL}$ represents all medium busy time caused by the transmission between the AP and the R-TWT member STA, $T_{SP}^i$ represents duration during an R-TWT service period corresponding to an i-th R-TWT schedule among all R-TWT schedules established in the first BSS, and $\sum_{i=1}^{n} T_{SP}^i$ represents cumulative duration of duration during the R-TWT service periods corresponding to all R-TWT schedules established in the first BSS, a time proportion can be represented by a linear ratio of 255, and 255 represents 100%.

70. The method according to any one of claims 59 to 65, wherein
the transmission efficiency of the delay-sensitive service traffics during the R-TWT service periods corresponding to all R-TWT schedules established in the first BSS is determined based on at least one of: all medium busy time caused by a transmission of the delay-sensitive service traffics between the AP and the R-TWT member STA, or pre-scheduled transmission time of delay-sensitive service traffics during all current R-TWT service periods.

71. The method according to claim 70, wherein

the transmission efficiency of the delay-sensitive service traffics during the R-TWT service periods corresponding to all R-TWT schedules established in the first BSS is determined based on a formula of:

$$\text{the transmission efficiency of the delay}$$
$$- \text{sensitive service traffics during all current } R$$
$$- TWT \text{ service periods}$$
$$= \left[ \frac{T_{LST-busy}^{ALL}}{\sum_{i=1}^{n} T_{SP-Scheduled}^i} \times 255 \right]$$

wherein $T_{LST-busy}^{ALL}$ represents all medium busy time caused by the transmission of the delay-sensitive service traffics between the AP and the R-TWT member STA, $T_{SP-Scheduled}^i$ represents pre-scheduled transmission time of a delay-sensitive service traffic during an R-TWT service period corresponding to an i-th R-TWT schedule among all R-TWT schedules established in the first BS$^S$, $\sum_{i=1}^{n} T_{SP-Scheduled}^i$ represents pre-scheduled transmission time of the delay-sensitive service traffics during all R-TWT service periods, a time proportion can be represented by a linear ratio of 255, and 255 represents 100%.

72. The method according to any one of claims 59 to 65, wherein
the transmission time proportion of the delay-sensitive service traffics during the R-TWT service periods corresponding to all R-TWT schedules established in the first BSS is determined based on at least one of: pre-scheduled transmission time of delay-sensitive service traffics during all R-TWT service periods, or accumulated duration of duration during all current R-TWT service periods.

73. The method according to claim 72, wherein

the transmission time proportion of the delay-sensitive service traffics during the R-TWT service periods corresponding to all R-TWT schedules established in the first BSS is determined based on a formula of:

$$\text{the proportion of the prescheduled transmission time of the delay}$$
$$- \text{sensitive service traffics during all } R - TWT \text{ service periods}$$
$$= \left[ \frac{\sum_{i=1}^{n} T_{SP-Scheduled}^i}{\sum_{i=1}^{n} T_{SP}^i} \times 255 \right]$$

wherein $T_{SP-Scheduled}^i$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

74. The method according to any one of claims 59 to 65, wherein
the interference time proportion excluding the internal transmission of the first BSS during the R-TWT service periods corresponding to all R-TWT schedules established in the first BSS, is determined based on at least one of: channel busy time during all R-TWT service periods, medium busy time caused by a transmission between the AP and an associated STA, or cumulative duration of duration during all current R-TWT service periods.

75. The method according to claim 74, wherein

the interference time proportion excluding the internal transmission of the first BSS during the R-TWT service periods corresponding to all R-TWT schedules established in the first BSS, is determined based on a formula of:

$$\text{the interfrence time proportion excluding the internal transmission of}$$

$$\text{the BSS during all } R-TWT \text{ service periods}$$

$$= \left[ \frac{\sum_{i=1}^{n} T_{SP-Channelbusy}^{i} - T_{busy}^{asso}}{\sum_{i=1}^{n} T_{SP}^{i}} \times 255 \right]$$

wherein $T_{SP-Scheduled}^{i}$ represents pre-scheduled transmission time of a delay-sensitive service traffic during an R-TWT service period corresponding to an i-th R-TWT schedule among all R-TWT schedules established in the first BSS, $\sum_{i=1}^{n} T_{SP-Scheduled}^{i}$ represents pre-scheduled transmission time of the delay-sensitive service traffics during all R-TWT service periods, $T_{busy}^{asso}$ represents medium busy time caused by the transmission between the AP and the associated STA, $T_{SP}^{i}$ represents duration during an R-TWT service period corresponding to an i-th R-TWT schedule among all R-TWT schedules established in the first BSS, $\sum_{i=1}^{n} T_{SP}^{i}$ represents cumulative duration of duration during the R-TWT service periods corresponding to all R-TWT schedules established in the first BSS, a time proportion can be represented by a linear ratio of 255, and 255 represents 100%.

76. The method according to claim 58, wherein
in a case where the service period load information of the delay-sensitive service comprises at least the channel utilization information during the R-TWT service periods corresponding to the m R-TWT schedules established in the first BSS, the channel utilization information during the R-TWT service periods corresponding to the m R-TWT schedules established in the first BSS comprises at least one of:
a cumulative proportion of duration during an R-TWT service period corresponding to each R-TWT schedule of the m R-TWT schedules, a proportion of pre-scheduled transmission time of a delay-sensitive service traffic during an R-TWT service period corresponding to each R-TWT schedule of the m R-TWT schedules, transmission efficiency of a delay-sensitive service traffic during an R-TWT service period corresponding to each R-TWT schedule of the m R-TWT schedules, a medium busy time proportion caused by interference excluding an internal transmission of the first BSS during an R-TWT service period corresponding to each R-TWT schedule of the m R-TWT schedules, an R-TWT service period utilization ratio based on a transmission of an R-TWT member STA during an R-TWT service period corresponding to each R-TWT schedule of the m R-TWT schedules, an R-TWT service period utilization ratio based on a transmission of a delay-sensitive service traffic during an R-TWT service period corresponding to each R-TWT schedule of the m R-TWT schedules, an R-TWT service period underutilization ratio based on a transmission of a non-R-TWT member STA during an R-TWT service period corresponding to each R-TWT schedule of the m R-TWT schedules, an R-TWT service period underutilization ratio based on a transmission of a non-delay-sensitive service traffic during an R-TWT service period corresponding to each R-TWT schedule of the m R-TWT schedules, a channel utilization proportion during an R-TWT service period corresponding to each R-TWT schedule of the m R-TWT schedules, a channel utilization proportion based on a transmission of an R-TWT member STA during an R-TWT service period corresponding to each R-TWT schedule of the m R-TWT schedules, a channel utilization proportion based on a transmission of a delay-sensitive service traffic during an R-TWT service period corresponding to each R-TWT schedule of the m R-TWT schedules, or a channel clear proportion during an R-TWT service period corresponding to each R-TWT schedule of the m R-TWT schedules.

77. The method according to claim 58 or 76, wherein
in a case where the service period load information of the delay-sensitive service comprises at least the channel utilization information during the R-TWT service periods corresponding to the m R-TWT schedules established in the first BSS, the service period load information of the delay-sensitive service further comprises at least one of: a number of R-TWT member STAs of R-TWT corresponding to each R-TWT schedule of the m R-TWT schedules, or available resource capability information of each R-TWT schedule of the m R-TWT schedules.

78. The method according to claim 77, wherein
available resource capability information of a j-th R-TWT schedule among the m R-TWT schedules comprises an amount of available remaining medium time that is available for a corresponding new R-TWT member STA to join an R-TWT service period, during the R-TWT service period corresponding to the j-th R-TWT schedule, wherein j is a positive integer, and j≤ m.

79. The method according to any one of claims 76 to 78, wherein

the service period load information of the delay-sensitive service is carried by a second element in a second frame;
wherein in a case where m>1, the second element comprises an R-TWT service period load list field, and the R-TWT service period load list field comprises m R-TWT service period load fields; or, in a case where m=1, the second element comprises an R-TWT service period load field;
wherein the R-TWT service period load field comprises at least one of: a broadcast TWT identifier field, a field for an R-TWT service period load additional parameter present bitmap, a field for a number of R-TWT member STAs, a field for a cumulative proportion of duration of a current R-TWT service period, a field for a proportion of pre-scheduled transmission time of a delay-sensitive service traffic during the R-TWT service period, a field for an interference time proportion excluding an internal transmission of the BSS during the R-TWT service period, a field for transmission efficiency of a delay-sensitive service traffic during the R-TWT service period, a field for an available resource capability of a current R-TWT schedule, a field for an R-TWT service period utilization ratio based on a transmission of an R-TWT member STA, a field for an R-TWT service period utilization ratio based on a transmission of a delay-sensitive service traffic, a field for an R-TWT service period underutilization ratio based on a transmission of a non-R-TWT member STA, a field for an R-TWT service period underutilization ratio based on a transmission of a non-delay-sensitive service traffic, a field for a channel utilization proportion during the R-TWT service period, a field for a channel utilization proportion based on a transmission of an R-TWT member STA during the R-TWT service period, a field for a channel utilization proportion based on a transmission of a delay-sensitive service traffic during the R-TWT service period, or a field for a channel clear proportion during the R-TWT service period;
wherein the broadcast TWT identifier field is used to indicate a broadcast TWT identifier corresponding to an R-TWT schedule for a currently provided R-TWT service period load parameter, the field for the R-TWT service period load additional parameter present bitmap is used to indicate whether at least one field in a j-th R-TWT service period load field is present, the field for the number of R-TWT member STAs is used to indicate a number of R-TWT member STAs corresponding to the current R-TWT schedule, the field for the cumulative proportion of the duration of the current R-TWT service period is used to indicate a cumulative proportion of duration during the R-TWT service period corresponding to the current R-TWT schedule, the field for the proportion of the pre-scheduled transmission time of the delay-sensitive service traffic during the R-TWT service period is used to indicate a proportion of pre-scheduled transmission time of the delay-sensitive service traffic during the R-TWT service period corresponding to the current R-TWT schedule, the field for the interference time proportion excluding the internal transmission of the BSS during the R-TWT service period is used to indicate a medium busy time proportion caused by interference excluding the internal transmission of the first BSS during the R-TWT service period corresponding to the current R-TWT schedule, the field for the transmission efficiency of the delay-sensitive service traffic during the R-TWT service period is used to indicate transmission efficiency of the delay-sensitive service traffic during the R-TWT service period corresponding to the current R-TWT schedule, the field for the available resource capability of the current R-TWT schedule is used to indicate available resource capability information of the current R-TWT schedule, the field for the R-TWT service period utilization ratio based on the transmission of the R-TWT member STA is used to indicate an R-TWT service period utilization ratio based on the transmission of the R-TWT member STA during the R-TWT service period corresponding to the current R-TWT schedule, the field for the R-TWT service period utilization ratio based on thee transmission of the delay-sensitive service traffic is used to indicate an R-TWT service period utilization ratio based on the transmission of the delay-sensitive service traffic during the R-TWT service period corresponding to the current R-TWT schedule, the field for the R-TWT service period underutilization ratio based on the transmission of the non-R-TWT member STA is used to indicate an R-TWT service period underutilization ratio based on the transmission of the non-R-TWT member STA during the R-TWT service period corresponding to the current R-TWT schedule, the field for the R-TWT service period underutilization ratio based on the transmission of the non-delay-sensitive service traffic is used to indicate an R-TWT service period underutilization ratio based on the transmission of the non-delay-sensitive service traffic during the R-TWT service period corresponding to the current R-TWT schedule, the field for the channel utilization proportion during the R-TWT service period is used to indicate a channel utilization proportion during the R-TWT service period corresponding to the current R-TWT schedule, the field for the channel utilization proportion based on the transmission of then R-TWT member STA during the R-TWT service period is used to indicate a channel utilization proportion based on the transmission of the R-TWT member STA during the R-TWT service period corresponding to the current R-TWT schedule, the field for the channel utilization proportion based on the transmission of the delay-sensitive service traffic during the R-TWT service period is used to indicate a channel utilization proportion based on the transmission of the delay-sensitive service traffic during the R-TWT service period corresponding to the current R-TWT schedule, and the field for the channel clear proportion during the R-TWT service period is used to indicate a channel clear proportion during the R-TWT service period corresponding to the current R-TWT schedule, wherein j is a positive integer, and j≤m.

80. The method according to claim 79, wherein
the second element is an R-TWT service period load element, or the second element is an R-TWT element.

81. The method according to claim 80, wherein

in a case where the second element is the R-TWT service period load element, the second element further comprises an R-TWT service period load control field, wherein the R-TWT service period load control field comprises at least one of: a field for a number of R-TWT service period loads, or a field for an R-TWT service period load additional parameter present bitmap;
wherein the field for the number of R-TWT service period loads is used to indicate a number of R-TWT service period load fields contained in the R-TWT service period load list field, and the field for the R-TWT service period load additional parameter present bitmap is used to indicate whether at least one field of the R-TWT service period load fields contained in the R-TWT service period load list field is present.

82. The method according to claim 81, wherein
the R-TWT service period load field does not comprise the field for the R-TWT service period load additional parameter present bitmap; and/or, the R-TWT service period load field comprises the broadcast TWT identifier field.

83. The method according to claim 80, wherein

in a case where the second element is the R-TWT element, m=1;
wherein the second element further comprises an R-TWT service period load present field, and the R-TWT service period load present field is used to indicate whether the R-TWT service period load field is present in the second element.

84. The method according to claim 83, wherein
the R-TWT service period load present field is in a broadcast TWT information field of the second element.

85. The method according to claim 84, wherein
the R-TWT service period load present field and an R-TWT traffic information present field share at least one bit in the broadcast TWT information field, wherein in a case where the R-TWT traffic information field is not contained in the second element, the at least one bit in the broadcast TWT information field only corresponds to the R-TWT service period load present field.

86. The method according to any one of claims 83 to 85, wherein
the R-TWT service period load field comprises the field for the R-TWT service period load additional parameter present bitmap; and/or, the R-TWT service period load field does not comprise the broadcast TWT identifier field.

87. The method according to any one of claims 79 to 86, wherein
at least one field in the R-TWT service period load field comprises some or all of fields comprising:
the field for the R-TWT service period utilization ratio based on the transmission of the R-TWT member STA, the field for the R-TWT service period utilization ratio based on the transmission of the delay-sensitive service traffic, the field for the R-TWT service period underutilization ratio based on the transmission of the non-R-TWT member STA, the field for the R-TWT service period underutilization ratio based on the transmission of the non-delay-sensitive service traffic, the field for the channel utilization proportion during the R-TWT service period, the field for the channel utilization proportion based on the transmission of the R-TWT member STA during the R-TWT service period, the field for the channel utilization proportion based on the transmission of the delay-sensitive service traffic during the R-TWT service period, and the field for the channel clear proportion during the R-TWT service period.

88. The method according to any one of claims 79 to 87, wherein
the second frame is one of: a beacon frame, a probe response frame, an association response frame, and a reassociation response frame.

89. The method according to any one of claims 76 to 88, wherein

a cumulative proportion of duration during an R-TWT service period corresponding to a j-th R-TWT schedule among the m R-TWT schedules is determined based on at least one of: cumulative duration of the duration of the R-TWT service period corresponding to the j-th R-TWT schedule, measurement duration corresponding to the j-th R-TWT schedule, a number of consecutive beacon intervals for measuring the duration of the R-TWT service period and a channel application condition, or duration for an STA to schedule a beacon transmission;
wherein j is a positive integer and j≤m.

90. The method according to claim 89, wherein

the cumulative proportion of the duration during the R-TWT service period corresponding to the j-th R-TWT schedule among the m R-TWT schedules is determined based on a formula of:

$$the\ cumulative\ proportion\ of\ the\ duration\ of\ the\ current\ R-TWT\ service\ period$$

$$= \left\lceil \frac{\sum_{i=1}^{s} T_{SP}^{i}}{dot11ChannelUtilizationBeaconsInterval \times dot11BeaconPeriod \times 1024} \times 255 \right\rceil$$

wherein $T_{SP}^{i}$ represents duration of an i-th service period in R-TWT corresponding to the j-th R-TWT schedule, $\sum_{i=1}^{s} T_{SP}^{i}$ represents cumulative duration of the duration during the R-TWT service period corresponding to the j-th R-TWT schedule, s represents a number of service periods in the R-TWT corresponding to the j-th R-TWT schedule, s is a positive integer, *dot11ChannelUtilizationBeaconsInterval* represents a number of consecutive beacon intervals used to measure the duration of the R-TWT service period and the channel application condition, *dot11BeaconPeriod* represents the duration for the STA to schedule the beacon transmission, a time proportion can be represented by a linear ratio of 255, and 255 represents 100%.

91. The method according to any one of claims 76 to 88, wherein

a proportion of pre-scheduled transmission time of a delay-sensitive service traffic during an R-TWT service period corresponding to a j-th R-TWT schedule among the m R-TWT schedules is determined based on at least one of: pre-scheduled transmission time of the delay-sensitive service traffic during the R-TWT service period corresponding to the j-th R-TWT schedule, or a given total R-TWT service period duration during the R-TWT service period corresponding to the j-th R-TWT schedule;

wherein j is a positive integer and j≤m.

**92.** The method according to claim 91, wherein

the proportion of the pre-scheduled transmission time of the delay-sensitive service traffic during the R-TWT service period corresponding to the j-th R-TWT schedule among the m R-TWT schedules is determined based on a formula of:

$$\textit{the proportion of the pre} - \textit{scheduled transmission time of the delay}$$
$$- \textit{sensitive service traffic during the R} - \textit{TWT service period}$$
$$= \left[ \frac{\begin{matrix}\textit{the pre} - \textit{scheduled transmission time of the delay} - \textit{sensitive service traffic} \\ \textit{during the R} - \textit{TWT service period}\end{matrix}}{\textit{given total R} - \textit{TWT service period duration}} \right.$$
$$\left. \times 255 \right] = \left[ \; \left( 1 - \frac{\sum_{i=1}^{s} T_{SP-Scheduled}^{i}}{\sum_{i=1}^{s} T_{SP}^{i}} \right) \; \times 255 \right]$$

wherein $T_{SP-Scheduled}^{i}$ represents pre-scheduled transmission time of a delay-sensitive service traffic during an i-th service period in R-TWT corresponding to the j-th R-TWT schedule, $\sum_{i=1}^{s} T_{SP-Scheduled}^{i}$ represents pre-scheduled transmission time of the delay-sensitive service traffic during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**93.** The method according to any one of claims 76 to 88, wherein

a medium busy time proportion caused by interference excluding the internal transmission of the first BSS during an R-TWT service period corresponding to a j-th R-TWT schedule of the m R-TWT schedules is determined based on at least one of: channel busy time during the R-TWT service period corresponding to the j-th R-TWT schedule, medium busy time caused by a transmission between the AP and an R-TWT member STA during the R-TWT service period corresponding to the j-th R-TWT schedule, medium busy time caused by a transmission between the AP and a non-R-TWT member STA during the R-TWT service period corresponding to the j-th R-TWT schedule, or a given total R-TWT service period duration during the R-TWT service period corresponding to the j-th R-TWT schedule;
wherein j is a positive integer, and j≤m.

**94.** The method according to claim 93, wherein

the medium busy time proportion caused by interference excluding the internal transmission of the first BSS during an R-TWT service period corresponding to a j-th R-TWT schedule of the m R-TWT schedules is determined based on a formula of:

$$interference\ time\ proportion\ excluding\ the\ transmission\ of\ the$$

$$BSS\ during\ the\ R-TWT\ service\ period =$$

$$\left[ \frac{\sum_{i=1}^{S} T_{SP-Channelbusy}^{i} - T_{busy}^{1} - T_{busy}^{3}}{\sum_{i=1}^{S} T_{SP}^{i}} \times 255 \right]$$

wherein $T_{SP-Channelbusy}^{i}$ represents channel busy time during an i-th service period in R-TWT corresponding to the j-th R-TWT schedule, $\sum_{i=1}^{S} T_{SP-Channelbusy}^{i}$ represents channel busy time during the R-TWT service period corresponding to the j-th R-TWT schedule, $T_{busy}^{1}$ represents medium busy time caused by the transmission between the AP and the R-TWT member STA during the R-TWT service period corresponding to the j-th R-TWT schedule, $T_{busy}^{3}$ represents medium busy time caused by the transmission between the AP and the non-R-TWT member STA during the R-TWT service period corresponding to the j-th R-TWT schedule, $T_{SP}^{i}$ represents duration of the i-th service period in the R-TWT corresponding to the j-th R-TWT schedule, $\sum_{i=1}^{S} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

95. The method according to any one of claims 76 to 88, wherein

transmission efficiency of a delay-sensitive service traffic during an R-TWT service period corresponding to a j-th R-TWT schedule among the m R-TWT schedules is determined based on at least one of: medium busy time caused by a transmission of the delay-sensitive service traffic between the AP and an R-TWT member STA during the R-TWT service period corresponding to the j-th R-TWT schedule, or pre-scheduled transmission time of the delay-sensitive service traffic during the R-TWT service period corresponding to the j-th R-TWT schedule; wherein j is a positive integer, and j≤m.

96. The method according to claim 95, wherein

the transmission efficiency of the delay-sensitive service traffic during the R-TWT service period corresponding to the j-th R-TWT schedule among the m R-TWT schedules is determined based on a formula of:

$$the\ transmission\ efficiency\ of\ the\ delay-sensitive\ service\ traffic\ during\ the\ R$$
$$-TWT\ service\ period$$

$$= \left[ \frac{medium\ busy\ time\ caused\ by\ the\ transmission\ of\ the\ delay-sensitive\ service\ traffic\ between\ the\ AP\ and\ the\ R-TWT\ member\ STA}{the\ pre-scheduled\ transmission\ time\ of\ the\ delay-sensitive\ service\ traffic\ during\ the\ R-TWT\ service\ period} \right.$$

$$\left. \times 255 \right] = \left[ \frac{T_{busy}^{2}}{\left[ \sum_{i=1}^{S} T_{SP-Scheduled}^{i} \right]} \times 255 \right]$$

wherein $T_{busy}^{2}$ represents medium busy time caused by the transmission of the delay-sensitive service traffic between the AP and the R-TWT member STA during the R-TWT service period corresponding to the j-th R-TWT schedule, $T_{SP-Scheduled}^{i}$ represents pre-scheduled transmission time of the delay-sensitive service traffic during an i-th service period in R-TWT corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**97.** The method according to any one of claims 76 to 88, wherein

an R-TWT service period utilization ratio based on a transmission of an R-TWT member STA during an R-TWT service period corresponding to a j-th R-TWT schedule among the m R-TWT schedules is determined based on at least one of: medium busy time caused by a transmission between the AP and an R-TWT member STA during the R-TWT service period corresponding to the j-th R-TWT schedule, or a given total R-TWT service period duration during the R-TWT service period corresponding to the j-th R-TWT schedule;
wherein j is a positive integer, and j≤m.

**98.** The method according to claim 97, wherein

the R-TWT service period utilization ratio based on the transmission of the R-TWT member STA during the R-TWT service period corresponding to the j-th R-TWT schedule among the m R-TWT schedules is determined based on a formula of:

$$the\ R-TWT\ service\ period\ utilization\ ratio\ based\ on\ the\ transmission\ of\ the\ R$$
$$-TWT\ member\ STA\ =$$
$$\left[ \frac{T_{busy}^1}{\sum_{i=1}^{s} T_{SP}^i} \times 255 \right]$$

wherein $T_{busy}^1$ represents medium busy time caused by the transmission between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**99.** The method according to any one of claims 76 to 88, wherein

an R-TWT service period utilization ratio based on a transmission of a delay-sensitive service traffic during an R-TWT service period corresponding to a j-th R-TWT schedule among the m R-TWT schedules is determined based on at least one of: medium busy time caused by the transmission of the delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule;
wherein j is a positive integer, and j≤m.

**100.**
The method according to claim 99, wherein

the R-TWT service period utilization ratio based on the transmission of the delay-sensitive service traffic during the R-TWT service period corresponding to the j-th R-TWT schedule among the m R-TWT schedules is determined based on a formula of:

$$the\ R-TWT\ service\ period\ utilization\ ratio\ based\ on\ the\ transmission\ of$$

$$the\ delay-sensitive\ service\ traffic =$$

$$\left[\frac{T^2_{busy}}{\sum_{i=1}^{s} T^i_{SP}} \times 255\right]$$

wherein $T^2_{busy}$ represents medium busy time caused by the transmission of the delay-sensitive service traffic between the AP and the R-TWT member STA during the R-TWT service period corresponding to the j-th R-TWT schedule, $T^i_{SP}$ represents duration of an i-th service period in R-TWT corresponding to the j-th R-TWT schedule,

$\sum_{i=1}^{s} T^i_{SP}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**101.**
The method according to any one of claims 76 to 88, wherein

an R-TWT service period underutilization ratio based on a transmission of a non-R-TWT member STA during an R-TWT service period corresponding to a j-th R-TWT schedule among the m R-TWT schedules is determined based on at least one of: medium busy time caused by the transmission between the AP and the non-R-TWT member STA during the R-TWT service period corresponding to the j-th R-TWT schedule, or a given total R-TWT service period duration during the R-TWT service period corresponding to the j-th R-TWT schedule; wherein j is a positive integer, and j≤m.

**102.**
The method according to claim 101, wherein

the R-TWT service period underutilization ratio based on the transmission of the non-R-TWT member STA during the R-TWT service period corresponding to the j-th R-TWT schedule among the m R-TWT schedules is determined based on a formula of:

$$the\ R-TWT\ service\ period\ underutilization\ ratio\ based\ on\ the\ transmission$$

$$of\ the\ non-R-TWT\ member\ STA =$$

$$\left[\frac{T^3_{busy}}{\sum_{i=1}^{s} T^i_{SP}} \times 255\right]$$

wherein $T^3_{busy}$ represents medium busy time caused by the transmission between the AP and the non-R-TWT member STA during the R-TWT service period corresponding to the j-th R-TWT schedule, $T^i_{SP}$ represents duration of the i-th service period in R-TWT corresponding to the j-th R-TWT schedule, $\sum_{i=1}^{s} T^i_{SP}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**103.**
The method according to any one of claims 76 to 88, wherein

an R-TWT service period underutilization ratio based on a transmission of a non-delay-sensitive service traffic during an R-TWT service period corresponding to a j-th R-TWT schedule among the m R-TWT schedules is determined based on at least one of: medium busy time caused by a transmission between the AP and a non-R-TWT member STA during the R-TWT service period corresponding to the j-th R-TWT schedule, medium busy time caused by the transmission of the non-delay-sensitive service traffic between the AP and an R-TWT member STA during the R-TWT service period corresponding to the j-th R-TWT schedule, or a given total R-TWT service period duration during the R-TWT service period corresponding to the j-th R-TWT schedule;

wherein j is a positive integer and j≤m.

**104.**
The method according to claim 103, wherein

the R-TWT service period underutilization ratio based on the transmission of the non-delay-sensitive service traffic during the R-TWT service period corresponding to the j-th R-TWT schedule among the m R-TWT schedules is determined based on a formula of:

$$the\ R-TWT\ service\ period\ underutilization\ ratio\ based\ on\ the\ transmission\ of$$

$$the\ non-delay-sensitive\ service\ traffic =$$

$$\left[\frac{T_{busy}^4}{\sum_{i=1}^{s} T_{SP}^i} \times 255\right]$$

wherein $T_{busy}^4$ represents medium busy time caused by the transmission between the AP and the non-R-TWT member STA and the medium busy time caused by the transmission of the non-delay-sensitive service traffic between the AP and the R-TWT member STA during the R-TWT service period corresponding to the j-th R-TWT schedule, $T_{SP}^i$ represents duration of an i-th service period in R-TWT corresponding to the j-th R-TWT schedule, $\sum_{i=1}^{s} T_{SP}^i$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**105.**
The method according to any one of claims 76 to 88, wherein

a channel utilization proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;

wherein j is a positive integer and j≤m.

**106.**
The method according to claim 105, wherein:

the channel utilization proportion during the R-TWT service period corresponding to the j-th R-TWT schedule among the m R-TWT schedules is determined based on a formula of:

$$the\ channel\ utilization\ proportion\ during\ the\ R-TWT\ service\ period =$$

$$\left[\frac{\sum_{i=1}^{s} T_{SP-Channelbusy}^i}{\sum_{i=1}^{s} T_{SP}^i} \times 255\right]$$

wherein $T_{SP-Channelbusy}^i$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**107.**
The method according to any one of claims 76 to 88, wherein

a channel utilization proportion based on a transmission of an R-TWT member STA during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission between the AP and the R-TWT member STA during the R-TWT service period corresponding to the j-th R-TWT schedule;
wherein j is a positive integer and j≤m.

**108.**
The method of claim 107, wherein

the channel utilization proportion based on the transmission of the R-TWT member STA during the R-TWT service period corresponding to the j-th R-TWT schedule among the m R-TWT schedules is determined based on a formula of:

$$the\ channel\ utilization\ proportion\ based\ on\ the\ transmission\ of\ the\ R$$
$$-TWT\ member\ STA\ during\ the\ R-TWT\ service\ period$$
$$= \left[ \frac{\substack{medium\ busy\ time\ caused\ by\ the\ transmission\ between\ the\ AP \\ and\ the\ R-TWT\ member\ STA}}{channel\ busy\ time\ during\ the\ R-TWT\ service\ period} \right.$$
$$\left. \times 255 \right] = \left[ \frac{T_{busy}^{1}}{\sum_{i=1}^{s} T_{SP-Channelbusy}^{i}} \times 255 \right]$$

wherein $T_{busy}^{1}$ represents medium busy time caused by the transmission between the AP and the R-TWT member STA during the R-TWT service period corresponding to the j-th R-TWT schedule, $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**109.**
The method according to any one of claims 76 to 88, wherein

a channel utilization proportion based on a transmission of a delay-sensitive service traffic during an R-TWT service period corresponding to a j-th R-TWT schedule among the m R-TWT schedules is determined based on at least one of: channel busy time during the R-TWT service period corresponding to the j-th R-TWT schedule, or medium busy time caused by the transmission of the delay-sensitive service traffic between the AP and an R-TWT member STA during the R-TWT service period corresponding to the j-th R-TWT schedule;
wherein j is a positive integer, and j≤m.

**110.**
The method according to claim 109, wherein

the channel utilization proportion based on the transmission of the delay-sensitive service traffic during the R-TWT service period corresponding to the j-th R-TWT schedule among the m R-TWT schedules is determined based on a formula of:

$$
\begin{aligned}
&the\ channel\ utilization\ proportion\ based\ on\ the\ transmission\ of\ the\ delay\\
&-\ sensitive\ service\ traffic\ during\ the\ R-TWT\ service\ period\\
&=\left[\frac{\begin{matrix}medium\ busy\ time\ caused\ by\ the\ transmission\ of\ the\ delay-sensitive\ service\ traffic\\ between\ the\ AP\ and\ the\ R-TWT\ member\ STA\end{matrix}}{channel\ busy\ time\ during\ the\ R-TWT\ service\ period}\right.\\
&\left.\times 255\right]=\left[\frac{T_{busy}^2}{\sum_{i=1}^{s}T_{SP-Channelbusy}^i}\times 255\right]
\end{aligned}
$$

wherein $T_{busy}^2$ represents medium busy time caused by the transmission of the delay-sensitive service traffic between the AP and the R-TWT member STA during the R-TWT service period corresponding to the j-th R-TWT schedule, $T_{SP-Channelbusy}^i$ represents channel busy time during an i-th service period in R-TWT corresponding to the j-th R-TWT schedule, $\sum_{i=1}^{s}T_{SP-Channelbusy}^i$ represents channel busy time during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**111.** The method according to any one of claims 76 to 88, wherein

a channel clear proportion during an R-TWT service period corresponding to a j-th R-TWT schedule among the m R-TWT schedules is determined based on at least one of: channel busy time during the R-TWT service period corresponding to the j-th R-TWT schedule, or a given total R-TWT service period duration during the R-TWT service period corresponding to the j-th R-TWT schedule;
wherein j is a positive integer, and j≤m.

**112.**
The method according to claim 111, wherein

the channel clear proportion during the R-TWT service period corresponding to the j-th R-TWT schedule among the m R-TWT schedules is determined based on a formula of:

*the channel clear time proportion during the R − TWT service period*

$$= \left[ \; \left(1 - \frac{channel\ busy\ time\ during\ the\ R - TWT\ service\ period}{given\ total\ R - TWT\ service\ period\ duration} \right) \; \times 255 \right]$$

$$= \left[ \; \left(1 - \frac{\sum_{i=1}^{s} T_{SP-Channelbusy}^{i}}{\sum_{i=1}^{s} T_{SP}^{i}} \right) \; \times 255 \right]$$

wherein $T_{SP-Channelbusy}^{i}$ represents channel busy time during an i-th service period in R-TWT corresponding to the j-th R-TWT schedule, $\sum_{i=1}^{s} T_{SP-Channelbusy}^{i}$ represents channel busy time during the R-TWT service period corresponding to the j-th R-TWT schedule, $T_{SP}^{i}$ represents duration of the i-th service period in the R-TWT corresponding to the j-th R-TWT schedule, $\sum_{i=1}^{s} T_{SP}^{i}$ represents cumulative duration of duration during the R-TWT service period corresponding to the j-th R-TWT schedule, s represents a number of service periods in the R-TWT corresponding to the j-th R-TWT schedule, s is a positive integer, a time proportion can be represented by a linear ratio of 255, and 255 represents 100%.

**113.**
The method according to any one of claims 58 to 112, wherein

the service period load information of the delay-sensitive service is used to select an AP and/or a link for a transmission of a delay-sensitive service traffic; and/or,

the R-TWT service period load information is used to select broadcast target wake time (TWT) corresponding to a target R-TWT schedule established and intended to be joined by a target AP, and/or, the R-TWT service period load information is used to select broadcast TWT corresponding to a target R-TWT schedule established and intended to be joined by a target link.

**114.**
The method according to any one of claims 58 to 113, wherein
the R-TWT service period load information is used by a non-access multi-link device (Non-AP MLD) to select a link of a target traffic identifier (TID) mapped in an uplink direction and/or a downlink direction in a traffic identifier-to-link mapping process.

**115.**
A station (STA), comprising:

a communication unit, configured to receive service period load information of a delay-sensitive service;

wherein the service period load information of the delay-sensitive service comprises at least channel utilization information during restricted-target wake time (R-TWT) service periods corresponding to all R-TWT schedules established in a first basic service set (BSS), or the service period load information of the delay-sensitive service comprises at least channel utilization information during R-TWT service periods corresponding to m R-TWT schedules established in a first BSS;

wherein a number of all R-TWT schedules established in the first BSS is n, m and n are both positive integers, and m<n.

**116.**
An access point (AP), comprising:

a communication unit, configured to transmit service period load information of a delay-sensitive service;

wherein the service period load information of the delay-sensitive service comprises at least channel utilization information during restricted-target wake time (R-TWT) service periods corresponding to all R-TWT schedules established in a first basic service set (BSS), or the service period load information of the delay-sensitive service comprises at least channel utilization information during R-TWT service periods corresponding to m R-TWT schedules established in a first BSS;

wherein a number of all R-TWT schedules established in the first BSS is n, m and n are both positive integers, and m<n.

**117.**

A station (STA), comprising: a processor and a memory, wherein the memory is configured to store a computer program, and the processor is configured to call and run the computer program stored in the memory, to enable the STA to perform the method according to any one of claims 1 to 57.

**118.**

An access point (AP), comprising: a processor and a memory, wherein the memory is configured to store a computer program, and the processor is configured to call and run the computer program stored in the memor, to enable the AP to perform the method according to any one of claims 58 to 114.

**119.**

A chip, comprising: a processor, configured to call and run a computer program from a memory, to enable a device equipped with the chip to perform the method according to any one of claims 1 to 57.

**120.**

A chip, comprising: a processor, configured to call and run a computer program from a memory, to enable a device equipped with the chip to perform the method according to any one of claims 58 to 114.

**121.**

A computer-readable storage medium, configured to store a computer program, wherein when the computer program is executed, the method according to any one of claims 1 to 57 is implemented.

**122.**

A computer-readable storage medium, configured to store a computer program, wherein when the computer program is executed, the method according to any one of claims 58 to 114 is implemented.

**123.**

A computer program product, comprising computer program instructions, wherein when the computer program instructions are executed, the method according to any one of claims 1 to 57 is implemented.

**124.**

A computer program product, comprising computer program instructions, wherein when the computer program instructions are executed, the method according to any one of claims 58 to 114 is implemented.

**125.**

A computer program, wherein when the computer program is executed, the method according to any one of claims 1 to 57 is implemented.

**126.**

A computer program, wherein when the computer program is executed, the method according to any one of claims 58 to 114 is implemented.

FIG. 1

| Element ID | Length | Station count | Channel utilization | Available admission capacity |
|------------|--------|---------------|---------------------|------------------------------|
| 1 | 1 | 2 | 1 | 2 |

Octets:

**BSS load element format**

FIG. 2

| Element ID | Length | Element ID extension | HE STA count | Utilization | Frequency underutilization | Spatial stream underutilization |
|------------|--------|----------------------|--------------|-------------|----------------------------|--------------------------------|
| 1 | 1 | 1 | 2 | 1 | 1 | 1 |

Octets:

**HE BSS load element format**

FIG. 3

200

| STA | | AP |
|---|---|---|

S210, an AP transmits service period load information of a delay-sensitive service; where the service period load information of the delay-sensitive service includes at least channel utilization information during R-TWT service periods corresponding to all R-TWT schedules established in a first BSS, or the service period load information of the delay-sensitive service includes at least channel utilization information during R-TWT service periods corresponding to m R-TWT schedules established in a first BSS; where a number of all R-TWT schedules established in the first BSS is n, m and n are both positive integers, and m < n

S220, an STA receives the service period load information of the delay-sensitive service

FIG. 4

| | | | | | | | |
|---|---|---|---|---|---|---|---|
| Element ID | Length | Element ID extension | Additional parameter present bitmap | Number of EHT STAs supporting R-TWT | Number of pre-EHT STAs supporting quiet intervals | Number of EHT STAs that do not support R-TWT | Number of pre-EHT STAs that do not support quiet intervals |
| Octets: 1 | 1 | 1 | 1 | 2 | 2 | 2 | 2 |

| | | | | |
|---|---|---|---|---|
| Cumulative proportion of duration of all current R-TWT service periods | Transmission proportion of an AP and a member STA during all current R-TWT service periods | Transmission efficiency of delay-sensitive service traffics during all current R-TWT service periods | Proportion of pre-scheduled transmission time of delay-sensitive service traffics during all R-TWT service periods | Interference time proportion excluding a BSS internal transmission during all R-TWT service periods |
| Octets: 0 or 1 | 0 or 1 | 0 or 1 | 0 or 1 | 0 or 1 |

| | | |
|---|---|---|
| Available resource capabilities of all established R-TWT schedules | Available resource capability of an R-TWT schedule to be established | available resource capability of an R-TWT schedule |
| Octets: 0 or 2 | 0 or 2 | 0 or 2 |

**BSS R-TWT service period load element**

FIG. 5

| Broadcast TWT identifier | Number of R-TWT member STAs | Cumulative proportion of duration of current R-TWT service periods |
|---|---|---|

Octets:
| 1 | 2 | 1 |

| Proportion of pre-scheduled transmission time of a delay-sensitive service traffic during an R-TWT service period | Interference time proportion excluding a BSS internal transmission during an R-TWT service period | Transmission efficiency of a delay-sensitive service traffic during an R-TWT service period | Available resource capacity of a current R-TWT schedule |
|---|---|---|---|

Octets:
| 1 | 1 | 1 | 2 |

| R-TWT service period utilization ratio based on a transmission of an R-TWT member STA | R-TWT service period utilization ratio based on a transmission of a delay-sensitive service traffic | R-TWT service period underutilization ratio based on a transmission of a non-R-TWT member STA | R-TWT service period underutilization ratio based on a transmission of a non-delay-sensitive service traffic |
|---|---|---|---|

Octets:
| 0 or 1 | 0 or 1 | 0 or 1 | 0 or 1 |

| Channel utilization proportion during an R-TWT service period | Channel utilization proportion based on a transmission of an R-TWT member STA during an R-TWT service period | Channel utilization proportion based on a transmission of a delay-sensitive service traffic during an R-TWT service period | Channel clear proportion during an R-TWT service period |
|---|---|---|---|

Octets:
| 0 or 1 | 0 or 1 | 0 or 1 | 0 or 1 |

**R-TWT service period load field format**

FIG. 6

| R-TWT service period load additional parameter present bitmap | Number of R-TWT member STAs | Cumulative proportion of duration of a current R-TWT service period |
|---|---|---|

Octets: 1         2         1

| Proportion of pre-scheduled transmission time of a delay-sensitive service traffic during the R-TWT service period | Interference time proportion excluding an internal transmission of the BSS during the R-TWT service period | Transmission efficiency of a delay-sensitive service traffic during the R-TWT service period | Available resource capability of a current R-TWT schedule |
|---|---|---|---|

Octets: 1      1      1      2

| R-TWT service period utilization ratio based on a transmission of an R-TWT member STA | R-TWT service period utilization ratio based on a transmission of a delay-sensitive service traffic | R-TWT service period underutilization ratio based on a transmission of a non-R-TWT member STA | R-TWT service period underutilization ratio based on a transmission of a non-delay-sensitive service traffic |
|---|---|---|---|

Octets 0 or 1      0 or 1      0 or 1      0 or 1

| Channel utilization proportion during the R-TWT service period | Channel utilization proportion based on a transmission of an R-TWT member STA during the R-TWT service period | Channel utilization proportion based on a transmission of a delay-sensitive service traffic during the R-TWT service period | Channel clear proportion during the R-TWT service period |
|---|---|---|---|

Octets 0 or 1      0 or 1      0 or 1      0 or 1

**R-TWT service period load field format**

FIG. 7

| Broadcast TWT identifier /R-TWT service period load additional parameter present bitmap | Number of R-TWT member STAs | Cumulative proportion of duration of a current R-TWT service period |
|---|---|---|

Octets:             1                    2                    1

| Proportion of pre-scheduled transmission time of a delay-sensitive service traffic during the R-TWT service period | Interference time proportion excluding an internal transmission of the BSS during the R-TWT service period | Transmission efficiency of a delay-sensitive service traffic during the R-TWT service period | Available resource capability of a current R-TWT schedule |
|---|---|---|---|

Octets:          1              1             1             2

| R-TWT service period utilization ratio based on a transmission of an R-TWT member STA | R-TWT service period utilization ratio based on a transmission of a delay-sensitive service traffic | R-TWT service period underutilization ratio based on a transmission of a non-R-TWT member STA | R-TWT service period underutilization ratio based on a transmission of a non-delay-sensitive service traffic |
|---|---|---|---|

Octets:      0 or 1          0 or 1          0 or 1          0 or 1

| Channel utilization proportion during the R-TWT service period | Channel utilization proportion based on a transmission of an R-TWT member STA during the R-TWT service period | Channel utilization proportion based on a transmission of a delay-sensitive service traffic during the R-TWT service period | Channel clear proportion during the R-TWT service period |
|---|---|---|---|

Octets:      0 or 1          0 or 1          0 or 1          0 or 1

**R-TWT service period load field format**

FIG. 8

| Element ID | Length | Element ID extension | R-TWT service period load control | R-TWT service period load list |
|---|---|---|---|---|

Octets:        1             1             1             1       Variable

**R-TWT service period load element format**

FIG. 9

| Number of R-TWT service period loads | R-TWT service period load additional parameter present bitmap |
|---|---|

Octets:            1                   1

**R-TWT service period load control field format**

FIG. 10

| R-TWT service period load 1 | ... | R-TWT service period load m |
|---|---|---|

Octets: Variable  Variable

**R-TWT service period load list field format**

FIG. 11

| Request type | TWT | Nominal minimum TWT wake duration | TWT wake interval mantissa | Broadcast TWT information | R-TWT traffic information | R-TWT service period load |
|---|---|---|---|---|---|---|
| 2 | 2 | 1 | 2 | 2 | 0或3 | Variable |

Octets:

**R-TWT element format**

FIG. 12

| B0 | B1 B2 | B3 B7 | B8 B15 |
|---|---|---|---|
| R-TWT traffic information present/ R-TWT service period load present | R-TWT schedule information | Broadcast TWT ID | Broadcast TWT persistence |
| 1 | 2 | 5 | 8 |

Bits:

**Broadcast TWT information field format**

FIG. 13

STA 300

Communication unit 310

Processing unit 320

FIG. 14

AP 400

Communication unit 410

FIG. 15

Communication device 500

Memory
520

Processor
510

Transceiver
530

FIG. 16

Apparatus 600

Input
interface
630

Processor
610

Memory
620

Output
interface
640

FIG. 17

Communication system 700

STA

710

AP

720

FIG. 18

## INTERNATIONAL SEARCH REPORT

| International application No. |
|---|
| **PCT/CN2023/097605** |

**A.     CLASSIFICATION OF SUBJECT MATTER**

H04W 72/52(2023.01)i

According to International Patent Classification (IPC) or to both national classification and IPC

**B.     FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE: 站点, 接入点, 受限目标唤醒时间, 受限目标苏醒时间, 受限TWT, 调度, 基本服务集, 服务周期, 信道, 占用, 占比, STA, AP, R-TWT, RTWT, schedule, BSS, SP, channel

**C.     DOCUMENTS CONSIDERED TO BE RELEVANT**

| Category* | Citation of document, with indication, where appropriate, of the relevant passages | Relevant to claim No. |
|---|---|---|
| X | WO 2022216563 A1 (META PLATFORMS TECHNOLOGIES, LLC.) 13 October 2022 (2022-10-13) description, pages 16-22, 28 and 29 | 1-126 |
| A | US 2023021113 A1 (SAMSUNG ELECTRONICS CO., LTD.) 19 January 2023 (2023-01-19) entire document | 1-126 |
| A | US 2023164709 A1 (QUALCOMM INC.) 25 May 2023 (2023-05-25) entire document | 1-126 |
| A | US 2023059237 A1 (SAMSUNG ELECTRONICS CO., LTD.) 23 February 2023 (2023-02-23) entire document | 1-126 |

☐ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **17 December 2023** | **20 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/097605**

| Patent document cited in search report | | | Publication date (day/month/year) | Patent family member(s) | | | Publication date (day/month/year) |
|---|---|---|---|---|---|---|---|
| WO | 2022216563 | A1 | 13 October 2022 | TW | 202241180 | A | 16 October 2022 |
| | | | | US | 2022330149 | A1 | 13 October 2022 |
| US | 2023021113 | A1 | 19 January 2023 | EP | 4260613 | A1 | 18 October 2023 |
| | | | | WO | 2023282694 | A1 | 12 January 2023 |
| US | 2023164709 | A1 | 25 May 2023 | WO | 2023091234 | A1 | 25 May 2023 |
| US | 2023059237 | A1 | 23 February 2023 | US | 2023115377 | A1 | 13 April 2023 |
| | | | | WO | 2023022486 | A1 | 23 February 2023 |

Form PCT/ISA/210 (patent family annex) (July 2022)